(19) Europäisches Patentamt
European Patent Office
Office européen des brevets

(11) EP 4 624 528 A1

(12) **EUROPEAN PATENT APPLICATION**
published in accordance with Art. 153(4) EPC

(43) Date of publication:
**01.10.2025 Bulletin 2025/40**

(21) Application number: **23895081.0**

(22) Date of filing: **24.11.2023**

(51) International Patent Classification (IPC):
***C08L 67/02*** *(2006.01)* ***C08L 1/02*** *(2006.01)*
***C08G 63/16*** *(2006.01)* ***C08K 7/02*** *(2006.01)*
***C08J 5/18*** *(2006.01)* ***B29B 7/88*** *(2006.01)*
***C08G 63/183*** *(2006.01)* ***C08G 63/78*** *(2006.01)*

(52) Cooperative Patent Classification (CPC):
**B29B 7/88; C08G 63/16; C08G 63/183; C08G 63/78; C08J 5/18; C08K 7/02; C08L 1/02; C08L 67/02**

(86) International application number:
**PCT/KR2023/019104**

(87) International publication number:
**WO 2024/112154 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 KR 20220159958**
**03.01.2023 KR 20230000507**

(71) Applicant: **SK leaveo Co., Ltd.**
**Gyeonggi-do 16338 (KR)**

(72) Inventors:
- **KIM, Kyung Youn**
  **Suwon-si, Gyeonggi-do 16338 (KR)**
- **KIM, Seong Dong**
  **Suwon-si, Gyeonggi-do 16338 (KR)**
- **KIM, Hoon**
  **Suwon-si, Gyeonggi-do 16338 (KR)**

(74) Representative: **Dehns**
**10 Old Bailey**
**London EC4M 7NG (GB)**

(54) **BIODEGRADABLE POLYESTER RESIN COMPOSITION PREPARATION METHOD AND BIODEGRADABLE POLYESTER FILM PRODUCTION METHOD USING SAME**

(57) A biodegradable polyester resin composition preparation method, according to one embodiment, comprises a step for adjusting moisture content in a polymer composition obtained by reacting diol, aromatic dicarboxylic acid and aliphatic dicarboxylic acid, and thus enables providing a biodegradable polyester resin composition, a biodegradable polyester sheet, a biodegradable polyester film, or a biodegradable polyester molded article, having excellent degree of hydrolysis and biodegradability, and having mechanical properties such as strength, shock absorption energy, and tear strength after notching improved simultaneously.

[Fig. 1]

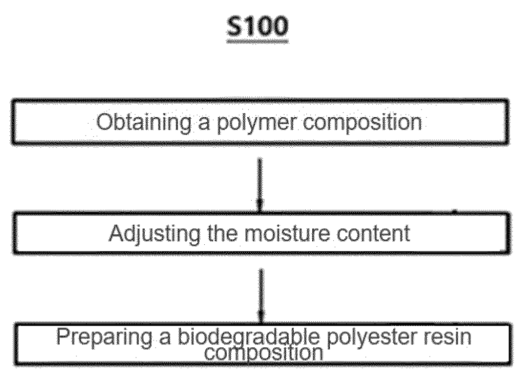


EP 4 624 528 A1

## Description

## Technical Field

Embodiments relate to a process for preparing a biodegradable polyester resin composition and to a process for preparing a biodegradable polyester film using the same.

## Background Art

In recent years, as concerns about environmental issues have increased, there is a need for a solution to the problem of dealing with various household products, in particular, disposable products. Specifically, although polymer materials, which are inexpensive and have excellent processability, are widely used to manufacture various products such as films, fibers, packaging materials, bottles, and containers, when the lifespan of these products is over, harmful substances are discharged when they are incinerated, and it takes hundreds of years depending on their types to be completely decomposed naturally.

In order to overcome the limitations of these polymers, studies on biodegradable polymers that can be decomposed in a much shorter period of time are being actively conducted. Poly(lactic acid) (PLA), polybutyleneadipate terephthalate (PBAT), and polybutylene succinate (PBS) are used as biodegradable polymers.

In the preparation of such biodegradable polymers, various methods of polymerization by adjusting viscosity are being studied to increase productivity. However, when such a biodegradable polymer is prepared, there is a limit to satisfying the desired hydrolysability and biodegradability because extrusion is carried out in the presence of water as a by-product and residual unreacted substances. When a biodegradable film is prepared using the same, there is a problem in that surface defects may occur, or fumes may be generated, which deteriorates processability and moldability.

In addition, if the viscosity of a biodegradable polymer is low, there is a limit to applying various molding methods such as blow molding, injection molding, and extrusion molding that require a high viscosity during molding. In addition, when a composition for films is prepared using a biodegradable polymer, additives are used to impart various functionalities such as processability, moldability, slipperiness, flexibility, molecular weight adjustment, suppression of heat generation, and color correction. Although the desired functionalities can be imparted by these additives, there is a problem in that various side effects may occur depending on the types and contents of the additives, which relatively reduces the mechanical properties of a film and molded body, such as tensile strength, impact strength, and post-notch tear strength, and the like. Thus, there is a limit to applying it to various molding processes or utilizing it in various products.

[Prior Art Document]

[Patent Document]

(Patent Document 1) Korean Laid-open Patent Publication No. 2012-0103158

Detailed Description of the Invention

Technical Problem

The present invention is devised to solve the problems of the prior art discussed above.

A technical problem to be solved by the present invention is to provide a process for preparing a biodegradable polyester resin composition having an appropriate level of hydrolysability and biodegradability and further having a high viscosity by controlling the moisture content and the content of oligomers having a specific range of molecular weights to fall within specific ranges, and a biodegradable polyester resin composition produced thereby.

In addition, another technical problem to be solved by the present invention is to provide a process for preparing a biodegradable polyester resin composition with mechanical properties such as strength, impact absorption energy, and post-notch tear strength improved overall and a high viscosity that allows application to various moldings while maintaining an appropriate level of hydrolysability and biodegradability by adding pretreated nanocellulose to a polymer composition controlled to have a specific range of moisture content, and a biodegradable polyester resin composition produced thereby.

In addition, it is aimed to provide a process for preparing a polyester film in which the above process for preparing a polyester resin composition is adopted, so that it can be applied to various molding processes such as blow molding, injection molding, and extrusion molding that require a high viscosity during molding, processability and productivity can be enhanced, and mechanical properties can be enhanced at the same time.

## Solution to the Problem

An embodiment to accomplish the above object provides a process for preparing a biodegradable polyester resin composition, which comprises reacting a diol, an aromatic dicarboxylic acid, and an aliphatic dicarboxylic acid to obtain a polymer composition; and adjusting the content of moisture in the polymer composition, wherein the content of moisture in the polymer composition whose moisture content has been adjusted is 100 ppm to 500 ppm based on the total weight of the polymer composition whose moisture content has been adjusted, and the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

Another embodiment provides a biodegradable polyester resin composition, which is prepared by the above process for preparing a biodegradable polyester resin composition and has an intrinsic viscosity (IV) of 1.10 dl/g or more, wherein the content of carboxyl terminal groups in the biodegradable polyester resin composition is 50 eq/ton or less.

Another embodiment provides a process for preparing a biodegradable polyester film, which comprises preparing a biodegradable polyester resin composition; and meltextruding the biodegradable polyester resin composition, wherein the step of preparing the biodegradable polyester resin composition comprises reacting a diol, an aromatic dicarboxylic acid, and an aliphatic dicarboxylic acid to obtain a polymer composition; and adjusting the content of moisture in the polymer composition to obtain a biodegradable polyester resin composition, wherein the content of moisture in the polymer composition whose moisture content has been adjusted is 100 ppm to 500 ppm based on the total weight of the polymer composition whose moisture content has been adjusted, and the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

## Advantageous Effects of the Invention

In the process for preparing a biodegradable polyester resin composition according to an embodiment, the content of moisture in a polymer composition obtained by reacting a diol, an aromatic dicarboxylic acid, and an aliphatic dicarboxylic acid is adjusted; and the content of an oligomer having a molecular weight of a specific range in the biodegradable polyester resin composition is adjusted to a specific range. As a result, it is possible to provide a biodegradable polyester resin composition, a biodegradable polyester sheet, a biodegradable polyester film, or a biodegradable polyester molded article, each having an excellent level of hydrolysability and biodegradability.

In addition, as a step of adding pretreated nanocellulose to the polymer composition whose moisture content has been adjusted is adopted, it is possible to provide a biodegradable polyester resin composition, a biodegradable polyester sheet, a biodegradable polyester film, or a biodegradable polyester molded article, each having an excellent level of hydrolysability and biodegradability and enhanced mechanical properties such as strength, impact absorption energy, and post-notch tear strength at the same time.

In particular, according to the process for preparing a biodegradable polyester resin composition, the viscosity of a polyester resin composition can be increased to an ultra-high viscosity while the content of terminal groups therein is controlled to an appropriate range, so that it can be applied to various molding processes such as blow molding, injection molding, and extrusion molding that require a high or ultra-high viscosity, and processability, productivity, and mechanical properties can be enhanced at the same time.

## Brief Description of the Drawing

Fig. 1 schematically shows a process of preparing a biodegradable polyester resin composition according to an embodiment.

Fig. 2 schematically shows a process for preparing a biodegradable polyester resin composition according to another embodiment.

Fig. 3 schematically illustrates a method for measuring the zeta potential of pretreated nanocellulose according to an embodiment.

<Explanation of Reference Numerals>

100: solvent
110: slippery plane

120: ion diffusion layer
130: fixed layer
150: colloidal particle (nanocellulose)
NE: negative electrode
PE: positive electrode

## Best Mode for Carrying out the Invention

Hereinafter, the present invention will be described in detail with reference to the embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

## [Process for preparing a biodegradable polyester resin composition]

In an embodiment, there is provided a process for preparing a biodegradable polyester resin composition, which comprises reacting a diol, an aromatic dicarboxylic acid, and an aliphatic dicarboxylic acid to obtain a polymer composition; and adjusting the content of moisture in the polymer composition, wherein the content of moisture in the polymer composition whose moisture content has been adjusted is 100 ppm to 500 ppm based on the total weight of the polymer composition whose moisture content has been adjusted, and the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

In the process for preparing a biodegradable polyester resin composition according to an embodiment, the content of moisture in a polymer composition obtained by reacting a diol, an aromatic dicarboxylic acid, and an aliphatic dicarboxylic acid is adjusted, whereby the content of terminal groups in the biodegradable polyester resin composition is controlled to an appropriate range, which increases the viscosity and produces a reaction product with a high molecular weight. Thus, it can be applied to various molding processes such as blow molding, injection molding, and extrusion molding that require a high or ultra-high viscosity, and processability and productivity can be enhanced at the same time.

In addition, as a step of adding pretreated nanocellulose to the polymer composition whose moisture content has been adjusted is adopted, it is possible to significantly enhance the mechanical properties, such as strength, impact absorption energy, and post-notch tear strength, of a film or molded article produced from the biodegradable polyester resin composition. Even when functionalities are imparted by using various additives, the desired mechanical properties can be maintained at an appropriate level without deterioration.

In particular, as pretreated nanocellulose is added to the polymer composition whose moisture content has been adjusted, the moisture (water) contained in the polymer composition binds to the pretreated nanocellulose through hydrogen bonding, thereby enhancing the strength of the final polyester resin composition. When the polyester resin composition and a biodegradable polyester film comprising the same are hydrolyzed and/or biodegraded, the moisture bound to the pretreated nanocellulose in the polyester resin composition may ionize the pretreated nanocellulose, thereby increasing the hydrolysability and biodegradability.

In addition, in the process for preparing a biodegradable polyester resin composition, the content of an oligomer having a molecular weight of a specific range in the biodegradable polyester resin composition is adjusted to a specific range. As a result, it is possible to provide a biodegradable polyester resin composition, a biodegradable polyester sheet, a biodegradable polyester film, or a biodegradable polyester molded article, each having an excellent level of hydrolysability and biodegradability.

Accordingly, the biodegradable polyester resin composition prepared by the above process and a biodegradable polyester film comprising the same have an appropriate level of initial hydrolysis, an appropriate level of biodegradation, and mechanical strength, and, at the same time, they have a high level of hydrolysability and biodegradability not only in soil but also in water when discarded. Thus, they can maintain at least a certain level of mechanical and chemical properties during use and can be readily decomposed in a river or the sea. That is, the biodegradable polyester resin composition according to an embodiment has a technical significance in that since it has an excellent level of hydrolysability and biodegradability, it can effectively solve environmental problems, such as the problem of marine plastics, while also having excellent mechanical properties, thereby allowing for a wide range of applications.

Hereinafter, the process for preparing a biodegradable polyester resin composition according to an embodiment is described in detail with reference to Figs. 1 and 2.

**Step for obtaining a polymer composition**

The process for preparing a biodegradable polyester resin composition according to an embodiment may comprise reacting a diol and a dicarboxylic acid to obtain a polymer composition. Specifically, the dicarboxylic acid may comprise an aromatic dicarboxylic acid, an aliphatic dicarboxylic acid, or a combination thereof. The process for preparing a biodegradable polyester resin composition according to an embodiment may comprise reacting a diol, an aromatic dicarboxylic acid, and an aliphatic dicarboxylic acid to obtain a polymer composition.

The diol may be an aliphatic diol. The diol may be at least one selected from the group consisting of 1,2-ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol, 1,12-octadecanediol, diethylene glycol, neopentyl glycol, and derivatives thereof.

The diol may be at least one selected from the group consisting of 1,4-butanediol, 1,2-ethanediol, 1,3-propanediol, diethylene glycol, neopentyl glycol, and derivatives thereof.

The diol may be at least one selected from the group consisting of 1,4-butanediol, 1,2-ethanediol, 1,3-propanediol, and derivatives thereof.

The diol may comprise 1,4-butanediol or a derivative thereof.

Specifically, the diol may comprise 1,4-butanediol, 1,2-ethanediol, 1,3-propanediol, or a derivative thereof in an amount of 90% by mole or more, 93% by mole or more, 95% by mole or more, 98% by mole or more, 99% by mole or more, or 100% by mole, based on the total number of moles of the diol. As the diol comprises 1,4-butanediol, 1,2-ethanediol, 1,3-propanediol, or a derivative thereof in the above amount, it is possible to enhance the hydrolysability, biodegradability, and physical properties of the biodegradable polyester resin composition, and a biodegradable polyester sheet, a biodegradable polyester film, or a biodegradable polyester molded article, prepared from the same.

The diol may be added all at once or dividedly. For example, the diol may be added dividedly at the time of mixing with an aromatic dicarboxylic acid and mixing with an aliphatic dicarboxylic acid.

The aromatic dicarboxylic acid may be at least one selected from the group consisting of phthalic acid, terephthalic acid, dimethyl terephthalate, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyletherdicarboxylic acid, anthracenedicarboxylic acid, phenanthrenedicarboxylic acid, and derivatives thereof.

The aromatic dicarboxylic acid may be at least one selected from the group consisting of terephthalic acid, dimethyl terephthalate, 2,6-naphthalenedicarboxylic acid, isophthalic acid, and derivatives thereof.

The aromatic dicarboxylic acid may comprise terephthalic acid, dimethyl terephthalate, or a derivative thereof.

In addition, the aromatic dicarboxylic acid may be employed in an amount of 30% by mole to 70% by mole, 40% by mole to 60% by mole, 42% by mole to 58% by mole, 44% by mole to 58% by mole, 44% by mole to 57% by mole, 44% by mole to 55% by mole, 44% by mole to 53% by mole, 46% by mole to 53% by mole, 46% by mole to 52% by mole, or 46% by mole to 50% by mole, based on the total number of moles of the dicarboxylic acid.

When the molar ratio of the aromatic dicarboxylic acid is controlled to the above range, it is more advantageous for producing the desired effects and it is possible to enhance the physical properties, biodegradability, and hydrolysability (hydrolysis reduction rate) of a biodegradable polyester resin composition, a biodegradable polyester sheet, a biodegradable polyester film, or a biodegradable polyester molded article, prepared from the same.

The aliphatic dicarboxylic acid may be at least one selected from the group consisting of oxalic acid, malonic acid, succinic acid, maleic acid, fumaric acid, glutaric acid, adipic acid, pimelic acid, suberic acid, azelaic acid, sebacic acid, dodecanedicarboxylic acid, 1,4-cyclohexanedicarboxylic acid, and derivatives thereof.

The aliphatic dicarboxylic acid may comprise at least one selected from the group consisting of adipic acid, succinic acid, sebacic acid, and derivatives thereof.

The aliphatic dicarboxylic acid may comprise adipic acid or a derivative thereof.

In addition, the aliphatic dicarboxylic acid may be employed in an amount of 30% by mole to 70% by mole, 40% by mole to 60% by mole, 42% by mole to 58% by mole, 42% by mole to 56% by mole, 43% by mole to 56% by mole, 45% by mole to 56% by mole, 47% by mole to 56% by mole, 48% by mole to 54% by mole, 48% by mole to 55% by mole, or 50% by mole to 55% by mole, based on the total number of moles of the dicarboxylic acid.

When the content of the aliphatic dicarboxylic acid is controlled to the above range, it is possible to enhance productivity, processability, and moldability at the same time and to enhance the physical properties, biodegradability, and hydrolysis reduction rate of a biodegradable polyester resin composition, a biodegradable polyester sheet, a biodegradable polyester film, or a biodegradable polyester molded article, prepared from the same.

In the process for preparing a biodegradable polyester resin composition according to an embodiment, once the diol, the aromatic dicarboxylic acid, and the aliphatic dicarboxylic acid have been reacted to obtain a prepolymer composition, the prepolymer composition is subjected to a polycondensation reaction to obtain a polymer composition.

Specifically, the step of obtaining the polymer composition may comprise a first step of subjecting a first diol, a first aromatic dicarboxylic acid, and a first aliphatic dicarboxylic acid to an esterification reaction at least once to obtain a prepolymer composition; and a second step of subjecting the prepolymer composition to a polycondensation reaction to obtain a polymer composition.

In such an event, the type of each of the first diol, the first aromatic dicarboxylic acid, and the first aliphatic dicarboxylic acid is the same as the type of the diol, the aromatic dicarboxylic acid, and the aliphatic dicarboxylic acid described above. Here, the term first and the terms second and third described below are used to describe various constitutional elements. They are only used for the purpose of distinguishing one constitutional element from another, and their types can be selected within the same range.

The esterification reaction may be carried out once, twice, or three times or more. Specifically, the esterification reaction may be carried out once, twice, or three times, or may be carried out twice or three times. For example, the esterification reaction may comprise a first esterification reaction; a first esterification reaction and a second esterification reaction; or a first esterification reaction, a second esterification reaction, and a third esterification reaction.

In the case where the esterification reaction is carried out two or more times, there is an advantage in that reaction stability and reaction uniformity can be enhanced, and the effect according to the embodiment can be achieved efficiently, as compared with the case where the esterification reaction is carried out once.

The esterification reaction may be carried out at 250°C or lower for 0.5 hour to 5 hours. Specifically, the esterification reaction may be carried out at atmospheric pressure or a reduced pressure at 180°C to 250°C, 185°C to 240°C, or 200°C to 240°C, until a by-product that comprises water theoretically reaches 95%. For example, the esterification reaction may be carried out for 0.5 hour to 4.5 hours, 0.5 hour to 4 hours, or 1 hour to 4 hours, but it is not limited thereto.

The polycondensation reaction may be carried out once, twice, or three times or more. Specifically, the polycondensation reaction may be carried out once, twice, or three times, or may be carried out twice or three times. For example, the polycondensation reaction may comprise a first polycondensation reaction or may comprise a first polycondensation reaction and a second polycondensation reaction. Here, the terms first and second are used to describe various constitutions. They are only used for the purpose of distinguishing one constitution from another, and their process conditions can be selected within the same range.

The polycondensation reaction may be carried out at 180°C to 280°C and 760 Torr or lower for 0.5 hour to 10 hours. For example, the polycondensation reaction may be carried out at 190°C to 270°C, 200°C to 270°C, 200°C to 250°C, 210°C to 270°C, or 220°C to 270°C; and 760 Torr or lower, 500 Torr or lower, 300 Torr or lower, 200 Torr or lower, 100 Torr or lower, 80 Torr or lower, 50 Torr or lower, 20 Torr or lower, 10 Torr or lower, 5 Torr or lower, less than 5 Torr, and 0.1 Torr or higher, 0.2 Torr or higher, 0.5 Torr or higher, 1 Torr or higher, or 3 Torr or higher, for 0.5 hour to 8 hours, 0.5 hour to 7 hours, 0.5 hour to 6 hours, 0.5 hour to 5 hours, 0.5 hour to 4 hours, 1 hour to 8 hours, 1 hour to 7 hours, 1 hour to 6 hours, 1 hour to 5 hours, or 1 hour to 4 hours.

Meanwhile, in the process for preparing a biodegradable polyester resin composition according to an embodiment, the final biodegradable polyester resin composition may comprise an oligomer having a molecular weight within a specific range.

Specifically, the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

More specifically, in the process for preparing a biodegradable polyester resin composition according to an embodiment, it is important to adjust the content of an oligomer having a number average molecular weight (Mn) of 400 to 1,300 g/mole in the final biodegradable polyester resin composition to be 5,000 ppm to 20,000 ppm.

According to an embodiment, as the content of an oligomer having a molecular weight of a specific range in the biodegradable polyester resin composition is adjusted to a specific range, it is possible to provide a biodegradable polyester resin composition, a biodegradable polyester sheet, a biodegradable polyester film, or a biodegradable polyester molded article, each having a more excellent level of hydrolysability and biodegradability.

The oligomer may be formed (a) by a reaction of at least two of the first diol, the first aromatic dicarboxylic acid, and the first aliphatic dicarboxylic acid; may be formed (b) by adding a monomer composition for preparing an oligomer comprising at least two of the second diol, the second aromatic dicarboxylic acid, and the second aliphatic dicarboxylic acid to the esterification reaction, the polycondensation reaction, or both; or by adding the same to the prepolymer composition, the polymer composition, or both to carry out a reaction; or may be formed by both (a) and (b).

Specifically, the oligomer may be formed by a reaction of at least two of the first diol, the first aromatic dicarboxylic acid, and the first aliphatic dicarboxylic acid. That is, the oligomer may be formed by a reaction, for example, an esterification reaction or a polycondensation reaction, of at least two of the first diol, the first aromatic dicarboxylic acid,

and the first aliphatic dicarboxylic acid; or may be a residual unreacted substance formed in the esterification reaction or the polycondensation reaction; or may be a substance formed by a reaction between the residual unreacted substances.

Since the oligomer has a different molecular weight from that of the polymer composition obtained by reacting the diol, the aromatic dicarboxylic acid, and the aliphatic dicarboxylic acid or that of the moisture (water) contained in the biodegradable polyester resin composition, even if a process for removing by-products thereof is carried out, the oligomer having a specific molecular weight may remain. In particular, when an oligomer having a molecular weight within the above specific range is employed in a specific content, the content of terminal groups in the biodegradable polyester resin composition can be controlled to an appropriate range. When an oligomer having a molecular weight within the above specific range is present in a specific content, the crystallinity of the biodegradable polyester resin composition is lowered, whereby the hydrolysability and biodegradability can be further enhanced. In particular, when an oligomer having a low molecular weight, for example, a number average molecular weight (Mn) of 415 to 850 g/mole, specifically 415 to 650 g/mole, more specifically 415 to 425 g/mole, is employed in an appropriate content, it can act as an accelerator to expedite the biodegradation of the biodegradable polyester resin composition, thereby further enhancing the biodegradability.

According to another embodiment, the oligomer may be formed by preparing a monomer composition for preparing an oligomer and adding the same to the reaction, for example, the esterification reaction, the polycondensation reaction, or both, or adding the same to the prepolymer composition, the polymer composition, or both to carry out a reaction.

For example, if the content of an oligomer formed by a reaction of at least two of the first diol, the first aromatic dicarboxylic acid, and the first aliphatic dicarboxylic acid is low, a monomer composition for preparing an oligomer may be prepared, which is then separately added during the reaction, whereby the hydrolysability and biodegradability can be adjusted to an appropriate level.

The monomer composition for preparing an oligomer may comprise a diol and a dicarboxylic acid. Specifically, it may comprise a second diol and a second aromatic dicarboxylic acid; a second diol and a second aliphatic dicarboxylic acid; or a second diol, a second aromatic dicarboxylic acid, and a second aliphatic dicarboxylic acid. The second diol, the second aromatic dicarboxylic acid, and the second aliphatic dicarboxylic acid may each be selected within the same range as the types of the diol, the aromatic dicarboxylic acid, and the aliphatic dicarboxylic acid described above.

In addition, an oligomer composition may be obtained by an esterification reaction using the monomer composition for preparing an oligomer.

The oligomer may be prepared by an esterification reaction to comprise an oligomer having a number average molecular weight (Mn) of 400 to 1,300 g/mole as a main component.

In addition, when the biodegradable polyester resin composition comprises an oligomer having a molecular weight within the above specific range, and when the oligomer has an appropriate molecular weight distribution, the biodegradability can be further enhanced.

For example, when a first oligomer having a number average molecular weight (Mn) of 415 to 425 g/mole is employed in an amount greater than the amount of each of a second oligomer having a number average molecular weight (Mn) of 620 to 630 g/mole, a third oligomer having a number average molecular weight (Mn) of 640 to 650 g/mole, a fourth oligomer having a number average molecular weight (Mn) of 840 to 850 g/mole, and higher oligomers, the crystallinity of the biodegradable polyester resin composition is lowered, so that the biodegradability can be further enhanced.

In addition, the higher the content of aliphatic compounds in the oligomer, the more the biodegradability can be enhanced.

The temperature of the esterification reaction for preparing the oligomer may be about 200°C to about 250°C, and the esterification reaction time may be about 5 minutes or more, about 10 minutes or more, about 20 minutes or more, and 180 minutes or less, 160 minutes or less, 120 minutes or less, 60 minutes or less, or 30 minutes or less, for example, about 5 minutes to about 120 minutes, about 5 minutes to about 60 minutes, about 5 minutes to about 30 minutes, or about 10 minutes to about 30 minutes.

In addition, the content of the monomer composition for preparing an oligomer to be introduced into the reaction may be adjusted such that the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

For example, the amount of the monomer composition for preparing an oligomer used may be, for example, about 0.1 part by weight to about 10 parts by weight, 0.1 part by weight to 5 parts by weight, 0.1 part by weight to 4.9 parts by weight, 0.1 part by weight to 3 parts by weight, 0.1 part by weight to 2 parts by weight, 0.2 part by weight to 2 parts by weight, 0.5 part by weight to 2 parts by weight, or 0.5 part by weight to 1.5 parts by weight, based on 100 parts by weight of the second esterification reaction product. When the monomer composition for preparing an oligomer is added within the above range, it may be advantageous for controlling the oligomer having a molecular weight in the desired specific range, for example, a number average molecular weight (Mn) of 400 to 1,300 g/mole, within the above content range.

The monomer composition for preparing an oligomer may be added, for example, during the esterification reaction, and the oligomer may be formed by the esterification reaction.

The monomer composition for preparing an oligomer may be added, for example, during the polycondensation reaction, and the oligomer may be formed by the polycondensation reaction.

The monomer composition for preparing an oligomer may be added to the prepolymer composition, the polymer composition, or both, and the oligomer may be formed by a reaction thereof.

According to another embodiment, the oligomer may be formed by both (a) and (b).

Specifically, the oligomer may be formed (a) by a reaction of at least two of the first diol, the first aromatic dicarboxylic acid, and the first aliphatic dicarboxylic acid; and, at the same time, (b) by adding a monomer composition for preparing an oligomer comprising at least two of the second diol, the second aromatic dicarboxylic acid, and the second aliphatic dicarboxylic acid to the esterification reaction, the polycondensation reaction, or both; or by adding the same to the prepolymer composition, the polymer composition, or both to carry out a reaction.

In addition, according to an embodiment, when the content of the oligomer in the biodegradable polyester resin composition is excessively large, for example, when the oligomer having a weight average molecular weight (Mn) of 400 to 1,300 g/mole is contained in an amount exceeding 20,000 ppm based on the total weight of the biodegradable polyester resin composition, a step of removing the oligomer may be further carried out such that the oligomer is contained in an amount of 5,000 ppm to 20,000 ppm based on the total weight of the biodegradable polyester resin composition.

The oligomer removal step may be carried out by a depressurization reaction in the esterification reaction step, or it may be carried out in the polycondensation reaction, for example, the first polycondensation reaction, under a low vacuum.

The oligomer removal step may be carried out by reducing the pressure to about 500 Torr or lower at the final stage of the esterification reaction, for example, at a point when 95% of a by-product comprising water is theoretically discharged, to remove the oligomer such that the content of the oligomer is within the above range.

Alternatively, the oligomer removal step may be carried out by capturing the oligomer in a vacuum of about 5 Torr or higher, for example, about 50 to 500 Torr, from the polymer composition obtained by the esterification reaction such that the content of the oligomer is within the above range.

According to an embodiment, as the biodegradable polyester resin composition comprises an oligomer in a specific content range, along with water in an appropriate amount, it is possible to control the content of terminal groups in the biodegradable polyester resin composition to an appropriate range, to achieve a high viscosity, and to provide a biodegradable polyester resin composition having an excellent level of hydrolysability and biodegradability, and a biodegradable polyester sheet, a biodegradable polyester film, or a biodegradable polyester molded article prepared therefrom.

Meanwhile, according to an embodiment, in the step of obtaining the polymer composition, a diol and an aromatic dicarboxylic acid may be mixed and pretreated to obtain a slurry, and then an esterification reaction may be carried out using the slurry.

According to an embodiment, in the process for preparing a biodegradable polyester resin composition, a slurry obtained by mixing a diol and a dicarboxylic acid and pretreating the same is subjected to an esterification reaction at least once to obtain a prepolymer composition; and the prepolymer composition is subjected to a polycondensation reaction, whereby it is possible to effectively achieve the desired configuration and physical properties of a biodegradable polyester resin composition, a biodegradable polyester sheet, a biodegradable polyester film, or a biodegradable polyester molded article, according to the embodiment.

For example, referring to Fig. 2, the step of obtaining the polymer composition may comprise obtaining a prepolymer composition (step 1, S110) and obtaining a polymer composition (step 2, S120), wherein the step of obtaining the prepolymer composition (step 1, S110) may comprise step 1-1 of obtaining a slurry comprising a first diol and a first aromatic dicarboxylic acid; step 1-2 of subjecting a mixture comprising a first esterification reaction product obtained by performing a first esterification reaction using the slurry, a third diol, and a first aliphatic dicarboxylic acid to a second esterification reaction to obtain a second esterification reaction product; and step 1-3 of adding the monomer composition for preparing an oligomer to the second esterification reaction product and performing a third esterification reaction to obtain the prepolymer composition.

Step 1: Step of obtaining a prepolymer composition (S110)

Step 1-1: Step of obtaining a slurry

Step 1-1 may comprise obtaining a slurry comprising a first diol and a first aromatic dicarboxylic acid.

The step of obtaining the slurry in the step 1-1 is a pretreatment step before the esterification reaction, in which step a diol component and an aromatic dicarboxylic acid are mixed and formed into a slurry.

As a first diol and a first aromatic dicarboxylic acid are mixed and pretreated to form a slurry, the first diol and the first aromatic dicarboxylic acid can be uniformly reacted, and it is effective for expediting the esterification reaction, whereby the reaction efficiency can be increased.

In particular, if a first aromatic dicarboxylic acid such as terephthalic acid has complete crystallinity and is in a powder form, its solubility in the first diol is very low, whereby it may be difficult to carry out a homogeneous reaction. Thus, the pretreatment step of forming a slurry may play a very important role in providing a biodegradable polyester resin composition, biodegradable polyester sheet, biodegradable polyester film, and biodegradable polyester molded article having excellent physical properties according to an embodiment and enhancing the reaction efficiency.

In the step of obtaining the slurry in the step 1-1, the first diol and the first aromatic dicarboxylic acid may be mixed and put into a slurry agitator (tank).

According to an embodiment, in the step of obtaining the slurry in the step 1-1, the agitating force until the slurry is formed is very important; thus, the number and shape(e.g., height) of agitating blades of the agitator and the conditions for forming the slurry are very important.

It may be more advantageous for producing an efficient agitating effect that the slurry agitator is, for example, an anchor type at the bottom, has a height to the agitator of 20 mm or more, and has two or more rotor blades.

For example, the slurry agitator may have a height to the agitator of 20 mm or more. That is, the reactor and the bottom of the agitator are almost contiguous with each other. In such a case, a slurry without precipitation may be obtained. If the shape of the agitator and the number of rotor blades do not satisfy the above conditions, when the first diol and the first aromatic dicarboxylic acid are initially mixed, the first aromatic dicarboxylic acid may settle to the bottom, thereby causing phase separation.

The step of obtaining the slurry in the step 1-1 may comprise mixing the first diol component and the first aromatic dicarboxylic acid and agitating the mixture at 30 °C to 100°C and 50 rpm to 300 rpm for 10 minutes or longer, for example, 10 minutes to 200 minutes. If the pretreatment process satisfies the above temperature, speed, and agitation time, a homogeneous slurry can be obtained without phase separation, which is advantageous in terms of reaction efficiency, and the physical properties of the biodegradable polyester resin can be efficiently obtained.

In addition, nanocellulose and/or other additives may be added to the slurry.

The types, contents, and characteristics of the nanocellulose and other additives are as described below, respectively.

Step 1-2: Step of obtaining an esterification reaction product

Step 1-2 may comprise subjecting a mixture comprising a first esterification reaction product obtained by performing a first esterification reaction using the slurry, a third diol, and a first aliphatic dicarboxylic acid to a second esterification reaction to obtain a second esterification reaction product.

In an embodiment, the first esterification reaction may be carried out with the slurry itself or after a diol is added to the slurry. In addition, a third diol and a first aliphatic dicarboxylic acid may be added to the first esterification reaction product obtained through the first esterification reaction to prepare a mixture, and then a second esterification reaction may be carried out using the mixture.

In the esterification reaction of step 1-2, the reaction time may be shortened by using the slurry obtained in step 1-1. For example, the reaction time may be shortened by 1.5 times or more by using the slurry obtained in step 1-1.

In addition, in the case where the esterification reaction is carried out two or more times, there is an advantage in that reaction stability and reaction uniformity can be enhanced, and the effect according to the embodiment can be achieved efficiently, as compared with the case where the esterification reaction is carried out once.

For example, the slurry obtained in step 1-1 may be fed to a reactor through a supply line, and the first esterification reaction may be carried out.

In the first esterification reaction, a catalyst may be added. Once the catalyst has been added, the first esterification reaction may be carried out until 95% of the by-product that comprises water is theoretically discharged. Thereafter, a mixture comprising a third diol and a first aliphatic dicarboxylic acid may be added to the first esterification reaction product, and then a second esterification reaction may be carried out. In such an event, once the catalyst has been added during the second esterification reaction, the second esterification reaction may be carried out until 95% of the by-product comprising water is theoretically discharged. The by-product comprising water may comprise tetrahydrofuran (THF) in addition to water. Specifically, the by-product comprising water may comprise a mixture of water and tetrahydrofuran (THF) at a ratio of about 80 to 95:5 to 20, for example, about 90:10.

The first esterification reaction and the second esterification reaction may each be carried out within the range of the above esterification reaction conditions.

For example, the first esterification reaction may be carried out at 250°C or lower for 0.25 hour to 4 hours. Specifically, the first esterification reaction may be carried out at normal pressure or a reduced pressure at 180°C to 250°C, 185°C to 240°C, or 200°C to 240°C, until the by-product that comprises water theoretically reaches 95%. For example, the first esterification reaction may be carried out for 0.25 hour to 4 hours, 0.25 hour to 3.5 hours, 1.2 hour to 3 hours, or 1.5 hour to 3 hours, but it is not limited thereto.

The second esterification reaction may be carried out at about 250°C or lower for 0.25 hour to 3.5 hours.

Specifically, the second esterification reaction may be carried out at normal pressure or a reduced pressure at 180°C to 250°C, 185°C to 240°C, or 200°C to 240°C, until the by-product that comprises water theoretically reaches 95%. For example, the second esterification reaction may be carried out for 0.5 hour to 3 hours, 1 hour to 2.5 hours, or 1.5 hour to 3 hours, but it is not limited thereto.

Upon completion of the second esterification reaction, an additional esterification reaction may be carried out. In such an event, a monomer composition comprising at least two of the diol, the aromatic dicarboxylic acid, and the aliphatic dicarboxylic acid is added to the second esterification reaction product, and the additional esterification reaction may be carried out.

In addition, nanocellulose and/or other additives may be added during the esterification reaction. Specifically, the nanocellulose and/or other additives may be added before the esterification reaction, during the at least one esterification reaction, and/or to the reaction product obtained by the at least one esterification reaction.

For example, the nanocellulose and/or other additives may be added together with the catalyst. Alternatively, the nanocellulose and/or other additives may be added to at least one of the reaction product obtained by the first esterification reaction, the reaction product obtained by the second esterification reaction, and the reaction product obtained by the third esterification reaction described below.

In addition, the nanocellulose may comprise pretreated nanocellulose, which will be described below.

In particular, when the nanocellulose, specifically pretreated nanocellulose, is added, the mechanical properties can be enhanced, and it may be more advantageous in adjusting the production speed and amount of an oligomer during the reaction.

The other additives may comprise at least one selected from the group consisting of at least one reaction accelerator selected from the group consisting of glycerol, pentaerythritol, and trimethylolpropane; an amine-based high-temperature thermal stabilizer such as tetraethylenepentaamine; at least one phosphorus-based stabilizer selected from the group consisting of phosphoric acid, phosphorous acid, polyphosphoric acid, trimethyl phosphate, triethyl phosphate, triethylphosphonoacetate, trimethylphosphine, and triphenylphosphine; at least one inorganic additive selected from the group consisting of silica, potassium, calcium carbonate, and magnesium; and a color correcting agent such as cobalt acetate.

A titanium-based catalyst and/or a germanium-based catalyst may be further added to the slurry before the esterification reaction in the second step.

Specifically, in the case where the esterification reaction is carried out once, a titanium-based catalyst or a germanium-based catalyst may be added to the slurry.

In addition, in the case where the esterification reaction is carried out two or more times, a titanium-based catalyst or a germanium-based catalyst may be added to the slurry, the reaction product obtained by the first esterification of the slurry, or both.

Specifically, the biodegradable polyester resin may comprise at least one selected from the group consisting of titanium isopropoxide, antimony trioxide, dibutyltin oxide, tetrapropyl titanate, tetrabutyl titanate, tetraisopropyl titanate, antimony acetate, calcium acetate, and magnesium acetate; or a germanium-based catalyst selected from the group consisting of germanium oxide, germanium methoxide, germanium ethoxide, tetramethyl germanium, tetraethyl germanium, and germanium sulfide.

In addition, the content of the catalyst may be 100 ppm to 1,000 ppm based on the total weight of the diols, aromatic dicarboxylic acid, and aliphatic dicarboxylic acid. For example, the titanium-based catalyst or germanium-based catalyst may be employed in an amount of 100 ppm to 800 ppm, 150 ppm to 700 ppm, 200 ppm to 600 ppm, or 250 ppm to 550 ppm. As the content of the catalyst satisfies the above range, the processability can be further enhanced.

A phosphorus-based stabilizer may be further added during the esterification reaction in the second step, at the end of the esterification reaction, or both.

Specifically, in the case where the esterification reaction is carried out once, a phosphorus-based stabilizer may be added during the esterification reaction, at the end of the esterification reaction, or both.

In addition, in the case where the esterification reaction is carried out two or more times, a phosphorus-based stabilizer may be added during the first esterification reaction, during the second esterification reaction, or both, or at the end of the first esterification reaction or at the end of the second esterification reaction.

In addition, the content of the phosphorus-based stabilizer may be 3,000 ppm or less based on the total weight of the diols, aromatic dicarboxylic acid, and aliphatic dicarboxylic acid. Specifically, the content of the phosphorus-based stabilizer may be, for example, 10 ppm to 3,000 ppm, 20 ppm to 2,000 ppm, 20 ppm to 1,500 ppm, or 20 ppm to 1,000 ppm, based on the total weight of the diols, aromatic dicarboxylic acid, and aliphatic dicarboxylic acid. As the content of the phosphorus-based stabilizer satisfies the above range, it is possible to suppress the degradation of the polymer due to high temperatures during the reaction process, thereby reducing the end groups of the polymer and improving the color.

In addition, at least one reaction accelerator selected from the group consisting of glycerol, pentaerythritol, and trimethylolpropane may be further employed in the esterification reaction.

The content of the reaction accelerator may be 3,000 ppm or less based on the total weight of the diol, the

aromatic dicarboxylic acid, and the aliphatic dicarboxylic acid. Specifically, the content of the reaction accelerator may be, for example, 10 ppm to 3,000 ppm, 20 ppm to 2,000 ppm, 20 ppm to 1,500 ppm, or 20 ppm to 1,000 ppm, based on the total weight of the diol, the aromatic dicarboxylic acid, and the aliphatic dicarboxylic acid.

When the reaction accelerator is added particularly in the above content, it is possible to obtain a biodegradable polyester resin composition having a desired degree of polymerization while the gelation of the biodegradable polyester resin composition is prevented.

At least one selected from the group consisting of an additive such as silica, potassium, and magnesium and a color correcting agent such as cobalt acetate may be further added upon completion of the esterification reaction of the second step. That is, the additive and/or color correcting agent may be added upon completion of the esterification reaction for stabilization, and the polycondensation reaction may then be carried out.

Step 1-3: Step of obtaining a prepolymer composition

Step 1-3 may comprise adding the monomer composition for preparing an oligomer to the esterification reaction product (e.g., the second esterification reaction product, or an esterification reaction product obtained by performing an additional esterification reaction using the second esterification reaction product) and performing a third esterification reaction to obtain a prepolymer composition.

The third esterification reaction may be carried out at about 250°C or lower for 0.05 hour to 3.5 hours. Specifically, the third esterification reaction may be carried out at normal pressure or a reduced pressure at 180°C to 250°C, 185°C to 240°C, or 200°C to 240°C, until the by-product that comprises water theoretically reaches 95%. For example, the third esterification reaction may be carried out for 5 minutes to 180 minutes, 5 minutes to 100 minutes, or 5 minutes to 60 minutes.

For example, the third esterification reaction may be carried out by adding the monomer composition for preparing an oligomer to the second esterification reaction product in an amount of about 0.1 part by weight to about 10 parts by weight, 0.1 part by weight to 5 parts by weight, 0.1 part by weight to 4.9 parts by weight, 0.1 part by weight to 3 parts by weight, 0.1 part by weight to 2 parts by weight, 0.2 part by weight to 2 parts by weight, 0.5 part by weight to 2 parts by weight, or 0.5 part by weight to 1.5 parts by weight, based on 100 parts by weight of the second esterification reaction product, at 180°C to 250°C for 5 minutes to 60 minutes.

A prepolymer composition may be obtained by the third esterification reaction.

The prepolymer composition may have a number average molecular weight (Mn) of 500 to 10,000 g/mole. For example, the number average molecular weight (Mn) of the prepolymer composition may be 500 g/mole to 8,500 g/mole, 500 to 7,000 g/mole, 500 to 6,000 g/mole, 500 to 5,000 g/mole, 500 to 3,000 g/mole, 500 to 2,000 g/mole, 500 to 1,500 g/mole, or 800 to 1,500 g/mole. As the number average molecular weight (Mn) of the prepolymer composition satisfies the above range, it is possible to efficiently increase the molecular weight of the polymer composition in the polycondensation reaction, thereby further enhancing the strength characteristics and efficiently achieving the desired effects.

The number average molecular weight (Mn) may be measured using gel permeation chromatography (GPC). Specifically, various data such as Mn, Mw, and Mp may be obtained by gel permeation chromatography. The molecular weight may be measured as a number average molecular weight (Mn) among them.

**Step 2: Step of obtaining a polymer composition (S120)**

In the step of obtaining a polymer composition according to an embodiment, step 2 may comprise subjecting the prepolymer composition to a polycondensation reaction to obtain a polymer composition.

The polycondensation reaction may be carried out at 180°C to 280°C for 0.5 hour to 10 hours. For example, the polycondensation reaction may be carried out at 190°C to 270°C, 200°C to 270°C, 200°C to 260°C, 200°C to 250°C, 210°C to 270°C, 220°C to 270°C, 210°C to 260°C, 220°C to 260°C, or 220°C to 250°C for 0.5 hour to 8 hours, 0.5 hour to 7 hours, 1 hour to 6 hours, 1 hour to 5.5 hours, or 1 hour to 5 hours.

In addition, before the polycondensation reaction, a titanium-based catalyst and/or a germanium-based catalyst, or a polymerization catalyst such as antimony trioxide, or tetrabutyl titanate may be further added to the prepolymer composition. In addition, before the polycondensation reaction, at least one selected from the group consisting of at least one reaction accelerator selected from the group consisting of glycerol, pentaerythritol, and trimethylolpropane; an amine-based high-temperature thermal stabilizer such as tetraethylenepentaamine; at least one phosphorus-based stabilizer selected from the group consisting of phosphoric acid, phosphorous acid, polyphosphoric acid, trimethyl phosphate, triethyl phosphate, triethylphosphonoacetate, trimethylphosphine, and triphenylphosphine; at least one inorganic additive selected from the group consisting of silica, potassium, and magnesium; and a color correcting agent such as cobalt acetate may be further added to the prepolymer composition.

In addition, the polycondensation reaction may comprise a first polycondensation reaction and a second polycondensation reaction.

For example, the first polycondensation reaction may be carried out at about 260°C or lower, about 250°C or lower, about 200°C to about 260°C, about 210°C to about 250°C, about 220°C to about 250°C, or about 220°C to about 245°C; and about 5 Torr or higher, about 6 Torr or higher, about 8 Torr or higher, or about 10 Torr or higher, and about 760 Torr or lower, about 500 Torr or lower, about 300 Torr or lower, about 200 Torr or lower, about 100 Torr or lower, about 50 Torr or lower, about 30 Torr or lower. Specifically, the first polycondensation reaction may be carried out at about 5 Torr to about 760 Torr, about 5 Torr to about 500 Torr, about 5 Torr to about 200 Torr, about 5 Torr to about 100 Torr, about 5 Torr to about 80 Torr, about 5 Torr to about 50 Torr, about 5 Torr to about 45 Torr, about 5 Torr to about 30 Torr, about 5 Torr to about 20 Torr, about 5 Torr to about 15 Torr, or about 10 Torr to about 20 Torr, for about 0.1 hour to about 4.0 hours, about 0.2 hour to about 4.0 hours, about 0.2 hour to about 4.0 hours, about 0.2 hour to about 3.5 hours, about 0.2 hour to about 3.0 hours, or about 0.2 hour to about 2.5 hours. For example, the first polycondensation reaction may be carried out at 200°C to 260°C and 5 Torr or higher for 0.1 hour to 4.0 hours.

**In** addition, the second polycondensation reaction may be carried out at about 270°C or lower, about 260°C or lower, about 250°C or lower, about 200°C to about 270°C, about 200°C to about 260°C, about 210°C to about 250°C, about 220°C to about 250°C, or about 220°C to about 245°C; and about 1 Torr or lower, lower than about 1 Torr, about 0.8 Torr or lower, about 0.6 Torr or lower, about 0.1 Torr to lower than about 1 Torr, about 0.2 Torr to about 0.8 Torr, about 0.2 Torr to about 0.6 Torr, or about 0.3 Torr to about 0.6 Torr, for 0.5 hour to about 8.0 hours, about 1.0 hour to about 6.0 hours, about 1.5 hour to about 6.0 hours, about 2.0 hours to about 6.0 hours, or about 3.0 hours to about 6.0 hours. For example, the second polycondensation reaction may be carried out at 200°C to 270°C and 0.1 Torr to lower than 1 Torr for 0.5 hour to 8.0 hours.

As another example, the polycondensation reaction comprises a first polycondensation reaction and a second polycondensation reaction, wherein the first polycondensation reaction may be carried out at a higher pressure than the pressure of the second polycondensation reaction, and the second polycondensation reaction may be carried out for a longer time than the time of the first polycondensation reaction, but it is not limited thereto.

In addition, nanocellulose and/or other additives may be added during the polycondensation reaction. The nanocellulose and/or other additives may be added before the polycondensation reaction, for example, to the prepolymer composition obtained in step 1, and may be added after the polycondensation reaction, for example, to at least one of the reaction product obtained by the first polycondensation reaction and the reaction product obtained by the second polycondensation reaction. The types, contents, and characteristics of the nanocellulose and/or other additives are as described above.

The polymer composition may have a number average molecular weight (Mn) of 40,000 g/mole or more. For example, the number average molecular weight (Mn) of the polymer composition may be 43,000 g/mole or more, 45,000 g/mole or more, or 50,000 g/mole to 70,000 g/mole or more. As the number average molecular weight (Mn) of the polymer composition satisfies the above range, the physical properties and processability can be further enhanced.

Thereafter, pellets may be prepared from the polymer composition.

Specifically, the polymer composition may be cooled to 70°C or lower, 65°C or lower, 60°C or lower, 50°C or lower, 15°C or lower, 10°C or lower, or 6°C or lower, and the cooled polymer composition may then be cut to prepare pellets.

The cutting step may be carried out using a pellet cutter without limitations as long as it is commonly used in the art, and the pellets may have various shapes. Examples of the pellet cutting method may include an underwater cutting method or a strand cutting method.

The polymer composition obtained in step 2 may have an intrinsic viscosity (IV) of about 1.0 dl/g or more, greater than about 1.0 dl/g, about 1.1 dl/g or more, or about 1.2 dl/g or more. For example, the intrinsic viscosity (IV) of the polymer composition obtained in step 2 may be about 1.0 dl/g to about 2.0 dl/g, about 1.0 dl/g to about 1.8 dl/g, about 1.0 dl/g to about 1.6 dl/g, greater than about 1.0 dl/g to about 2.0 dl/g, greater than about 1.0 dl/g to about 1.8 dl/g, greater than about 1.0 dl/g to about 1.6 dl/g. When the intrinsic viscosity (IV) of the polymer composition obtained in step 2 satisfies the above range, it may be more advantageous for achieving the desired effects.

The intrinsic viscosity may be measured using a viscosity tube.

For example, the polymer composition is dissolved in 25 ml of o-chlorophenol to prepare a sample solution, and the falling time of the sample solution is measured using a BS type NO 2 Ostwald viscosity tube (ASAHI Ostwald viscosity tube BS type NO 2), and the result of the relative viscosity expressed by the following Equation 1 is converted into intrinsic viscosity.

[Equation 1]

$$\eta r = \frac{B \times t_1 - \frac{C}{t_1}}{B \times t_0 - \frac{C}{t_0}}$$

in Equation 1,

$\eta r$: relative viscosity
B: correction factor of the viscosity tube
$t_o$: measurement time (sec) of blank test of o-chlorophenol
$t_1$: falling time (sec) of the sample solution
C: 2.4 (integer)

In addition, the content of carboxyl (COOH) terminal groups in the polymer composition obtained in step 2, specifically the polymer composition after the polycondensation, may be less than 50 eq/ton, about 48 eq/ton or less, about 45 eq/ton or less, about 43 eq/ton or less, about 42 eq/ton or less, or about 40 eq/ton or less.

For measuring the content of carboxyl (COOH) terminal groups in the polymer composition, about 5 g of the polymer composition is stirred in a benzyl alcohol solvent (10 ml), and then chloroform (3 ml) is added thereto, when the composition is completely dissolved, to prepare a sample solution. The sample solution is titrated with N/10-NaOH-benzyl alcohol using phenol red as an indicator, and the point where the color changes from yellow to light pink is taken as the endpoint. After the -COOH group in the biodegradable polyester resin composition is converted to -COONa, the amount of N/10-NaOH-benzyl alcohol solution is considered to be equivalent to the content of COOH terminal groups. The content of COOH terminal groups may be calculated using the following Equation 2.

R-COOH + NaOH → COONa + $H_2O$

$$1 \text{ ml of N/10-NaOH-benzyl alcohol} = 1/10 \times 1/10^6 = 1/10^7 \text{ eq}$$

[Equation 2]

$$\text{Content of COOH terminal groups (eq/}10^6\text{ g)} = \frac{(B - C) \times (\frac{1}{1{,}000}) \times 0.1 \times f \times 10^6}{A}$$

In Equation 2,

B = After the indicator is added to the sample solution, the amount (ml) of N/10-NaOH-benzyl alcohol consumed
C = Amount (ml) of N/10-NaOH-benzyl alcohol without adding the sample solution (blank)
A = Amount (g) of the sample (polymer composition and biodegradable polyester resin composition)
f = titer of 0.1 N NaOH benzyl alcohol solution
1/1,000 = 1 ml of 1N NaOH is equivalent to 1/1,000($10^{-3}$) eq of -COOH.
$10^6$ = The content of COOH terminal groups in the biodegradable polyester resin composition is converted to 1 ton (1,000 kg = $10^6$ g)

When the content of carboxyl (COOH) terminal groups in the polymer composition after the polycondensation satisfies the above range, it can be more advantageous for achieving the desired effects.

Step of adjusting the moisture content

**Step 3: Step of adjusting the moisture content (S130)**

The process for preparing a biodegradable polyester resin composition according to an embodiment may comprise adjusting the content of moisture in the polymer composition.

In general, in the production of a polyester composition, such as polybutyleneadipate terephthalate (PBAT), in order to increase productivity, a method is adopted in which polymerization is carried out for an intermediate viscosity without adjusting the moisture content, and a chain extender is then continuously added (continuous process) to carry out polymerization for a high viscosity. In such a case, however, there may be problems of hydrolysis and an increase in carboxyl (COOH) terminal groups because the reaction and extrusion are carried out in the presence of an excess content of moisture formed by the by-product and residual unreacted substances.

According to an embodiment, when a biodegradable polyester resin composition is prepared while the content of moisture in the polymer composition is adjusted to maintain an appropriate amount of moisture, the biodegradable polyester resin composition may have a desired level of viscosity. Specifically, when the pretreated nanocellulose and/or chain extender of step 4 described below is added to the polymer composition whose moisture content has been adjusted to maintain an appropriate amount of moisture, it is possible to obtain a biodegradable polyester resin composition having a desired viscosity, such as high viscosity or even ultra-high viscosity, that satisfies commercial properties. In such a case, it can be applied to various molding processes such as blow molding, injection molding, and extrusion molding that require a high or ultra-high viscosity condition, and it has the great advantage of enhancing processability and productivity at the same time.

In particular, polymerization may be carried out for a high viscosity such that an oligomer is contained in the polyester resin composition in a specific content (first high-viscosity polymerization); and once the content of moisture in the polymer composition has been adjusted to a specific range, the pretreated nanocellulose and/or chain extender of step 4 described below may be added to obtain a biodegradable polyester resin composition having a ultra-high viscosity (second high-viscosity polymerization).

When a two-stage high-viscosity polymerization of the first high-viscosity polymerization and the second high-viscosity polymerization is carried out as described above, it is possible to reduce the occurrence of hydrolysis and to control the content of terminal groups in the biodegradable polyester resin composition to an appropriate range while its molecular weight is adjusted up to an ultra-high viscosity, whereby various molding methods can be utilized.

In addition, when a two-stage high-viscosity polymerization is carried out, a biodegradable polyester resin composition can be prepared without a solidification and remelting procedure, so that energy consumption due to the solidification, drying, and remelting procedure can be significantly reduced, and desired physical properties can be further enhanced.

The content of moisture in the polymer composition whose moisture content has been adjusted may be 100 ppm to 500 ppm, 100 ppm to 400 ppm, 100 ppm to 350 ppm, 200 ppm to 500 ppm, 200 ppm to 400 ppm, 200 ppm to 350 ppm, 250 ppm to 400 ppm, 250 ppm to 350 ppm, or 290 ppm to 350 ppm, based on the total weight of the polymer composition whose moisture content has been adjusted.

The moisture content may be the moisture content of the final biodegradable polyester resin composition according to an embodiment.

The moisture content may be measured by calculating the difference (loss) in weight before and after drying the prepared polymer composition using a moisture content meter (e.g., Cumasis) using a heat source (e.g., halogen/dark, temperature: 30 to 230°C).

The adjustment of moisture content may be carried out at 40°C to 80°C for 2 hours to 8 hours. Specifically, the adjustment of moisture content may be carried out at 40°C to 70°C, 40°C to 60°C, 50°C to 80°C, or 50°C to 70°C for 2 hours to 8 hours, 2 hours to 7 hours, 3 hours to 7 hours, or 4 hours to 7 hours.

In addition, the conditions for the adjustment of moisture content are not particularly limited, as long as the content of moisture in the polymer composition whose moisture content has been adjusted can satisfy the above specific range and does not impair the desired effects. The moisture content may be adjusted to the above appropriate range by various methods.

For example, the polymer composition may be adjusted to have a moisture content in the above specific range by performing drying in the above temperature range using a dryer, such as a vacuum dryer or a dehumidifying dryer.

**Step 4: Step of adding a chain extender (S140)**

The process may further comprise a step of adding a chain extender to the polymer composition obtained in step 3, the moisture content of which has been adjusted.

According to an embodiment, when a chain extender is added to the polymer composition whose moisture content has been adjusted to maintain an appropriate amount of moisture, it is possible to obtain a biodegradable polyester resin composition having a desired high viscosity, which can also have an appropriate level of hydrolysability and a high

level of biodegradability.

The chain extender may comprise at least one selected from the group consisting of epoxy-based compounds, acryl-based compounds, carbodiimide-based compounds, and isocyanate-based compounds. The chain extender may comprise an epoxy-based compound.

The epoxy-based compound may contain an epoxy group as a functional group. The chain extender may contain 1 to 15, 2 to 12, 5 to 12, 5 to 10, 2 to 9, or 5 to 9 epoxy groups.

For example, the epoxy-based compound may comprise a compound having a molecular weight of 100 g/mole to 30,000 g/mole, 100 g/mole to 25,000 g/mole, 100 g/mole to 20,000 g/mole, 100 g/mole to 15,000 g/mole, 100 g/mole to 10,000 g/mole, 200 g/mole to 10,000 g/mole, 300 g/mole to 10,000 g/mole, 300 g/mole to 8,000 g/mole, 300 g/mole to 400 g/mole, 5,000 g/mole to 8,000 g/mole, 6,000 g/mole to 8,000 g/mole, or 7,000 g/mole to 8,000 g/mole.

The epoxy-based compound may comprise a styrene acrylate copolymer having 5 to 9 epoxy groups, a bisphenol A-diglycidyl ether polymer having 2 epoxy groups, or a combination thereof. More specifically, the epoxy-based compound may comprise a styrene acrylate copolymer containing 5 or 9 epoxy groups.

The chain extender may comprise an acryl-based compound. The acryl-based compound may comprise an acrylic group. The acrylic group may be bonded as a side chain to the main chain. The acryl-based compound may comprise an epoxy group. The epoxy group may be bonded as a side chain to the main chain.

The chain extender may comprise a carbodiimide-based compound. The carbodiimide compound may be at least one selected from the group consisting of 1,3-dicyclohexylcarbodiimide, HMV-8CA and HMV-10B sold by Nisshinbo, STABILIZER 9000 and STABILIZER 7000 sold by Raschig, bis-(2,6-diisopropyl-phenyline-2,4-carbodiimide), and poly-(1,3,5-triisopropyl-phenyline-2,4-carbodiimide).

The chain extender may comprise an isocyanate-based compound. The isocyanate-based compound may be at least one selected from the group consisting of monofunctional isocyanates or multifunctional isocyanates. For example, the chain extender may be at least one selected from the group consisting of tolylene 2,4-diisocyanate, tolylene 2,6-diisocyanate, diphenylmethane 4,4'-diisocyanate, 2,4'-diisocyanate, naphthalene 1,5-diisocyanate, xylylene diisocyanate, hexamethylene diisocyanate, pentamethylene diisocyanate, and isophorone diisocyanate. In addition, the chain extender may comprise at least one selected from the group consisting of triisocyanate, tri(4-isocyanatophenyl)methane, and methylenebis(4-isocyanatocyclohexane).

The chain extender may be added in an amount of 1.0% by weight or less based on the total weight of the diol, the aromatic dicarboxylic acid, and the aliphatic dicarboxylic acid. The chain extender may be added in an amount of less than about 1.0% by weight, about 0.9% by weight or less, about 0.8% by weight or less, about 0.7% by weight or less, about 0.6% by weight or less, and about 0.1% by weight or more, about 0.2% by weight or more, about 0.3% by weight or more, about 0.4% by weight or more, about 0.5% by weight or more, 0.1 to 1.0% by weight, about 0.1% by weight to 0.9% by weight, 0.2 to 0.9% by weight, 0.3 to 0.9% by weight, 0.4 to 0.9% by weight, 0.5 to 0.9% by weight, 0.6 to 0.9% by weight, 0.7 to 0.9% by weight, or 0.5 to 0.8% by weight, based on the total weight of the diol, the aromatic dicarboxylic acid, and the aliphatic dicarboxylic acid.

When the biodegradable polyester resin composition according to an embodiment comprises the chain extender in the above range, it can have an appropriate level of hydrolysability and biodegradability.

A chain extender is added to the polymer composition whose moisture content has been adjusted, and they are uniformly mixed, which may then be maintained at a temperature of about 150°C to about 260°C for about 1 minute to about 15 minutes. As a result, the polymer composition may react with the chain extender.

In addition, the chain extender may be uniformly mixed with the polymer composition whose moisture content has been adjusted using a twin extruder (TEX) or a static mixer.

The chain extender may be chemically bonded to the biodegradable polyester resin in the biodegradable polyester resin composition. The chain extender may be chemically bonded to the polymer contained in the biodegradable polyester resin in the biodegradable polyester resin composition. The chain extender may be bonded to the ends of the polymer contained in the biodegradable polyester resin in the biodegradable polyester resin composition. In addition, the chain extender may be bonded to the ends of the three polymers contained in the biodegradable polyester resin in the biodegradable polyester resin composition.

According to another embodiment, nanocellulose may be added to the polymer composition whose moisture content has been adjusted. The type, content, and characteristics of the nanocellulose are as described above.

As a step of adding pretreated nanocellulose to the polymer composition whose moisture content has been adjusted is adopted, it is possible to significantly enhance the mechanical properties, such as strength, impact absorption energy, and post-notch tear strength, of a film or molded article produced from the biodegradable polyester resin composition. Even when functionalities are imparted by using various additives, the mechanical properties can be maintained at an appropriate level without deterioration.

According to an embodiment, it may be a very important factor to adjust the electrical properties of the pretreated nanocellulose to an appropriate level. Specifically, the pretreated nanocellulose may be pretreated nanocellulose having a controlled zeta potential.

The zeta potential generally refers to a physical property that appears in particles (colloidal particles) contained in a suspension. There are two types of liquid layer that exists around particles. They are an internal area (stern layer: electron layer) where ions form a strong boundary and an external area (defuse) where they are relatively weakly bonded. The external area (defuse) is an area within a theoretical boundary where ions and particles exist stably. For example, when a particle moves, ions in the internal area move within a predetermined boundary. On the other hand, ions that exist outside the predetermined boundary move independently, like a giant dispersant, regardless of the particles. The potential at this boundary is zeta potential.

The zeta potential is an indicator of the power to maintain colloidal particles in a dispersed state, and the colloidal particles may refer to nanocellulose. When the zeta potential of the pretreated nanocellulose (dispersed colloidal particles) is adjusted, good melt fluidity can be maintained without causing excessive bonding between the pretreated nanocellulose and the polymer composition whose moisture content has been adjusted. Further, there is an advantage in that the mechanical properties of a film and molded article prepared from the biodegradable polyester resin compositions can be further enhanced.

Hereinafter, the zeta potential of the pretreated nanocellulose may be measured with reference to Fig. 3.

Fig. 3 schematically illustrates a method for measuring zeta potential. Referring to Fig. 3, a colloidal particle (150) dispersed in a solvent (100) has a fixed layer (130), in which ions with opposite charges surround the surface of the colloidal particle, an ion diffusion layer (120), and a slippery plane (110).

Here, the solvent (100) may comprise water or a weakly acidic solvent. Specifically, it may comprise at least one selected from the group consisting of water, acetic acid, and sodium acetate, but it is not limited thereto. For example, the pretreated nanocellulose may be colloidal particles (150) dispersed in the solvent (100).

The nanocellulose becomes charged when present in the medium of a solvent, such as water, acetic acid, or sodium acetate.

Specifically, the fixed layer (130) is a region corresponding to the internal area (stern layer: electron layer) in the general zeta potential defined in a suspension. The ion diffusion layer (120) is a region corresponding to the external area (defuse) in the general zeta potential defined in a suspension. The slippery plane (130) is a region corresponding to the predetermined boundary in the general zeta potential defined in a suspension.

The zeta potential may be measured using ZETASIZER Nano ZS, and the temperature of measurement is 25°C. In the zeta potential measuring equipment, a negative electrode (NE) and a positive electrode (PE) are installed at both ends to form a magnetic field. Here, depending on the charge of the colloidal particles (nanocellulose) (150), the particles may move from the negative electrode (NE) to the positive electrode (PE) or from the positive electrode (PE) to the negative electrode (NE), and the speed at which the colloidal particles (nanocellulose) (150) moves may be determined depending on the strength of the charge. The speed at this time is called the electrophoretic velocity, and the electrophoretic velocity may be converted to measure the zeta potential (ZP) value, which is represented by the following Equation 7.

[Equation 7]

$$ZP = \mu U_E/P$$

In Equation 7,

$\mu$ is the viscosity of the solvent at 25°C ($(N/m^2)\cdot s$),
$U_E$ is the electrical particle flux velocity (m/s per V/m), and
P is the permittivity.

The $U_E$ that stands for the electrical particle flux velocity (m/s per V/m) may be expressed by the following Equation 7-1.

[Equation 7-1]

$$U_E = V/E_f$$

In Equation 7-1,

V is the electric moving velocity of the particle (m/s), and
$E_f$ is the electric field strength (V/m).

According to an embodiment, the pretreated nanocellulose may have a zeta potential of -30 mV or less, -35 mV or less, -40 mV or less, -45 mV or less, -50 mV or less, or -55 mV or less, when measured using a ZETASIZER Nano ZS. In addition, the pretreated nanocellulose may have a zeta potential of -150 mV or more, -120 mV or more, -110 mV or more, -100 mV or more, -90 mV or more, or -80 mV or more. Specifically, the zeta potential of the pretreated nanocellulose may be -150 mV to -30 mV, -120 mV to -40 mV, -120 mV to -45 mV, -100 mV to -50 mV, -100 mV to -55 mV, -90 mV to -30 mV, -90 mV to -45 mV, -90 mV to -50 mV, -80 mV to -30 mV, -80 mV to -45 mV, -80 mV to - 50 mV, -70 mV to -30 mV, -70 mV to -45 mV, -70 mV to -50 mV, -70 mV to -55 mV, or -70 mV to -60 mV.

When the zeta potential of the pretreated nanocellulose satisfies the above range, the pretreated nanocellulose does not cause excessive bonding with the polymer composition whose moisture content has been adjusted, and it has an appropriate interaction with the polymer composition to maintain good melt fluidity. Further, it may be further advantageous for enhancing the mechanical properties of a film and molded article prepared from the biodegradable polyester resin compositions.

In addition, when the zeta potential of the pretreated nanocellulose satisfies the above range, its dispersibility is excellent. In particular, the higher the absolute value of the zeta potential of the pretreated nanocellulose within the above range, the better the dispersibility may be.

Further, pretreated nanocellulose satisfying the above zeta potential range can act as a crosslinking agent with the polymer composition. As it is bonded to moisture (water) contained in the polymer composition, the pretreated nanocellulose is ionized by the moisture during hydrolysis and/or biodegradation, thereby further enhancing the biodegradability and hydrolysability.

Methods for controlling the zeta potential of the pretreated nanocellulose within the above range may include, for example, pH control of the pretreated nanocellulose and/or surface treatment of the nanocellulose.

Specifically, the zeta potential of the pretreated nanocellulose may be controlled to the above range by adjusting the pH of the pretreated nanocellulose.

In particular, the pH of the pretreated nanocellulose may be a major factor that changes the zeta potential.

For example, if a solution with a high pH (a lot of $OH^-$ from alkali) is added to a solution containing negatively charged particles, it may become more negatively charged. In addition, if a solution with a low pH (a lot of acidic $H^+$) is added, it may become neutral.

The pH of the pretreated nanocellulose may be 2.0 to 9.0, 3.0 to 9.0, 4.0 to 9.0, 4.5 to 9.0, 5.0 to 9.0, 6.5 to 9.0, greater than 6.5 to 9.0, 4.5 to 8.0, 5.0 to 8.0, 7.0 to 9.0, 6.5 to 8.0, 6.5 to 7.5, or 7.0 to 8.0. When the pH of the pretreated nanocellulose satisfies the above range, it can be more advantageous in achieving a zeta potential within the desired range, and it is possible to achieve an excellent level of dispersibility and excellent mechanical properties.

In addition, the zeta potential of the pretreated nanocellulose may be controlled to the above range by surface treatment of the pretreated nanocellulose.

Specifically, the pretreated nanocellulose may be controlled to have a zeta potential within the above range by adjusting the content of terminal groups through surface treatment.

The pretreated nanocellulose may comprise sulfate at its terminal group. In such an event, the content of sulfate contained in the pretreated nanocellulose may be 400 mmole/kg or less, or 300 mmole/kg or less, for example, 100 mmole/kg to 400 mmole/kg, 150 mmole/kg to 350 mmole/kg, or 200 mmole/kg to 300 mmole/kg.

For example, the pretreated nanocellulose may be cellulose hydrogen sulphate sodium salt. The content of sulfate contained in the cellulose hydrogen sulfate sodium salt may be 220 mmole/kg to 280 mmole/kg or 240 mmole/kg to 270 mmole/kg.

When the content of sulfate contained in the pretreated nanocellulose satisfies the above range, it can be more advantageous in achieving a zeta potential within the desired range, and it is possible to achieve an excellent level of dispersibility and excellent mechanical properties.

Meanwhile, when the particle size of the pretreated nanocellulose is measured using the principle of dynamic light scattering at a temperature of 25°C and a measurement angle of 175°, the particle size of the pretreated nanocellulose may be 50 to 600 nm. Specifically, the particle size of the pretreated nanocellulose may be 50 to 550 nm, 50 to 500 nm, 50 to 450 nm, 100 to 400 nm, 100 to 350 nm, 100 to 300 nm, 100 to 250 nm, 120 to 300 nm, 150 to 300 nm, 150 to 250 nm, or 190 to 250 nm. When the particle size of the pretreated nanocellulose satisfies the above range, the crystallization speed can be controlled, and the dispersibility can be enhanced, as well as the strength, impact absorption energy, and post-notch tear strength can be enhanced at the same time, and the biodegradability and hydrolysability can also be further enhanced.

In addition, when the pretreated nanocellulose is measured using a ZETASIZER Nano ZS, the zeta potential of the pretreated nanocellulose may be -30 mV or less; and the particle size of the pretreated nanocellulose measured using the principle of dynamic light scattering at a temperature of 25°C and a measurement angle of 175° may be 50 to 600 nm.

When the zeta potential and particle size of the pretreated nanocellulose simultaneously satisfy the above ranges in the measurement of its physical properties, the moisture (water) contained in the polymer composition is bonded to the pretreated nanocellulose through hydrogen bonding, thereby enhancing the mechanical properties of the final polyester resin composition and a biodegradable polyester film comprising the same, such as strength, impact absorption energy,

and post-notch tear strength. Further, the moisture bonded to the pretreated nanocellulose in the polyester resin composition ionizes the pretreated nanocellulose during hydrolysis and/or biodegradation, thereby further enhancing the biodegradability and hydrolysability. In addition, even when functionalities are imparted by using various additives, the mechanical properties can be maintained at an appropriate level without deterioration.

The nanocellulose may be at least one selected from the group consisting of nanocrystalline cellulose, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

The nanocellulose may comprise an ionically bonded metal. The nanocrystalline cellulose may comprise a sodium element. In addition, the nanocrystalline cellulose may comprise a sulphate. The nanocrystalline cellulose may comprise a carboxylate. The nanocrystalline cellulose may be cellulose hydrogen sulphate sodium salt.

The nanocellulose may be represented by the following Formula A.

[Formula A] $[(\mathbf{C_6H_{10}O_5})_x\ \mathbf{SO_3Na}]_y$

Here, x may be 1 to 35, and y may be 1 to 10. Further, x may be 15 to 35, and y may be 1 to 10.

The nanocellulose may have a specific surface area of about 200 $m^2/g$ to about 600 $m^2/g$. The nanocellulose may have a specific surface area of about 250 $m^2/g$ to about 500 $m^2/g$.

The nanocellulose may have a molar mass of 50 g/mole or more, 70 g/mole or more, 100 g/mole or more, 120 g/mole or more, 140 g/mole or more, 150 g/mole or more, or 160 g/mole or more, and may be 1,000 g/mole or less, 800 g/mole or less, 700 g/mole or less, 500 g/mole or less, 300 g/mole or less, 250 g/mole or less, or 200 g/mole or less.

The pretreated nanocellulose may be one that has been pretreated by one or more of a bead mill, ultrasound, a stirrer, and high-speed dispersion.

Specifically, the nanocellulose may be pretreated, before being added, by a bead mill, by ultrasound, or by high-speed dispersion at about 1,000 rpm to about 1,500 rpm. Specifically, the nanocellulose may be obtained by pretreating nanocellulose dispersed in water with a bead mill or ultrasound.

First, the bead mill pretreatment may be carried out by a vertical mill or a horizontal mill as a wet milling apparatus. A horizontal mill is preferable in that the amount of beads that can be charged inside the chamber is greater, the machine's uneven wear is smaller, the wear of beads is smaller, and the maintenance and repair are more convenient, but it is not limited thereto.

The bead mill pretreatment may be carried out using one or more beads selected from the group consisting of zirconium, zircon, zirconia, quartz, and aluminum oxide.

Specifically, the bead mill pretreatment may be carried out using beads having a diameter of about 0.3 mm to about 1 mm. For example, the diameter of beads may be about 0.3 mm to about 0.9 mm, about 0.4 mm to about 0.8 mm, about 0.45 mm to about 0.7 mm, or about 0.45 mm to about 0.6 mm.

As the diameter of the beads satisfies the above range, it is possible to further enhance the dispersibility of the nanocellulose.

In addition, it is preferable from the viewpoint of transfer of sufficient energy that the bead mill pretreatment is carried out with beads having a specific gravity greater than that of the nanocellulose. For example, the beads may be one or more selected from the group consisting of zirconium, zircon, zirconia, quartz, and aluminum oxide, which have a specific gravity greater than that of the nanocellulose dispersed in water. Zirconium beads having a specific gravity greater than that of the nanocellulose dispersed in water by 4 times or more are preferred, but they are not limited thereto.

In addition, the ultrasound pretreatment is a method of physically crushing or pulverizing nanoparticles with waves generated by emitting ultrasound of 20 kHz into a solution.

The ultrasound pretreatment may be carried out for less than 30 minutes at a power of 30,000 J/s or less. For example, the ultrasound pretreatment may be carried out for 25 minutes or less, 20 minutes or less, or 18 minutes or less at a power of 25,000 J/s or less or 22,000 J/s or less. As the power and the operation time satisfy the above ranges, respectively, the effect of the ultrasound pretreatment, that is, the enhancement in dispersibility can be maximized.

The pretreated nanocellulose according to an embodiment may be one that has been pretreated with a bead mill or pretreated with ultrasound. Alternatively, the pretreated nanocellulose according to an embodiment may be one that has been pretreated with both a bead mill and ultrasound. In such an event, it is preferable that ultrasonic pretreatment is carried out after the bead mill pretreatment to prevent re-agglomeration, thereby enhancing the dispersibility.

In addition, the pretreated nanocellulose may be pretreated by high-speed dispersion. For example, the nanocellulose may be pretreated by high-speed dispersion at a speed of about 1,000 rpm to about 15,000 rpm.

In addition, the nanocellulose may be dispersed in a solvent and then pretreated by stirring at a speed of about 1,000 rpm to about 15,000 rpm using a stirrer.

Specifically, the pretreatment using a stirrer may be carried out by dispersing nanocellulose in a solvent and then stirring at a speed of about 1,000 rpm to about 10,000 rpm, about 1,000 rpm to about 9,000 rpm, about 1,000 rpm to about

8,000 rpm, about 1,000 rpm to about 7,000 rpm, about 1,000 rpm to about 5,000 rpm, or about 2,000 rpm to about 4,000 rpm, for 10 minutes to 200 minutes, 10 minutes to 150 minutes, 10 minutes to 120 minutes, 10 minutes to 100 minutes, 10 minutes to 50 minutes, 10 minutes to 40 minutes, 10 minutes to 30 minutes, or 20 minutes to 30 minutes.

The solvent used for the pretreatment may comprise water or a weakly acidic solvent. Specifically, it may comprise at least one selected from the group consisting of water, acetic acid, and sodium acetate, but it is not limited thereto. For example, the solvent may be water, and the pretreated nanocellulose may be nanocellulose dispersed in water. In addition, the solvent may be acetic acid, and the pretreated nanocellulose may be nanocellulose dispersed in acetic acid.

When the solvent is at least one selected from the group consisting of water, acetic acid, and sodium acetate, the absolute value of the zeta potential of the pretreated nanocellulose can be increased. In such a case, dispersibility is enhanced, and the desired mechanical properties and the enhancement effects of hydrolysability and biodegradability can be readily achieved. On the other hand, when other solvents such as ethylene glycol are used, it may be difficult to achieve a zeta potential within the above range, which may result in poor dispersibility and deterioration in mechanical properties as well as hydrolysability and biodegradability.

Since the nanocellulose comprises an ionically bonded metal, it has very high dispersibility in a solvent (e.g., water). The pretreated nanocellulose may be obtained as a nanocellulose dispersion, such as an aqueous dispersion, having a very high degree of dispersion. In the nanocellulose dispersion, the content (concentration) of the nanocellulose may be about 0.1% by weight to about 5% by weight, for example, about 0.5% by weight to about 5% by weight, or about 1% by weight to about 5% by weight. In such an event, as the concentration of nanocellulose dispersed in the solvent increases, the nanocellulose particles are more likely to aggregate from single particles into secondary particles. Therefore, it may be important to control the concentration of the nanocellulose as dispersed.

According to an embodiment, the amount of the pretreated nanocellulose added may be 0.01 to 7% by weight based on the total weight of the diol and the dicarboxylic acid. Specifically, the amount of the pretreated nanocellulose added may be 0.01 to 7% by weight, 0.01 to 5% by weight, 0.05 to 7% by weight, 0.05 to 5% by weight, 0.05 to 3% by weight, 0.05 to 2% by weight, 0.05 to 1% by weight, 0.05 to 0.9% by weight, 0.05 to 0.8% by weight, 0.05 to 0.5% by weight, 0.05 to 0.3% by weight, 0.05 to 0.2% by weight, or 0.05 to 0.1% by weight, based on the total weight of the diol, the aromatic dicarboxylic acid, and the aliphatic dicarboxylic acid. When the amount of the pretreated nanocellulose added is within the above range, the strength, impact absorption energy, and post-notch tear strength can be enhanced at the same time, and even when functionalities are imparted using various other additives, the mechanical properties can be maintained at an excellent level without deterioration.

In addition, the nanocellulose may be pretreated with a chain extender.

Since the nanocellulose has the above characteristics, it can be uniformly dispersed in the biodegradable polyester resin composition according to an embodiment.

Since the nanocellulose has the above characteristics, it is possible to enhance the mechanical properties of the biodegradable polyester resin composition according to an embodiment.

In addition, the nanocellulose can function as a crystal nucleating agent, thereby enhancing the crystallization speed of the biodegradable polyester resin composition according to an embodiment. As a result, the nanocellulose can raise the crystallization temperature of the biodegradable polyester resin composition according to an embodiment.

Since the nanocellulose has the above characteristics, the biodegradable polyester resin composition according to an embodiment can have an appropriate biodegradation speed.

Since the nanocellulose has the above characteristics, the biodegradable polyester resin composition according to an embodiment can have an appropriate hydrolysis speed.

Since the nanocellulose can control the production speed and production amount of an oligomer, the biodegradable polyester resin composition can comprise a specific content of the oligomer having a molecular weight within the specific range.

According to another embodiment, a step of adding a chain extender to the polymer composition whose moisture content has been adjusted and a step of adding pretreated nanocellulose thereto may be carried out.

More specifically, the chain extender may be added between the step of adjusting the moisture content and the step of adding the pretreated nanocellulose.

Alternatively, the chain extender, together with the pretreated nanocellulose, may be added to the polymer composition whose moisture content has been adjusted.

Alternatively, the chain extender may be added after the addition of the pretreated nanocellulose.

Meanwhile, a step of adding at least one inorganic substance selected from the group consisting of calcium carbonate ($CaCO_3$), such as light or heavy calcium carbonate, silica, talc, kaolin, barium sulfate, clay, calcium oxide, magnesium hydroxide, titanium oxide, carbon black, and glass fibers to the polymer composition whose moisture content has been adjusted may be further carried out.

The inorganic substance may be added between the step of adjusting the moisture content and the step of adding the pretreated nanocellulose.

Alternatively, the inorganic substance, together with the pretreated nanocellulose, may be added to the polymer composition whose moisture content has been adjusted.

Alternatively, the inorganic substance may be added after the addition of the pretreated nanocellulose. The inorganic substance may act as a nucleating agent and a color correcting agent.

The inorganic substance may be added in an amount of greater than 0 to 80% by weight based on the total weight of the diol and the dicarboxylic acid.

The inorganic substance may comprise calcium carbonate ($CaCO_3$). Specifically, the inorganic substance, for example, calcium carbonate ($CaCO_3$), may be added in an amount of greater than 0 to less than 50% by weight, 1 to 49% by weight, 2 to 49% by weight, 5 to 49% by weight, 7 to 49% by weight, 10 to 49% by weight, 5 to 20% by weight, 5 to 15% by weight, 20 to 49% by weight, or 25 to 49% by weight, based on the total weight of the diol, the aromatic dicarboxylic acid, and the aliphatic dicarboxylic acid.

When the inorganic substance is added within the above range, dispersibility can be enhanced, thereby preventing deterioration of the physical properties of a biodegradable polyester sheet, film, or molded article, and the hydrolysis speed of the final biodegradable polyester resin can be accelerated.

In addition, when a biodegradable polyester sheet, film, or molded article prepared from a biodegradable polyester resin composition is decomposed, an acidic component is generated. Since the acidic component and calcium carbonate react to generate carbon dioxide gas and water, the biodegradation rate to molecular units can be further enhanced, and calcium carbonate neutralizes the acidic component as shown in the following Reaction Scheme 1, thereby reducing environmental load and preventing soil acidification.

[Reaction Scheme 1] $CaCO_3$ (s) + $2H^+$ (aq) → $CO_2$ (g) + $H_2O$ (1) + $Ca^{2+}$ (aq)

Calcium carbonate may be natural calcium carbonate obtained by mechanically pulverizing or classifying natural calcium carbonate whose main component is $CaCO_3$, such as limestone, chalk, marble, shell, coral, and the like. It may be synthetic calcium carbonate produced by a chemical precipitation reaction or the like. Natural calcium carbonate is preferred from the viewpoint of increasing the surface area between the biodegradable particles and calcium carbonate and increasing the efficiency of biodegradation.

In addition, in order to increase the dispersibility or reactivity of calcium carbonate, the surface of calcium carbonate may be modified through physical treatment or chemical treatment. For example, the physical surface modification method may be plasma treatment, corona treatment, or the like; and the chemical surface modification method may be surface treatment with a coupling agent, such as a silane coupling agent and titanium coupling agent, or a surfactant.

The particle size of calcium carbonate is calculated from the measurement result of the specific surface area by the air permeation method using a specific surface area measuring device. The average particle diameter may be 0.1 μm to 10.0 μm, specifically, 0.5 μm to 5.0 μm or 1.0 μm to 3.0 μm.

If the particle size of the calcium carbonate is within the above range, when the biodegradable polyester resin and calcium carbonate are kneaded, the viscosity may be maintained within a certain range, and the uniformity of particle size may be increased, thereby facilitating the production of molded articles.

The specific surface area of calcium carbonate is measured by the nitrogen gas adsorption method. The specific surface area may be 0.1 $m^2/g$ to 10.0 $m^2/g$, specifically, 0.2 $m^2/g$ to 5.0 $m^2/g$ or 1.0 $m^2/g$ to 3.0 $m^2/g$.

If the specific surface area of the calcium carbonate is within the above range, the surface area for biodegradable reactions of the biodegradable polyester resin in a biodegradable polyester sheet, film, or molded article prepared from the biodegradable polyester resin composition is broadened, thereby favorably expediting the biodegradability in a natural environment, and the deterioration in processability of the biodegradable polyester resin composition due to blending of calcium carbonate can be reduced.

The degree of irregularity of the calcium carbonate is indicated based on the sphericity of calcium carbonate. The sphericity of the calcium carbonate may be 0.30 to 0.95, 0.50 to 0.93, or 0.60 to 0.90.

When the sphericity of the calcium carbonate is within the above range, there may be a lot of fine voids caused by very weak adhesion or non-adhesion at the interface between the biodegradable polyester resin and calcium carbonate, thereby enhancing the biodegradability in a natural environment. Further, the mechanical properties such as strength, impact absorption energy, and tear strength, as well as the molding processability of a final biodegradable polyester sheet, film, or molded article can be further enhanced.

Step 5: Step of obtaining a biodegradable polyester resin composition

Thereafter, pellets may be prepared from the polymer composition. Specifically, the polymer composition may be cooled to about 15°C or lower, about 10°C or lower, or about 6°C or lower, and the cooled polymer composition may then be cut to prepare pellets. Alternatively, the polymer composition may be cut at a temperature of about 40°C to about 60°C. The

cutting step may be carried out using a pellet cutter without limitations as long as it is commonly used in the art, and the pellets may have various shapes. Examples of the pellet cutting method may include an underwater cutting method or a strand cutting method.

In addition, the pellets may be subjected to additional post-processing.

Specifically, the post-processing may be carried out by melting the pellets with a heat source and performing re-extrusion. The post-treatment temperature may be about 230°C to about 270°C. The post-treatment temperature may be about 230°C to about 260°C. The post-treatment temperature may be about 240°C to about 265°C. The post-treatment temperature may be about 240°C to about 260°C. The post-treatment time may be about 30 seconds to about 3 minutes. The post-treatment time may be about 50 seconds to about 2 minutes. The post-treatment time may be about 1 minute to about 2 minutes.

Thereafter, the resin extruded by an extruder may be cooled, cut, and processed into post-processed pellets. That is, the resin extruded from an extruder may be reprocessed into pellets through the cutting step described above.

The crystallinity of the pellets can be enhanced in the above post-processing. In addition, the content of residues contained in the pellets may be adjusted in the above post-processing. In particular, the content of oligomers contained in the pellets may be adjusted by the above post-processing. The content of residual solvents contained in the pellets may be adjusted by the above post-processing. The post-treatment may appropriately adjust the mechanical properties, biodegradability, UV resistance, optical properties, or hydrolysability of the biodegradable polyester resin composition, biodegradable polyester sheet, biodegradable polyester film, or biodegradable polyester molded article.

**[Biodegradable polyester resin composition]**

In another embodiment, there is provided a biodegradable polyester resin composition, which is prepared by the above process for preparing a biodegradable polyester resin composition and has an intrinsic viscosity (IV) of 1.10 dl/g or more, wherein the content of carboxyl terminal groups in the biodegradable polyester resin composition is 50 eq/ton or less.

In another embodiment, there is provided a biodegradable polyester resin composition, which is prepared by the process for preparing a biodegradable polyester resin composition.

The biodegradable polyester resin composition according to an embodiment comprises a biodegradable polyester resin.

The biodegradable polyester resin composition according to an embodiment may comprise the biodegradable polyester resin alone or together with other resins or additives.

The biodegradable polyester resin comprises a diol and a dicarboxylic acid.

The biodegradable polyester resin comprises a diol, an aromatic dicarboxylic acid, and an aliphatic dicarboxylic acid.

The biodegradable polyester resin comprises a diol residue and a dicarboxylic acid residue. Specifically, the biodegradable polyester resin comprises a diol residue, an aromatic dicarboxylic acid residue, and an aliphatic dicarboxylic acid residue.

The diol residue is derived from the diol, the aromatic dicarboxylic acid residue is derived from the aromatic dicarboxylic acid, and the aliphatic dicarboxylic acid residue is derived from the aliphatic dicarboxylic acid. The biodegradable polyester resin comprises a diol component, an aromatic dicarboxylic acid component, and an aliphatic dicarboxylic acid component. Similarly, the diol component may be derived from the diol, the aromatic dicarboxylic acid component may be derived from the aromatic dicarboxylic acid, and the aliphatic dicarboxylic acid component may be derived from the aliphatic dicarboxylic acid.

In the description of the biodegradable polyester resin according to an embodiment, the diol residue may be represented as a diol, the aromatic dicarboxylic acid residue may be represented as an aromatic dicarboxylic acid, and the aliphatic dicarboxylic acid residue may be represented as an aliphatic dicarboxylic acid. In addition, the residue may be represented as the component.

The types of the diol, the aromatic dicarboxylic acid, and the aliphatic dicarboxylic acid are as described above, respectively.

In the biodegradable polyester resin, the molar ratio of the entire diol residues comprising the diol to the entire dicarboxylic acid residues comprising the aromatic dicarboxylic acid and the aliphatic dicarboxylic acid may be about 1:0.9 to about 1:1.1. The molar ratio of the entire diol residues to the entire dicarboxylic acid residues may be about 1:0.95 to about 1:1.05.

In the biodegradable polyester resin, the molar ratio of the aromatic dicarboxylic acid residue to the aliphatic dicarboxylic acid residue may be about 3:7 to about 7:3. In the biodegradable polyester resin, the molar ratio of the aromatic dicarboxylic acid residue to the aliphatic dicarboxylic acid residue may be about 3.3:6.7 to about 6.7:3.3. In the biodegradable polyester resin, the molar ratio of the aromatic dicarboxylic acid residue to the aliphatic dicarboxylic acid residue may be about 4:6 to about 6:4. In the biodegradable polyester resin, the molar ratio of the aromatic dicarboxylic

acid residue to the aliphatic dicarboxylic acid residue may be about 4.2:5.8 to about 5:5.

The biodegradable polyester resin may comprise a diol residue derived from 1,4-butanediol in an amount of about 90% by mole or more based on the entire diol. The biodegradable polyester resin may comprise a diol residue derived from 1,4-butanediol in an amount of about 95% by mole or more based on the entire diol. The biodegradable polyester resin may comprise a diol residue derived from 1,4-butanediol in an amount of about 98% by mole or more based on the entire diol.

The biodegradable polyester resin may comprise an aromatic dicarboxylic acid residue derived from terephthalic acid or dimethyl terephthalate in an amount of about 30% by mole to about 70% by mole based on the entire dicarboxylic acid. The biodegradable polyester resin may comprise an aromatic dicarboxylic acid residue derived from terephthalic acid or dimethyl terephthalate in an amount of about 35% by mole to about 65% by mole based on the entire dicarboxylic acid. The biodegradable polyester resin may comprise an aromatic dicarboxylic acid residue derived from terephthalic acid or dimethyl terephthalate in an amount of about 40% by mole to about 60% by mole based on the entire dicarboxylic acid. The biodegradable polyester resin may comprise an aromatic dicarboxylic acid residue derived from terephthalic acid or dimethyl terephthalate in an amount of about 43% by mole to about 55% by mole based on the entire dicarboxylic acid.

The biodegradable polyester resin may comprise an aliphatic dicarboxylic acid residue derived from adipic acid in an amount of about 30% by mole to about 70% by mole based on the entire dicarboxylic acid. The biodegradable polyester resin may comprise an aliphatic dicarboxylic acid residue derived from adipic acid in an amount of about 35% by mole to about 65% by mole based on the entire dicarboxylic acid. The biodegradable polyester resin may comprise an aliphatic dicarboxylic acid residue derived from adipic acid in an amount of about 40% by mole to about 60% by mole based on the entire dicarboxylic acid. The biodegradable polyester resin may comprise an aliphatic dicarboxylic acid residue derived from adipic acid in an amount of about 47% by mole to about 57% by mole based on the entire dicarboxylic acid.

In addition, the biodegradable polyester resin may comprise a first block and a second block. The biodegradable polyester resin may have a molecular structure in which the first block and the second block are alternately bonded.

The first block may comprise the diol residue and the aromatic dicarboxylic acid residue. The first block may be formed by an esterification reaction of the diol and the aromatic dicarboxylic acid. The first block may comprise only the diol residue and the aromatic dicarboxylic acid residue. The first block may comprise only repeat units formed by an esterification reaction of the diol and the aromatic dicarboxylic acid. That is, the first block may mean the sum of repeat units of the diol and the aromatic dicarboxylic acid before the aliphatic dicarboxylic acid is bonded.

The second block may comprise the diol residue and the aliphatic dicarboxylic acid residue. The second block may be formed by an esterification reaction of the diol and the aliphatic dicarboxylic acid. The second block may comprise only the diol residue and the aliphatic dicarboxylic acid residue. The second block may comprise only repeat units formed by an esterification reaction of the diol and the aliphatic dicarboxylic acid. That is, the second block may mean the sum of repeat units of the diol and the aliphatic dicarboxylic acid before the aromatic dicarboxylic acid is bonded.

In the biodegradable polyester resin, the ratio (X/Y) of the number (X) of the first blocks and the number (Y) of the second blocks may be about 0.5 to about 1.5. In the biodegradable polyester resin, the ratio (X/Y) of the number (X) of the first blocks and the number (Y) of the second blocks may be about 0.6 to about 1.4. In the biodegradable polyester resin, the ratio (X/Y) of the number (X) of the first blocks and the number (Y) of the second blocks may be about 0.7 to about 1.3. In the biodegradable polyester resin, the ratio (X/Y) of the number (X) of the first blocks and the number (Y) of the second blocks may be about 0.75 to about 1.2. In addition, in the biodegradable polyester resin, the ratio (X/Y) of the number (X) of the first blocks and the number (Y) of the second blocks may be about 0.8 to about 1.1. The number of the first blocks may be smaller than the number of the second blocks.

The number of the first blocks may be about 30 to about 300. The number of the first blocks may be about 40 to about 250. The number of the first blocks may be about 50 to about 220. The number of the first blocks may be about 60 to about 200. The number of the first blocks may be about 70 to about 200. The number of the first blocks may be about 75 to about 200.

The number of the first blocks may vary depending on the content of the aromatic dicarboxylic acid, the molecular weight of the biodegradable polyester resin, and the polymerization process. That is, as the molar ratio of the aromatic dicarboxylic acid increases, and as the molecular weight of the biodegradable polyester resin increases, the number of the first blocks may increase.

The number of the second blocks may be about 30 to about 300. The number of the second blocks may be about 40 to about 250. The number of the second blocks may be about 50 to about 220. The number of the second blocks may be about 60 to about 200. The number of the second blocks may be about 70 to about 200. The number of the second blocks may be about 75 to about 200.

The number of the second blocks may vary depending on the content of the aliphatic dicarboxylic acid, the molecular weight of the biodegradable polyester resin, and the polymerization process. That is, as the molar ratio of the aliphatic dicarboxylic acid increases, and as the molecular weight of the biodegradable polyester resin increases, the number of the second blocks may increase.

When the biodegradable polyester resin comprises the first block and the second block in the above ranges, respectively, the biodegradable polyester resin composition according to an embodiment can have appropriate mechanical strength and an appropriate level of biodegradability.

In addition, when the biodegradable polyester resin comprises the first block and the second block in the above ranges, respectively, the biodegradable polyester resin composition according to an embodiment can have enhanced flexibility and, at the same time, enhanced rigidity. As a result, the biodegradable polyester resin composition according to an embodiment can be readily used in injection-molded articles or the like. In addition, when the biodegradable polyester resin comprises the first block and the second block in the above ranges, respectively, the biodegradable polyester resin composition according to an embodiment can have appropriate durability against ultraviolet rays and, at the same time, an appropriate level of biodegradability.

The first block may be represented by the following Formula 1.

[Formula 1]

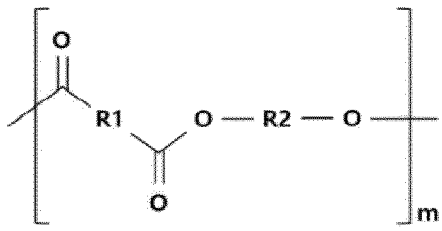

Here, R1 is a substituted or unsubstituted arylene group having 6 to 20 carbon atoms, R2 is a substituted or unsubstituted alkylene group having 1 to 20 carbon atoms, and m may be 1 to 20.

R1 may be a substituted or unsubstituted phenylene group, and R2 may be a butylene group.

The second block may be represented by the following Formula 2.

[Formula 2]

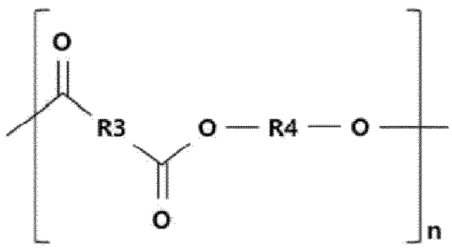

Here, R3 and R4 are each independently a substituted or unsubstituted alkylene group having 1 to 20 carbon atoms, and n may be 1 to 20.

R3 and R4 may each be a butylene group.

The biodegradable polyester resin may have a structure in which the first block and the second block are alternately bonded. The biodegradable polyester resin may be represented by the following Formula 3.

[Formula 3]

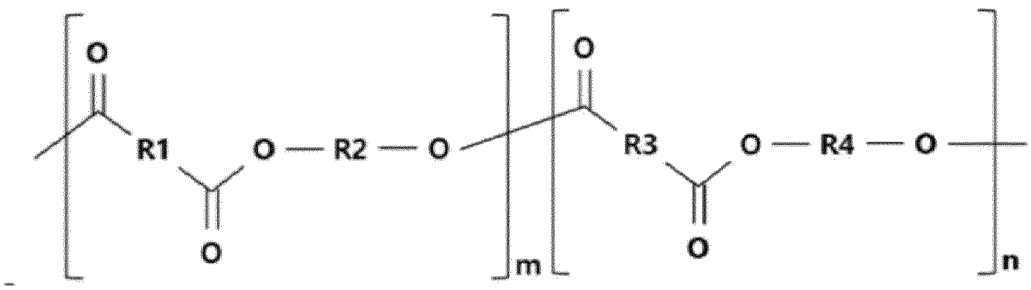

Here, R1 is a substituted or unsubstituted arylene group having 6 to 20 carbon atoms, R2 is a substituted or unsubstituted alkylene group having 1 to 20 carbon atoms, and m may be 1 to 20. In addition, R3 and R4 are each independently a substituted or unsubstituted alkylene group having 1 to 20 carbon atoms, and n may be 1 to 20.

The diol residue may comprise a residue of 1,4-butanediol or a derivative thereof, the aromatic dicarboxylic acid residue may comprise a residue of terephthalic acid or a derivative thereof, and the aliphatic dicarboxylic acid residue may comprise a residue of adipic acid or a derivative thereof. For example, the biodegradable polyester resin may comprise a first block comprising a residue of 1,4-butanediol or a derivative thereof and a residue of terephthalic acid or a derivative thereof.

Alternatively, the biodegradable polyester resin may comprise a first block comprising a residue of 1,4-butanediol or a derivative thereof and a residue of dimethyl terephthalate or a derivative thereof.

The biodegradable polyester resin may comprise a first block comprising a residue of 1,4-butanediol or a derivative thereof and a residue of dimethyl terephthalate or a derivative thereof.

The biodegradable polyester resin may comprise a second block comprising a residue of 1,4-butanediol or a derivative thereof and a residue of adipic acid or a derivative thereof.

Alternatively, the biodegradable polyester resin may comprise a second block comprising a residue of 1,4-butanediol or a derivative thereof and a residue of succinic acid or a derivative thereof.

The biodegradable polyester resin according to an embodiment may comprise a first block comprising a residue of 1,4-butanediol or a derivative thereof and a residue of terephthalic acid or a derivative thereof; and a second block comprising a residue of 1,4-butanediol or a derivative thereof and a residue of adipic acid or a derivative thereof.

The first block may be represented by the following Formula 4, and the second block may be represented by the following Formula 5.

[Formula 4]

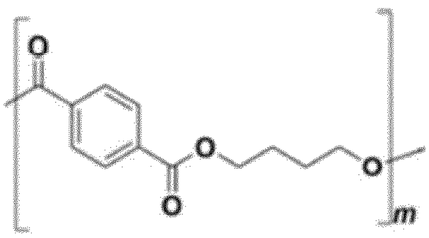

Here, m may be 1 to 20.

[Formula 5]

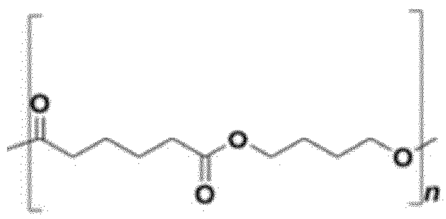

Here, n may be 1 to 20.

The biodegradable polyester resin may be represented by the following Formula 6.

[Formula 6]

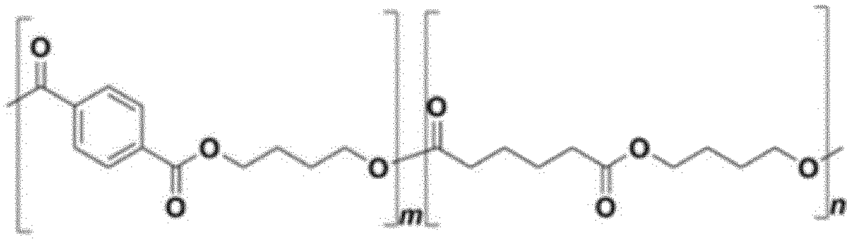

Here, m may be 1 to 20, and n may be 1 to 20.

When the first block and the second block satisfy the above configuration, it may be more advantageous for providing a biodegradable polyester resin composition, a biodegradable polyester sheet, a biodegradable polyester film, or a biodegradable polyester molded article having an excellent level of biodegradability and hydrolysability, along with enhanced physical properties.

Since the first block and the second block have the above characteristics, it is possible to enhance the mechanical properties of the biodegradable polyester resin composition according to an embodiment.

Since the first block and the second block have the above characteristics, the biodegradable polyester resin composition according to an embodiment can have an appropriate level of biodegradability.

Since the first block and the second block have the above characteristics, the biodegradable polyester resin composition according to an embodiment can have an appropriate level of hydrolysability.

The biodegradable polyester resin composition according to an embodiment may comprise the biodegradable polyester resin in a content of about 50% by weight or more based on the weight of the entire composition. The biodegradable polyester resin composition according to an embodiment may comprise the biodegradable polyester resin in a content of about 70% by weight or more based on the total weight of the composition. The biodegradable polyester resin composition according to an embodiment may comprise the biodegradable polyester resin in a content of about 80% by weight or more based on the weight of the entire composition.

The biodegradable polyester resin composition according to an embodiment may comprise the biodegradable polyester resin in a content of about 90% by weight or more based on the total weight of the composition. The biodegradable polyester resin composition according to an embodiment may comprise the biodegradable polyester resin in a content of about 95% by weight or more based on the weight of the entire composition. The biodegradable polyester resin composition according to an embodiment may comprise the biodegradable polyester resin in a content of about 99% by weight or more based on the total weight of the composition.

The biodegradable polyester resin composition may have an intrinsic viscosity (IV) of about 1.10 dl/g or more, about 1.20 dl/g or more, about 1.30 dl/g or more, about 1.40 dl/g or more, about 1.45 dl/g or more, about 1.46 dl/g or more, about 1.48 dl/g or more, about 1.50 dl/g or more, or greater than about 1.50 dl/g. For example, the intrinsic viscosity (IV) of the biodegradable polyester resin composition may be about 1.10 dl/g to about 2.00 dl/g, about 1.20 dl/g to about 1.80 dl/g, 1.30 dl/g to about 1.80 dl/g, 1.40 dl/g to about 1.80 dl/g, 1.43 dl/g to about 1.80 dl/g, 1.45 dl/g to about 1.80 dl/g, 1.46 dl/g to about 1.80 dl/g, 1.48 dl/g to about 1.70 dl/g, or 1.48 dl/g to about 1.60 dl/g.

The intrinsic viscosity may be measured using the intrinsic viscosity measurement method described above. However, a sample solution may be prepared using the biodegradable polyester resin composition instead of the polymer composition, which is then measured using a viscosity tube.

As the biodegradable polyester resin composition satisfies a viscosity within the above range, it can be applied to various molding processes such as blow molding, injection molding, and extrusion molding that require high or ultra-high viscosity conditions. It can also enhance processability and productivity at the same time.

In addition, the biodegradable polyester resin composition may have a content of carboxyl terminal groups of 50 eq/ton or less, less than 50 eq/ton, about 48 eq/ton or less, about 45 eq/ton or less, about 40 eq/ton or less, about 38 eq/ton or less, about 37 eq/ton or less, about 36 eq/ton or less, about 35 eq/ton or less, or about 30 eq/ton or less. Specifically, the content of carboxyl terminal groups in the biodegradable polyester resin composition may be 20 eq/ton to 50 eq/ton, 20 eq/ton to 45 eq/ton, 20 eq/ton to 40 eq/ton, 25 eq/ton to 40 eq/ton, 25 eq/ton to 36 eq/ton, or 28 eq/ton to 36 eq/ton.

The content of carboxyl terminal groups in the biodegradable polyester resin composition may be measured by the same method as the measurement of the content of carboxyl terminal groups in the polymer composition.

When the content of the carboxyl terminal group satisfies the above range, when the biodegradable polyester resin composition according to an embodiment is extruded to form a molded article, deterioration can be prevented, and enhanced mechanical properties can be achieved.

The biodegradable polyester resin composition according to an embodiment may comprise an oligomer.

The oligomer may have a number average molecular weight (Mn) of about 400 to about 1,300 g/mole.

The oligomer may be contained in the biodegradable polyester resin composition according to an embodiment in an amount of about 5,000 ppm to about 20,000 ppm based on the total weight of the biodegradable polyester resin composition. The oligomer may be contained in the biodegradable polyester resin composition according to an embodiment in an amount of about 5,000 ppm to about 15,000 ppm based on the total weight of the biodegradable polyester resin composition. The oligomer may be contained in the biodegradable polyester resin composition according to an embodiment in an amount of about 7,000 ppm to about 15,000 ppm based on the total weight of the biodegradable polyester resin composition.

The oligomer may be a reaction product of at least two of the diol, the aromatic dicarboxylic acid, and the aliphatic dicarboxylic acid. For example, the oligomer may be a reaction product of 1,4-butanediol, terephthalic acid, and adipic acid.

The oligomer may comprise an oligomer in which the molar ratio of the aliphatic dicarboxylic acid is higher than the molar ratio of the aromatic dicarboxylic acid.

In the oligomer, the ratio of an oligomer comprising a relatively larger amount of the aliphatic dicarboxylic acid may be higher than the ratio of an oligomer comprising a relatively larger amount of the aromatic dicarboxylic acid.

The oligomer may comprise a first oligomer, a second oligomer, a third oligomer, and a fourth oligomer.

The oligomer may comprise at least one selected from the group consisting of a first oligomer having a number average molecular weight (Mn) of 415 to 425 g/mole; a second oligomer having a number average molecular weight (Mn) of 620 to 630 g/mole; a third oligomer having a number average molecular weight (Mn) of 640 to 650 g/mole; and a fourth oligomer having a number average molecular weight (Mn) of 840 to 850 g/mole.

Specifically, the first oligomer may have a number average molecular weight (Mn) of 415 to 425 g/mole. The first oligomer may have a number average molecular weight (Mn) of 419 to 424 g/mole.

The first oligomer may be a reaction product formed by a reaction of two molecules of 1,4-butanediol, one molecule of terephthalic acid, and one molecule of adipic acid. That is, the first oligomer may comprise 1,4-butanediol, terephthalic acid, and adipic acid at a molar ratio of 2:1:1. In addition, the first oligomer may have four ester bonds. The first oligomer may have a ring structure.

The first oligomer may comprise one first unit represented by the following Formula 7 and one second unit represented by the following Formula 8.

[Formula 7]

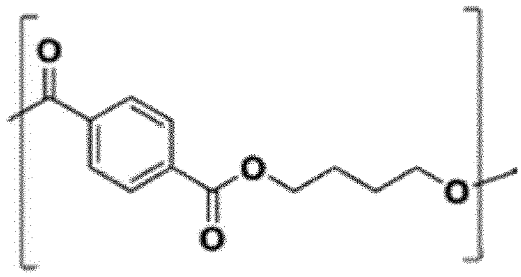

[Formula 8]

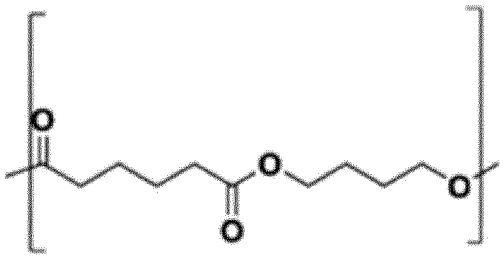

In addition, the first oligomer may have a ring structure. The first oligomer may comprise the first unit and the second unit and may have a ring structure.

The first oligomer may be represented by the following Formula 9.

[Formula 9]

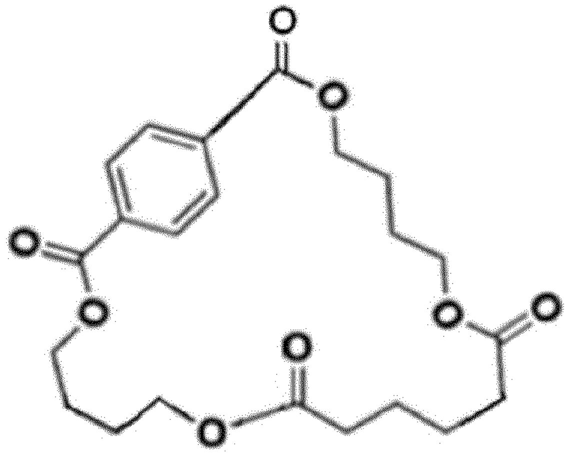

The content of the first oligomer may be about 1,000 ppm to about 6,000 ppm based on the total weight of the biodegradable polyester resin composition according to an embodiment. The content of the first oligomer may be about 1,500 ppm to about 5,000 ppm based on the total weight of the biodegradable polyester resin composition according to an embodiment. The content of the first oligomer may be about 2,000 ppm to about 4,500 ppm based on the total weight of the biodegradable polyester resin composition according to an embodiment. The content of the first oligomer may be about 2,500 ppm to about 5,000 ppm based on the total weight of the biodegradable polyester resin composition according to an embodiment. The content of the first oligomer may be about 3,000 ppm to about 5,000 ppm based on the total weight of the biodegradable polyester resin composition according to an embodiment.

The second oligomer may have a number average molecular weight (Mn) of 620 to 630 g/mole. The second oligomer may have a number average molecular weight (Mn) of 621 to 626 g/mole.

The second oligomer may be a reaction product formed by a reaction of three molecules of 1,4-butanediol, one molecule of terephthalic acid, and two molecules of adipic acid. That is, the second oligomer may comprise 1,4-butanediol, terephthalic acid, and adipic acid at a molar ratio of 3:1:2. In addition, the second oligomer may have six ester bonds. The second oligomer may comprise one of the first unit represented by the above Formula 7 and two of the second unit represented by the above Formula 8.

The second oligomer may be selected from at least one of the group consisting of the following Formula 10, Formula 11, and Formula 12.

[Formula 10]

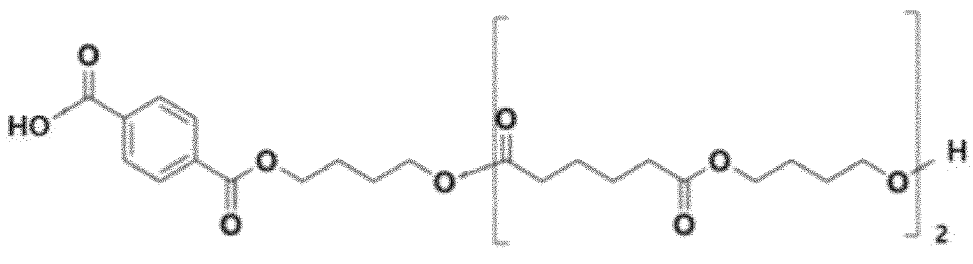

[Formula 11]

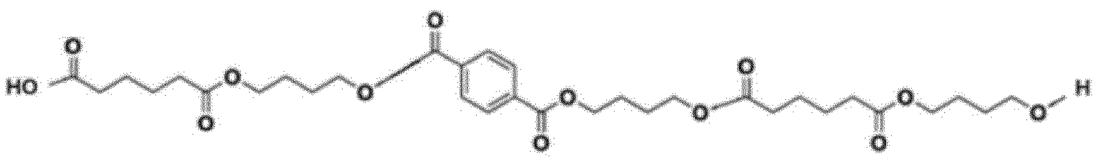

[Formula 12]

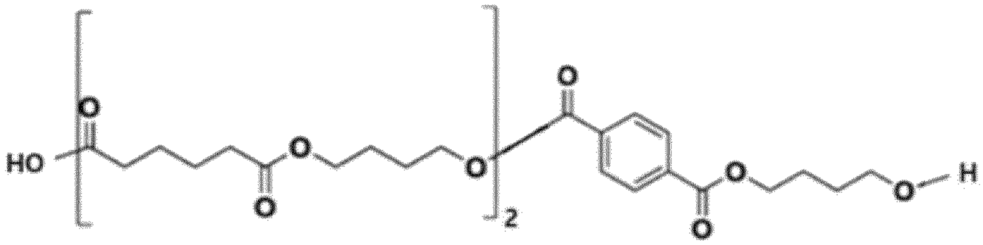

The content of the second oligomer may be about 1,000 ppm to about 5,000 ppm based on the total weight of the biodegradable polyester resin composition according to an embodiment. The content of the second oligomer may be about 1,200 ppm to about 4,500 ppm based on the total weight of the biodegradable polyester resin composition according to an embodiment. The content of the second oligomer may be about 1,500 ppm to about 4,000 ppm based on the total weight of the biodegradable polyester resin composition according to an embodiment. The content of the second oligomer may be about 2,000 ppm to about 4,000 ppm based on the total weight of the biodegradable polyester resin composition according to an embodiment. The content of the second oligomer may be about 2,000 ppm to about 3,800 ppm based on the total weight of the biodegradable polyester resin composition according to an embodiment.

The third oligomer may have a number average molecular weight (Mn) of 640 to 650 g/mole. The third oligomer may have a number average molecular weight (Mn) of 641 to 645 g/mole.

The third oligomer may be a reaction product formed by a reaction of three molecules of 1,4-butanediol, two molecules of terephthalic acid, and one molecule of adipic acid. That is, the third oligomer may comprise 1,4-butanediol, terephthalic acid, and adipic acid at a molar ratio of 3:2:1. In addition, the third oligomer may have six ester bonds.

The third oligomer may comprise two of the first unit represented by the above Formula 7 and one of the second unit represented by the above Formula 8.

The third oligomer may be selected from at least one of the group consisting of the following Formula 13, Formula 14, and Formula 15.

[Formula 13]

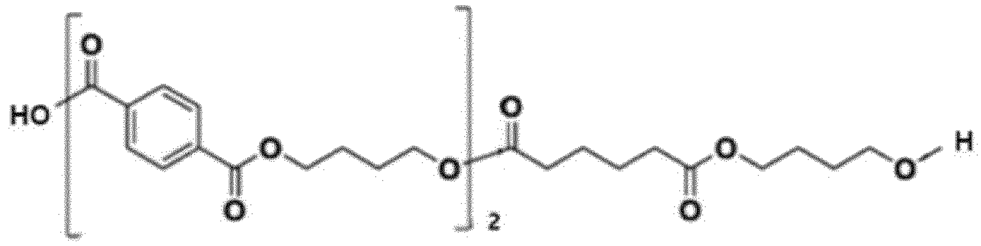

[Formula 14]

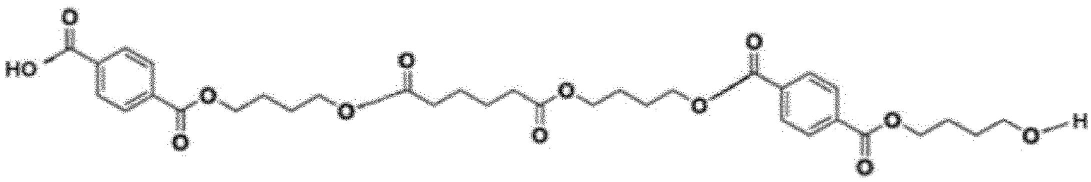

[Formula 15]

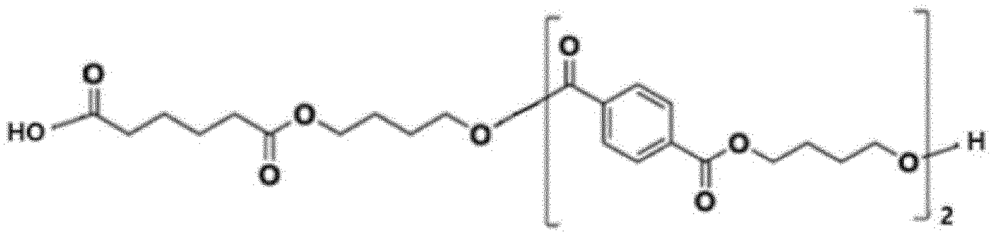

The content of the third oligomer may be about 300 ppm to about 4,000 ppm based on the total weight of the biodegradable polyester resin composition according to an embodiment. The content of the third oligomer may be about 500 ppm to about 3,000 ppm based on the total weight of the biodegradable polyester resin composition according to an embodiment. The content of the third oligomer may be about 500 ppm to about 2,500 ppm based on the total weight of the biodegradable polyester resin composition according to an embodiment. The content of the third oligomer may be about 500 ppm to about 2,000 ppm based on the total weight of the biodegradable polyester resin composition according to an embodiment. The content of the third oligomer may be about 500 ppm to about 1,900 ppm based on the total weight of the biodegradable polyester resin composition according to an embodiment.

The fourth oligomer may have a number average molecular weight (Mn) of 840 to 850 g/mole. The fourth oligomer may have a number average molecular weight (Mn) of 841 to 845 g/mole.

The fourth oligomer may comprise a reaction product formed by a reaction of four molecules of 1,4-butanediol, two molecules of terephthalic acid, and two molecules of adipic acid. That is, the fourth oligomer may comprise 1,4-butanediol, terephthalic acid, and adipic acid at a molar ratio of 4:2:2. In addition, the fourth oligomer may have eight ester bonds.

The fourth oligomer may comprise two of the first unit represented by the above Formula 7 and two of the second unit represented by the above Formula 8.

In addition, the fourth oligomer may comprise at least one of the following bond structures.

1) first unit - first unit - second unit - second unit
2) first unit - second unit - first unit - second unit
3) first unit - second unit - second unit - first unit
4) second unit - first unit - first unit - second unit

The content of the fourth oligomer may be about 300 ppm to about 3,500 ppm based on the total weight of the biodegradable polyester resin composition according to an embodiment. The content of the fourth oligomer may be about 500 ppm to about 3,000 ppm based on the total weight of the biodegradable polyester resin composition according to an embodiment. The content of the fourth oligomer may be about 700 ppm to about 2,500 ppm based on the total weight of the biodegradable polyester resin composition according to an embodiment. The content of the fourth oligomer may be about 800 ppm to about 2,300 ppm, about 1,000 ppm to about 2,300 ppm, about 1,100 ppm to about 2,300 ppm, or about 1,200 ppm to about 2,300 ppm, based on the total weight of the biodegradable polyester resin composition according to an embodiment.

The oligomer may comprise a first oligomer, a second oligomer, a third oligomer, and a fourth oligomer, and the content of the oligomer may be about 5,000 ppm to 15,000 ppm, about 6,000 ppm to about 13,500 ppm, or about 7,000 ppm to 13,000 ppm, based on the entire biodegradable polyester resin composition.

Specifically, the oligomer may comprise a first unit represented by the above Formula 7 and a second unit represented by the above Formula 8, the first oligomer may comprise one of the first unit and one of the second unit, the second oligomer may comprise one of the first unit and two of the second unit, the third oligomer may comprise two of the first unit and one of the second unit, and the fourth oligomer may comprise two of the first unit and two of the second unit. In such a case, it may be advantageous for achieving the desired level of biodegradability and hydrolysability.

The ratio of the first oligomer based on the total weight of the oligomer (the content of the first oligomer to the content of the entire oligomer) may be about 0.20 to about 0.50. The ratio of the first oligomer based on the total weight of the oligomer may be about 0.20 to about 0.48. The ratio of the first oligomer based on the total weight of the oligomer may be about 0.25 to about 0.48. The ratio of the first oligomer based on the total weight of the oligomer may be about 0.30 to about 0.47.

Alternatively, the ratio of the second oligomer based on the total weight of the oligomer (the content of the second oligomer to the content of the entire oligomer) may be about 0.15 to about 0.45. The ratio of the second oligomer based on the total weight of the oligomer may be about 0.20 to 0.40. The ratio of the second oligomer based on the total weight of the oligomer may be about 0.23 to 0.37. The ratio of the second oligomer based on the total weight of the oligomer may be about 0.25 to 0.36.

The ratio of the second oligomer based on the total weight of the oligomer (the content of the second oligomer to the content of the entire oligomer) may be about 0.10 to about 0.45. The ratio of the second oligomer based on the total weight of the oligomer may be about 0.12 to about 0.40. The ratio of the second oligomer based on the total weight of the oligomer may be about 0.20 to about 0.37. The ratio of the second oligomer based on the total weight of the oligomer may be about 0.25 to 0.36.

Alternatively, the ratio of the second oligomer based on the total weight of the oligomer (the content of the second oligomer to the content of the entire oligomer) may be about 0.15 to about 0.45. The ratio of the second oligomer based on the total weight of the oligomer may be about 0.20 to 0.40. The ratio of the second oligomer based on the total weight of the oligomer may be about 0.23 to 0.37. The ratio of the second oligomer based on the total weight of the oligomer may be

about 0.25 to 0.36.

The ratio of the third oligomer based on the total weight of the oligomer (the content of the third oligomer to the content of the entire oligomer) may be about 0.05 to about 0.40. The ratio of the third oligomer based on the total weight of the oligomer may be about 0.07 to about 0.30. The ratio of the third oligomer based on the total weight of the oligomer may be about 0.07 to about 0.20. The ratio of the third oligomer based on the total weight of the oligomer may be about 0.07 to about 0.18.

Alternatively, the ratio of the third oligomer based on the total weight of the oligomer (the content of the third oligomer to the content of the entire oligomer) may be about 0.05 to about 0.25. The ratio of the third oligomer based on the total weight of the oligomer may be about 0.06 to 0.20. The ratio of the third oligomer based on the total weight of the oligomer may be about 0.07 to 0.18. The ratio of the third oligomer based on the total weight of the oligomer may be about 0.07 to 0.17.

The ratio of the fourth oligomer based on the total weight of the oligomer (the content of the fourth oligomer to the content of the entire oligomer) may be about 0.05 to about 0.30. The ratio of the fourth oligomer based on the total weight of the oligomer may be about 0.07 to about 0.25. The ratio of the fourth oligomer based on the total weight of the oligomer may be about 0.08 to about 0.22. The ratio of the fourth oligomer based on the total weight of the oligomer may be about 0.09 to about 0.20.

The ratio of the second oligomer relative to the first oligomer (the content of the second oligomer to the content of the first oligomer) may be about 0.5 to about 1.2. The ratio of the second oligomer relative to the first oligomer may be about 0.55 to about 1.0. The ratio of the second oligomer relative to the first oligomer may be about 0.55 to about 0.95. The ratio of the second oligomer relative to the first oligomer may be about 0.58 to about 0.98. The ratio of the second oligomer relative to the first oligomer may be about 0.6 to about 0.95. The ratio of the second oligomer relative to the first oligomer may be about 0.55 to about 0.9.

The ratio of the third oligomer relative to the first oligomer (the content of the third oligomer to the content of the first oligomer) may be about 0.1 to about 0.6. The ratio of the third oligomer relative to the first oligomer may be about 0.12 to about 0.50. The ratio of the third oligomer relative to the first oligomer may be about 0.12 to about 0.47. The ratio of the third oligomer relative to the first oligomer may be about 0.15 to about 0.46. The ratio of the third oligomer relative to the first oligomer may be about 0.1 to about 0.50. The ratio of the third oligomer relative to the first oligomer may be about 0.15 to about 0.45. The ratio of the third oligomer relative to the first oligomer may be about 0.15 to about 0.42.

The ratio of the fourth oligomer relative to the first oligomer (the content of the fourth oligomer to the content of the first oligomer) may be about 0.25 to about 0.65. The ratio of the fourth oligomer relative to the first oligomer may be about 0.25 to about 0.60. The ratio of the fourth oligomer relative to the first oligomer may be about 0.28 to about 0.60. The ratio of the fourth oligomer relative to the first oligomer may be about 0.30 to about 0.58. The ratio of the fourth oligomer relative to the first oligomer may be about 0.27 to about 0.65. The ratio of the fourth oligomer relative to the first oligomer may be about 0.30 to about 0.60. The ratio of the fourth oligomer relative to the first oligomer may be about 0.30 to about 0.56.

The second oligomer may be contained in the oligomer in a higher content than that of the third oligomer.

The ratio of the third oligomer relative to the second oligomer (the content of the third oligomer to the content of the second oligomer) may be about 0.2 to about 0.6. The ratio of the third oligomer relative to the second oligomer (the content of the third oligomer to the content of the second oligomer) may be about 0.24 to about 0.55. The ratio of the third oligomer relative to the second oligomer (the content of the third oligomer to the content of the second oligomer) may be about 0.27 to about 0.55. The ratio of the third oligomer relative to the second oligomer (the content of the third oligomer to the content of the second oligomer) may be about 0.24 to about 0.53. The ratio of the third oligomer relative to the second oligomer (the content of the third oligomer to the content of the second oligomer) may be about 0.27 to about 0.51.

The molecular weight and content of the oligomer may be measured by liquid chromatography mass spectrometry.

First, a biodegradable polyester resin composition according to an embodiment, or a biodegradable polyester film according to an embodiment, is pulverized and classified to prepare a powder having an average particle size (D50) of about 50 μm. Thereafter, the powder is immersed in an organic solvent, such as acetonitrile, at room temperature for about 24 hours. Thereafter, the supernatant of the organic solvent is sampled, and the molecular weight and content of the oligomer may then be measured by liquid chromatography mass spectrometry. In addition, in order to measure the content of the oligomer, dibutyl phthalate is used as a standard substance, and a calibration curve may be obtained.

The oligomer may be a hydrophilicity modifier capable of adjusting the hydrophilicity and/or hydrophobicity of the biodegradable polyester resin composition according to an embodiment. As a result, the oligomer may appropriately adjust the hydrolysability of the biodegradable polyester resin composition according to an embodiment. The oligomer may be a hydrolysis regulator that appropriately adjusts the hydrolysability of the biodegradable polyester resin composition according to an embodiment.

In addition, the oligomer may appropriately adjust the biodegradability of the biodegradable polyester resin composition according to an embodiment. The oligomer may be a biodegradation regulator that appropriately adjusts the biodegradability of the biodegradable polyester resin composition according to an embodiment.

As the biodegradable polyester resin composition according to an embodiment comprises the oligomer in the above range, it can have an appropriate level of hydrolysability and biodegradability. In particular, as the biodegradable polyester resin composition according to an embodiment comprises the first oligomer, the second oligomer, the third oligomer, and the fourth oligomer in the above ranges, it can have an appropriate level of hydrolysability and biodegradability.

In addition, the biodegradable polyester resin composition comprises an oligomer having a molecular weight in the above specific range. In particular, when an oligomer having a low molecular weight, for example, a first oligomer having a number average molecular weight (Mn) of 415 to 425 g/mole, is employed in an amount greater than the amount of a second oligomer having a number average molecular weight (Mn) of 620 to 630 g/mole, a third oligomer having a number average molecular weight (Mn) of 640 to 650 g/mole, a fourth oligomer having a number average molecular weight (Mn) of 840 to 850 g/mole, or higher oligomers, the biodegradability can be further enhanced due to a low crystallinity of the biodegradable polyester resin composition.

In addition, the higher the content of ethylene in the oligomer, the more the biodegradability can be enhanced.

As described above, the oligomer may adjust the biodegradability of the biodegradable polyester resin composition according to an embodiment. As a result, the biodegradable polyester resin composition according to an embodiment can have an appropriate level of hydrolysability and biodegradability.

As the biodegradable polyester resin composition according to an embodiment comprises the oligomer having the above characteristics, it can have a low level of initial hydrolysability, a high level of late hydrolysability, and a high level of late biodegradability.

As a result, the biodegradable polyester resin composition according to an embodiment can be advantageously applied to packaging films. That is, a film prepared from the biodegradable polyester resin composition according to an embodiment may be used for general purposes such as packaging. In such an event, since the biodegradable polyester resin composition according to an embodiment has a low level of initial hydrolysability, the biodegradable polyester film can maintain a certain level or higher of mechanical and chemical properties during a normal period of use by a user.

In addition, as the biodegradable polyester resin composition according to an embodiment comprises the oligomer having the above characteristics, it can have a high level of late biodegradability. As a result, a film prepared using the biodegradable polyester resin composition according to an embodiment can be readily decomposed when discarded after use.

In addition, as the biodegradable polyester resin composition according to an embodiment comprises the oligomer having the above characteristics, decomposition by surrounding moisture and decomposition by microorganisms can complement each other. As a result, the biodegradable polyester resin composition according to an embodiment can have a high level of biodegradability while having a low level of initial hydrolysability.

In addition, as the biodegradable polyester resin composition according to an embodiment comprises the oligomer having the above characteristics, it can have a biodegradability of about 1.5 or more per aliphatic carboxylic acid. That is, the biodegradable polyester resin composition according to an embodiment has a high level of biodegradability while having a low content of aliphatic carboxylic acid. As a result, as the biodegradable polyester resin composition according to an embodiment has a relatively high content of aromatic carboxylic acid, it can have a high hydrolysis resistance in the initial stage and a high level of biodegradability in the later stage.

The content of moisture in the biodegradable polyester resin composition according to an embodiment may be 500 ppm or less, 400 ppm or less, or 300 ppm or less, and may be 100 ppm to 500 ppm, 100 ppm to 400 ppm, 100 ppm to 300 ppm, 200 ppm to 500 ppm, 200 ppm to 400 ppm, 200 ppm to 300 ppm, 250 ppm to 400 ppm, 250 ppm to 350 ppm, or 250 ppm to 300 ppm, based on the total weight of the biodegradable polyester resin composition. When the content of moisture in the biodegradable polyester resin composition satisfies the above range, it is possible to increase the viscosity of the biodegradable polyester resin composition, whereby it can be applied to various molding processes such as blow molding, injection molding, and extrusion molding that require high or ultra-high viscosity conditions. It can also enhance processability and productivity at the same time.

The measurement of the content of moisture in the biodegradable polyester resin composition is as described above.

The biodegradable polyester resin composition according to an embodiment may comprise a chain extender. The type, content, and specific characteristics of the chain extender are as described above.

The biodegradable polyester resin composition according to an embodiment may comprise nanocellulose. The biodegradable polyester resin composition may comprise pretreated nanocellulose. The biodegradable polyester resin composition may comprise nanocellulose, pretreated nanocellulose, or a combination thereof.

The type, content, and specific characteristics (physical properties) of the nanocellulose or pretreated nanocellulose are as described above.

The biodegradable polyester resin composition according to an embodiment may comprise at least one inorganic substance selected from the group consisting of calcium carbonate ($CaCO_3$), such as light or heavy calcium carbonate, silica, talc, kaolin, barium sulfate, clay, calcium oxide, magnesium hydroxide, titanium oxide, carbon black, and

glass fibers.

The biodegradable polyester resin composition according to an embodiment comprises greater than 0 to 80% by weight of the inorganic substance based on the total weight of the diol and the dicarboxylic acid.

Specifically, the inorganic substance may comprise calcium carbonate ($CaCO_3$), and the content and specific characteristics (physical properties) of the calcium carbonate ($CaCO_3$) are as described above.

The biodegradable polyester resin composition according to an embodiment may comprise a reaction accelerator.

The type, content, and specific characteristics of the reaction accelerator are as described above.

The biodegradable polyester resin composition according to an embodiment can maintain mechanical and chemical properties at least at a certain level during the period of use. At the same time, since the biodegradable polyester resin composition according to an embodiment has a high level of late hydrolysability, it can be readily decomposed in a river or the sea. That is, the biodegradable polyester resin composition according to an embodiment can solve environmental problems such as the marine plastic problem.

**[Biodegradable polyester film and process for preparing the same]**

In an embodiment, there is provided a biodegradable polyester sheet or film, which comprises the biodegradable polyester resin composition.

In another embodiment, there is provided a process for preparing a biodegradable polyester film, which comprises preparing a biodegradable polyester resin composition; and melt-extruding the biodegradable polyester resin composition, wherein the step of preparing a biodegradable polyester resin composition comprises reacting a diol, an aromatic dicarboxylic acid, and an aliphatic dicarboxylic acid to obtain a polymer composition; and adjusting the content of moisture in the polymer composition to obtain a biodegradable polyester resin composition, wherein the content of moisture in the polymer composition whose moisture content has been adjusted is 100 ppm to 500 ppm based on the total weight of the polymer composition whose moisture content has been adjusted, and the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

The biodegradable polyester film may have a thickness of about 5 μm to about 300 μm. For example, the thickness of the biodegradable polyester film may be about 5 μm to about 180 μm, about 5 μm to about 160 μm, about 10 μm to about 150 μm, about 15 μm to about 130 μm, about 20 μm to about 100 μm, about 25 μm to about 80 μm, or about 25 μm to about 60 μm.

The biodegradable polyester film according to an embodiment may have substantially the same level of hydrolysability and biodegradability as that of the biodegradable polyester resin composition described above.

Meanwhile, the biodegradable polyester film may be prepared using the biodegradable polyester resin composition or biodegradable polyester resin pellets.

Specifically, the process for preparing a biodegradable polyester film may comprise preparing a biodegradable polyester resin composition according to an embodiment and drying and melt-extruding the biodegradable polyester resin composition.

In the step of drying and melt-extruding the biodegradable polyester resin composition, the drying may be carried out at about 60°C to about 100°C for about 2 hours to about 12 hours. Specifically, the drying may be carried out at about 65°C to about 95°C, about 70°C to about 90°C, or about 75°C to about 85°C, for about 3 hours to about 12 hours or about 4 hours to about 10 hours.

As the drying process conditions of pellets satisfy the above ranges, it is possible to further enhance the quality of a biodegradable polyester film or molded article thus produced. The content of moisture in the biodegradable polyester resin composition that has been subjected to the drying step may be about 500 ppm or less based on the total weight of the biodegradable polyester resin composition.

In the step of drying and melt-extrusion, the melt-extrusion may be carried out at a temperature of about 250°C or lower. For example, the melt-extrusion may be carried out at a temperature of about 245°C or lower, about 220°C or lower, about 215°C or lower, specifically, about 100°C to about 250°C, about 120°C to about 245°C, or about 130°C to about 215°C. The melt-extrusion may be carried out by, for example, a blown film process.

Meanwhile, in an embodiment, a biodegradable polyester sheet may be prepared from the biodegradable polyester resin composition.

For example, the biodegradable polyester sheet may be prepared using the biodegradable polyester resin composition or pellets comprising the biodegradable polyester resin composition.

Specifically, the biodegradable polyester resin composition is put in, for example, a stainless steel (SUS) mold and maintained at about 150 to 300°C under a pressure of 5 to 20 MPa for 1 minute to 30 minutes using a hot press. It is then taken out and immediately cooled in water at 18°C to 25°C for about 10 seconds to 5 minutes to obtain a biodegradable polyester sheet.

A biodegradable polyester sheet or film obtained using the biodegradable polyester resin composition can satisfy mechanical properties such as excellent strength, impact absorption energy, and tear strength in a specific range or higher.
The physical properties of the biodegradable polyester sheet obtained using the biodegradable polyester resin composition may satisfy the ranges described in the physical properties of the biodegradable polyester film. The physical properties of the biodegradable polyester film may satisfy the ranges described in the physical properties of the biodegradable polyester sheet.
The biodegradable polyester sheet obtained using the biodegradable polyester resin composition may have a strength of 30 MPa or more, 32 MPa or more, or 35 MPa or more, and may be 50 MPa or less, 45 MPa or less, 42 MPa or less, or 40 MPa or less. The biodegradable polyester sheet is cut to a specimen of 100 mm in length and 15 mm in width and mounted to a universal testing machine (UTM) of INSTRON at a chuck spacing of 50 mm in accordance with the ASTM D638 V-type standard. Testing is performed at a tensile speed of 100 mm/minute at a room temperature of 25°C, and the strength is measured with a program installed in the device.
The biodegradable polyester sheet obtained using the biodegradable polyester resin composition may have an impact absorption energy of 4.9 KJ/m or more, 5.0 KJ/m or more, 5.1 KJ/m or more, or 5.2 KJ/m or more, and may be 7.0 KJ/m or less, 6.8 KJ/m or less, 6.5 KJ/m or less, or 6.0 KJ/m or less.
The biodegradable polyester resin composition is made into a biodegradable polyester sheet specimen having an area of 10 cm × 10 cm. The impact absorption energy (KJ/m) thereof is obtained by dividing the amount of impact absorption energy by the thickness thereof when the specimen is struck with the head of a triangular pyramid having a diameter of 16 mm and a height of 14 mm. The equation for calculating the impact absorption energy (KJ/m) is represented by the following Equation 5:

[Equation 5]

$$\text{Impact absorption energy}\left(\frac{\text{KJ}}{\text{m}}\right)=\frac{\text{amount of impact absorption energy (KJ)}}{\text{thickness of the specimen}}$$

The biodegradable polyester sheet obtained using the biodegradable polyester resin composition may have a post-notch tear strength of 510 N/cm or more, 550 N/cm or more, 600 N/cm or more, 610 N/cm or more, 620 N/cm or more, or 630 N/cm or more, and 1,000 N/cm or less, 900 N/cm or less, 800 N/cm or less, or 750 N/cm or less.
The biodegradable polyester sheet is cut to prepare a specimen in accordance with KSM 6518-B, and a 2-mm notch is made in its center. The tear strength is then measured using INSTRON's universal testing machine (UTM) and calculated according to the following Equation 6.

[Equation 6]

$$\text{Tear strength}\left(\frac{\text{N}}{\text{cm}}\right)=\frac{\text{force applied at the time of tearing (N)}}{\text{thickness of the specimen}}$$

**Method for preparing a biodegradable polyester molded article**

A biodegradable polyester molded article may be prepared from the biodegradable polyester resin.
Specifically, the molded article may be prepared by molding the biodegradable polyester resin by a method known in the art such as extrusion and injection. The molded article may be an injection molded article, an extrusion molded article, a thin layer molded article, a blow molded article, a 3D filament, and an interior material for building, but it is not limited thereto.
For example, the molded article may be in the form of a film or sheet that can be used as agricultural mulching films, disposable gloves, disposable films, disposable bags, food packaging materials, or garbage bags, in the form of a fiber that can be used as fabrics, knitted fabrics, nonwoven fabrics, or ropes. In addition, the molded article may be in the form of a container that can be used as a container for food packaging such as a lunch box. In addition, the molded article may be a molded article of various types such as disposable straws, spoons, food plates, and forks. In particular, the molded article may be prepared from the biodegradable polyester resin, which can enhance the physical properties such as impact absorption energy and hardness, as well as, particularly, impact resistance and durability. Thus, it can show excellent properties when applied to packaging materials for products stored and transported at low temperatures, automotive interior materials that require durability, or garbage bags, mulching films, and disposable products.
The biodegradable polyester resin composition according to an embodiment can have an excellent increase rate of biodegradability and biodegradability.

In order to measure the biodegradability, the amount of carbon dioxide generated under composting conditions is measured according to ISO-14855. Specifically, an inoculum container having compost only manufactured in a compost factory is prepared. A test container in which a specimen in 5% by weight of the dry weight of the compost has been added is prepared. Thereafter, they are cultivated for 180 days under the conditions of a temperature of 58 + 2°C, a moisture content of 50%, and an oxygen concentration of 6% or more. Carbon dioxide generated in each container is collected and analyzed using NIR (near infrared sensor) through the system in the equipment to measure the amount of carbon dioxide generated in each container. The biodegradability is calculated from the measured amount of generated carbon dioxide according to the following Equation 4.

Biodegradability (%) = {(amount of $CO_2$ generated in a test container) - (amount of $CO_2$ generated in an inoculum container) × 100/(theoretical amount of $CO_2$ generated in a test container) [Equation 4]

In addition, the compost may comprise about 40% by weight of pig manure, about 15% by weight of chicken manure, about 37% by weight of sawdust, about 5% by weight of zeolite, and about 3% by weight of microbial preparation.
In addition, the manufacturer of the above compost is Taeheung F&G, and the product name of the above compost may be Jisengto (grade 1 compost, by-product fertilizer).
In addition, when the biodegradability is measured, the biodegradable polyester resin composition according to an embodiment is prepared into a sheet having an area of about 10 cm × 10 cm and a thickness of about 300 μm. Thereafter, the sheet thus prepared is cut into a size of about 30 mm × 30 mm to prepare flakes. The flakes may be mixed with the compost to perform the measurement of biodegradability.
The biodegradable polyester resin composition according to an embodiment may have a biodegradability of about 40% to about 70% after 1 week. The biodegradability of the biodegradable polyester resin composition according to an embodiment after 1 week may be about 45% to about 65%. The biodegradability of the biodegradable polyester resin composition according to an embodiment after 1 week may be about 47% to about 63%. The biodegradability of the biodegradable polyester resin composition according to an embodiment after 1 week may be about 49% to about 62%.
The biodegradable polyester resin composition according to an embodiment may have a biodegradability of about 50% to about 70% after 2 weeks. The biodegradability of the biodegradable polyester resin composition according to an embodiment after 2 weeks may be about 55% to about 68%.
The biodegradable polyester resin composition according to an embodiment may have a biodegradability of about 63% to about 75% after 3 weeks. The biodegradability of the biodegradable polyester resin composition according to an embodiment after 3 weeks may be about 63% to about 73%.
The biodegradable polyester resin composition according to an embodiment may have a biodegradability of about 73% to about 85% after 4 weeks. The biodegradability of the biodegradable polyester resin composition according to an embodiment after 4 weeks may be about 75% to about 82%.
The biodegradable polyester resin composition according to an embodiment may have a biodegradability of about 80% to about 90% after 6 weeks. The biodegradability of the biodegradable polyester resin composition according to an embodiment after 6 weeks may be about 82% to about 88%.
The biodegradable polyester resin composition according to an embodiment may have a biodegradability of about 85% or more after 9 weeks. The biodegradability of the biodegradable polyester resin composition according to an embodiment after 9 weeks may be about 87% or more. The biodegradable polyester resin composition according to an embodiment may have a biodegradability of about 88% or more after 9 weeks. The biodegradability of the biodegradable polyester resin composition according to an embodiment after 9 weeks may be about 89% or more. The biodegradability of the biodegradable polyester resin composition according to an embodiment after 9 weeks may be about 90% or more.
The biodegradable polyester resin composition according to an embodiment may have a biodegradability of about 95% or more after 12 weeks. The biodegradability of the biodegradable polyester resin composition according to an embodiment after 12 weeks may be about 96% or more. The biodegradability of the biodegradable polyester resin composition according to an embodiment after 12 weeks may be about 96.5% or more. The biodegradability of the biodegradable polyester resin composition according to an embodiment after 12 weeks may be about 97% or more.
In addition, the biodegradable polyester resin composition according to an embodiment can have an excellent increase rate of hydrolysability and hydrolysability.
The hydrolysability of the biodegradable polyester resin composition according to an embodiment may be measured by the following method.
5 g of a biodegradable polyester sheet is put in 500 ml of deionized water (DI Water), which is covered with a stopper to prevent water from evaporating. Then, a water degradation acceleration test is conducted in a convection (hot air) oven at 80°C. The humidity environment of the biodegradable polyester sheet was the same as proceeding at 100% R.H. because it was immersed in water.
The initial number average molecular weight of the biodegradable polyester sheet and the number average

molecular weight of the biodegradable polyester sheet after being immersed in water and subjected to the water degradation acceleration test at 80°C are measured using gel permeation chromatography (GPC). Then, the hydrolysability is calculated by the following Equation 3.

The hydrolysability may be represented by the following Equation 3.

[Equation 3]

$$\text{Hydrolysability (\%)} = ((Mn_A - Mn_B)/Mn_A) \times 100$$

In Equation 3,

$Mn_A$ and $Mn_B$ are the number average molecular weights of the biodegradable polyester sheet measured using gel permeation chromatography (GPC).

$Mn_A$ is the initial number average molecular weight of a biodegradable polyester sheet, and $Mn_B$ is the number average molecular weight of the biodegradable polyester sheet after being immersed in water and subjected to the water degradation acceleration test at 80°C.

The biodegradable polyester resin composition according to an embodiment may have a hydrolysability of about 40% to about 65% after 1 week. The hydrolysability of the biodegradable polyester resin composition according to an embodiment after 1 week may be about 45% to about 63%.

The biodegradable polyester resin composition according to an embodiment may have a hydrolysability of about 80% to about 93% after 2 weeks. The hydrolysability of the biodegradable polyester resin composition according to an embodiment after 2 weeks may be about 85% to about 92%.

The biodegradable polyester resin composition according to an embodiment may have a hydrolysability of about 90% to about 97% after 3 weeks. The hydrolysability of the biodegradable polyester resin composition according to an embodiment after 3 weeks may be about 91% to about 96%.

The biodegradable polyester resin composition according to an embodiment may have a hydrolysability of about 92% to about 99% after 4 weeks. The hydrolysability of the biodegradable polyester resin composition according to an embodiment after 4 weeks may be about 93% to about 97%.

The biodegradable polyester resin composition according to an embodiment may have a hydrolysability of about 94% or more after 6 weeks. The hydrolysability of the biodegradable polyester resin composition according to an embodiment after 6 weeks may be about 95% or more.

The biodegradable polyester resin composition according to an embodiment may have a hydrolysability of about 95% or more after 9 weeks. The hydrolysability of the biodegradable polyester resin composition according to an embodiment after 9 weeks may be about 96% or more.

The biodegradable polyester resin composition according to an embodiment may have a hydrolysability of about 90% or more after 12 weeks (3 months). The hydrolysability of the biodegradable polyester resin composition according to an embodiment after 12 weeks may be about 91% or more, 94% or more, or 97% or more.

The biodegradable polyester resin composition according to an embodiment may have a hydrolysability increase rate of about 25%/week to about 50%/week from 1 week to 2 weeks. The hydrolysability increase rate of the biodegradable polyester resin composition according to an embodiment from 1 week to 2 weeks may be about 29%/week to about 50%/week. The hydrolysability increase rate of the biodegradable polyester resin composition according to an embodiment from 1 week to 2 weeks may be about 30%/week to about 45%/week.

Since the biodegradable polyester resin composition according to an embodiment has a hydrolysability and a hydrolysability increase rate within the above ranges, the biodegradable polyester resin composition according to an embodiment has appropriate durability in the areas of daily life and can be readily hydrolyzed when discarded. That is, since the biodegradable polyester resin composition according to an embodiment has a hydrolysability and a hydrolysability increase rate within appropriate ranges, it can have a sufficient hydrolysability when used for an appropriate period of time in disposable packaging or the like. In addition, the biodegradable polyester resin composition according to an embodiment can be readily decomposed by hydrolysis and biodegradation over a sufficient period of time, not only in soil but also when discarded in a river or the sea.

## Embodiments for Carrying Out the Invention

Hereinafter, the present invention will be described in more detail with reference to the following examples. But the following Examples are intended to illustrate the present invention, and the scope of the Examples is not limited thereto only.

**<Preparation Example>**

Preparation Example 1-1: Preparation of a monomer composition for preparing an oligomer

1,4-Butanediol (1,4-BDO), terephthalic acid (TPA), and adipic acid (AA) were homogeneously mixed at a molar ratio of about 12:5:6. In such an event, the average particle size of the terephthalic acid (TPA) was about 130 μm.

Preparation Example 1-2: Preparation of pretreated nanocrystalline cellulose

Nanocrystalline cellulose (NVC-100, Manufacturer: Celluforce) in the form of a dry powder having a particle size of about 1 μm to about 50 μm was dispersed in water at a concentration of 1% by weight, which was subjected to ultrasonic treatment using a tip-type ultrasonic disperser for 1 minute at a power of 3,000 J/s to prepare pretreated nanocellulose.

**<Example>**

**Example 1-1**

<u>Preparation of a biodegradable polyester resin composition</u>

**<Step 1: Step of obtaining a prepolymer composition>**

**Step 1-1: Step of obtaining a slurry**

As shown in Table 1, 1,4-butanediol (1,4-BDO) and terephthalic acid (TPA) were mixed at 47% by mole, respectively, which was then charged to a slurry tank (provided with an anchor type at the bottom, a height to the agitator of 40 mm, and three rotor blades) in a state without a catalyst. In such an event, the terephthalic acid (TPA) had a D50 of 130 μm and a standard deviation (SD) of the D50 of 30.

Then, the mixture was pretreated by agitating it at 50°C and 200 rpm for 1 hour, thereby obtaining a slurry without phase separation.

**Step 1-2: Step of obtaining a second esterification reaction product**

The slurry obtained in step 1-1 was fed to a reactor through a supply line, and 250 ppm of tetrabutyl titanate (Tyzor TnBT, Dupont) as a titanium-based catalyst was added thereto. A first esterification reaction was then carried out at 210°C and normal pressure for about 1 hour and 30 minutes until 95% of the by-product, comprising water, was theoretically discharged.

53% by mole of 1,4-butanediol (1,4-BDO) based on the total number of moles of the diol, 53% by mole of adipic acid (AA) based on the total number of moles of the dicarboxylic acid, and about 300 ppm of tetrabutyl titanate (Tyzor TnBT, Dupont) as a titanium catalyst and about 900 ppm of a reaction accelerator (Glycerol, Aekyung Petrochemical), based on the total weight of the diol, the aromatic dicarboxylic acid, and the aliphatic dicarboxylic acid, were added to the first esterification reaction product. A second esterification reaction was then carried out at 210°C and normal pressure for about 2 hours and 30 minutes until 95% of the by-product, comprising water, was theoretically discharged to obtain a second esterification reaction product.

**Step 1-3: Step of obtaining a prepolymer composition**

Thereafter, the monomer composition for preparing an oligomer obtained in Preparation Example 1-1 was added to the second esterification reaction product in an amount of about 1 part by weight relative to 100 parts by weight of the second esterification reaction product. The mixture of the monomer composition for preparing an oligomer and the second esterification reaction product was subjected to a third esterification reaction at a temperature of about 220°C for about 20 minutes. Thereafter, a prepolymer composition having a number average molecular weight of about 1,200 g/mole was prepared by the third esterification reaction.

**<Step 2: Step of obtaining a polymer composition>**

500 ppm of tetrabutyl titanate (Tyzor TnBT, Dupont) as a titanium-based catalyst was added to the prepolymer composition obtained in step 1-3, which was stabilized for about 10 minutes. Thereafter, the reaction mixture was subjected to a first polycondensation reaction at about 230°C under a low vacuum of about 10 Torr for 30 minutes and then

to a second polycondensation reaction at about 230°C under a high vacuum of about 0.5 Torr for 4 hours to prepare a polymer composition having a number average molecular weight of 55,000 g/mole.

**<Step 3: Step of adjusting the moisture content>**

The polymer composition obtained in step 2 was induced to be crystallized at 50°C in an underwater cutter (UWC) and then cut with a pellet cutter to obtain pellets. The pellets were dried at 60°C for 5 hours using a dehumidifying dryer (LUXOR HD/Motan) to obtain a polymer composition having a moisture content controlled to 295 ppm based on the total weight of the polymer composition.

**<Step 4: Step of adding a chain extender>**

The polymer composition with an adjusted moisture content obtained in step 3 was fed to a twin extruder (TEX), and a styrene acrylate copolymer containing an epoxy group (number of epoxy groups: 9, Joncryl, BASF) as a chain extender was fed thereto in an amount of 0.9% by weight based on the total weight of the diol, the aromatic dicarboxylic acid, and the aliphatic dicarboxylic acid. In such an event, the chain extender in the form of a flake may be melted at about 120°C and then injected in the form of a solution. Thereafter, the chain extender was well mixed with the polymer composition at the 1/3 point of the twin extruder at about 180°C with a final residence time of about 10 minutes to induce reactive extrusion.

**<Step 5: Step of obtaining a biodegradable polyester resin composition>**

The chain-extended polymer composition was cooled to 5°C and cut with a pellet cutter to obtain a biodegradable polyester resin composition (pellets).

<u>Preparation of a biodegradable polyester sheet</u>

Two Teflon sheets were prepared. A stainless steel (SUS) frame (with an area of 12 cm × 12 cm) was placed on one Teflon sheet, and about 7 g of the biodegradable polyester resin composition (pellets) prepared above was put in the stainless steel (SUS) frame (with an area of 12 cm × 12 cm), which was covered with another Teflon sheet. It was placed in the center of a hot press (manufacturer: WithLab, model name: WL 1600SA) having an area of about 25 cm × 25 cm. It was maintained at about 210°C under a pressure of about 10 MPa for about 3 minutes and then taken out. It was immediately cooled in water at about 20°C for about 30 seconds, thereby preparing a biodegradable polyester sheet having an area of about 10 cm × 10 cm and a thickness of about 300 μm.

<u>Preparation of a biodegradable polyester film</u>

The biodegradable polyester resin composition (pellets) was dried at about 80°C for about 5 hours and then melt-extruded at about 240°C using a blown film extruder (Blown Film Extrusion Line, manufacturer: Eugene Engineering) to prepare a biodegradable polyester film having a thickness of about 50 μm.

**Example 1-2**

A biodegradable polyester resin composition, a biodegradable polyester sheet, and a biodegradable polyester film were prepared in the same manner as in Example 1-1, except that 1,000 ppm of pretreated nanocrystalline cellulose (cellulose nanocrystal, CNC) (particle size 190 nm) obtained in Preparation Example 2 was further added when 1,4-butanediol (1,4-BDO) and adipic acid (AA) were added; and each reaction process condition was changed to adjust the moisture content of the polymer composition, the oligomer content of the biodegradable polyester resin composition, and the physical properties thereof as shown in Tables 1 to 3 below.

**Example 1-3**

A biodegradable polyester resin composition, a biodegradable polyester sheet, and a biodegradable polyester film were prepared in the same manner as in Example 1-1, except that no reaction accelerator was added; and the moisture content of the polymer composition, the oligomer content of the biodegradable polyester resin composition, and the physical properties thereof were adjusted as shown in Tables 1 to 3 below.

**Comparative Examples 1-1 and 1-2**

A biodegradable polyester resin composition, a biodegradable polyester sheet, and a biodegradable polyester film were prepared in the same manner as in Example 1-1, except that hexamethylene diisocyanate (HMDI) was used as a chain extender; and each reaction process condition was changed to adjust the moisture content of the polymer composition, the oligomer content of the biodegradable polyester resin composition, and the physical properties thereof as shown in Tables 1 to 3 below.

**Comparative Example 1-3**

A biodegradable polyester resin composition, a biodegradable polyester sheet, and a biodegradable polyester film were prepared in the same manner as in Comparative Example 1-2, except that the content of the chain extender and the oligomer content and physical properties of the biodegradable polyester resin composition were adjusted as shown in Tables 1 to 3 below.

**Comparative Example 1-4**

A biodegradable polyester resin composition, a biodegradable polyester sheet, and a biodegradable polyester film were prepared in the same manner as in Example 1-1, except that no chain extender was added; and each reaction process condition was changed to adjust the moisture content of the polymer composition, the oligomer content of the biodegradable polyester resin composition, and the physical properties thereof as shown in Tables 1 to 3 below.

**<Evaluation Example>**

**Evaluation Example 1-1: Average particle diameter (D50) and standard deviation**

**<Average particle diameter (D50) and standard deviation of the aromatic dicarboxylic acid>**

The aromatic dicarboxylic acid (TPA or DMT) was measured for the average particle diameter (D50) in a particle size distribution (PSD) by a particle size analyzer Microtrac S3500 (Microtrac Inc.) and a standard deviation thereof under the following conditions.
Environment for use

- Temperature: 10 to 35°C, humidity: 90% RH, non-condensing maximum
- D50 as an average particle size distribution for each section and SD were measured.

The standard deviation refers to the square root of variance and may be calculated using a software.

**<Particle diameter of the nanocellulose>**

The nanocellulose was measured for the particle size and particle size deviation through dynamic light scattering (DLS) at a temperature of 25°C and a measurement angle of 175° using Zetasizer Nano ZS (manufacturer: Marven). Here, the value of the peak derived through the polydispersity index (PdI) in the confidence interval of 0.5 was taken as the particle size.

**Evaluation Example 1-2: Moisture content**

The difference in weight (loss) before and after drying, using the following heat source, of the polymer compositions (pellets) prepared in the Examples and Comparative Examples was calculated:

Moisture content measuring device: Qmersys, Model XM60
Heat source: halogen/dark, temperature 30°C to 230°C

**Evaluation Example 1-3: Oligomer content**

The biodegradable polyester resin compositions (pellets) prepared in the Examples and Comparative Examples were each pulverized to obtain biodegradable polyester powder having an average particle size (D50) of about 50 μm.
The biodegradable polyester powder was immersed in acetonitrile for about 24 hours. Thereafter, the supernatant was sampled, and the molecular weight and content of the components extracted were measured by LC mass using dibutyl phthalate as a standard.

HR-LC-MS equipment: Model name (Orbitrap HR LC-MS, Q-Exactive, Thermo Fisher)
Column: C18
LC detector: 254 nm
Eluent: 5% ACN (with 0.1% formic acid)/ 95% $H_2O$ --> 100% ACN (with 0.1% formic acid)
Ionization mode: ESI mode
Mass: Positive 50-750, 500-3000

**Evaluation Example 1-4: Intrinsic viscosity**

3 g of each of the polymer compositions and biodegradable polyester resin compositions (pellets) prepared in the Examples and Comparative Examples was dissolved in 25 ml of ortho-chlorophenol to prepare a sample solution.
The falling time of the sample solution was measured using a BS type NO 2 Ostwald viscosity tube (ASAHI Ostwald viscosity tube BS type NO 2), and the result of the relative viscosity expressed by the following Equation 1 was converted into intrinsic viscosity.

[Equation 1]

$$\eta r = \frac{B \times t_1 - \frac{C}{t_1}}{B \times t_0 - \frac{C}{t_0}}$$

In Equation 1, $\eta r$: relative viscosity, B: correction factor of the viscosity tube, $t_o$: measurement time (sec) of blank test of o-chlorophenol, $t_1$: falling time (sec) of the sample solution, and C: 2.4 (integer).

**Evaluation Example 1-5: Content of COOH terminal groups**

5 g of each of the polymer compositions and biodegradable polyester resin compositions (pellets) prepared in the Examples and Comparative Examples was stirred in a benzyl alcohol solvent (10 ml), and then chloroform (3 ml) was added thereto when the composition (pellet) was completely dissolved to prepare a sample solution.
The sample solution was titrated with N/10-NaOH-benzyl alcohol using phenol red as an indicator. The point where the color changed from yellow to light pink was taken as the endpoint. After the -COOH group in the biodegradable polyester resin composition was converted to -COONa, the amount of N/10-NaOH-benzyl alcohol solution was considered to be equivalent to the content of COOH terminal groups. The content of COOH terminal groups was calculated using the following Equation 2.

$$\text{R-COOH} + \text{NaOH} \rightarrow \text{COONa} + H_2O$$

$$1 \text{ ml of N/10-NaOH-benzyl alcohol} = 1/10 \times 1/10^6 = 1/10^7 \text{ eq}$$

[Equation 2]

$$\text{Content of COOH terminal groups (eq/}10^6\text{ g)} = \frac{(B - C) \times (\frac{1}{1{,}000}) \times 0.1 \times f \times 10^6}{A}$$

In Equation 2,

B = After the indicator was added to the sample solution, the amount (ml) of N/10-NaOH-benzyl alcohol consumed
C = Amount (ml) of N/10-NaOH-benzyl alcohol without adding the sample solution (blank)
A = Amount (g) of the sample (polymer composition and biodegradable polyester resin composition)
f = titer of 0.1 N NaOH benzyl alcohol solution
1/1,000 = 1 ml of 1N NaOH is equivalent to 1/1,000($10^{-3}$) eq of -COOH.
$10^6$ = The content of COOH terminal groups in the biodegradable polyester resin composition is converted to 1 ton (1,000 kg = $10^6$ g)

**Evaluation Example 1-6: Hydrolysability**

The biodegradable polyester sheets prepared in the Examples and Comparative Examples were each immersed in water (100% R.H) at 80°C, and a water degradation acceleration test was conducted.

Specifically, 5 g of the polyester sheets of the Examples and Comparative Examples were each put in 500 ml of deionized water (DI Water), which was covered with a stopper to prevent water from evaporating. Then, a water degradation acceleration test was conducted in a convection (hot air) oven at 80°C. The humidity environment of the biodegradable polyester sheet was the same as proceeding at 100% R.H. because it was immersed in water.

The initial number average molecular weight of the biodegradable polyester sheet and the number average molecular weight of the biodegradable polyester sheet after being immersed in water and subjected to the water degradation acceleration test at 80°C were measured using gel permeation chromatography (GPC). Then, the hydrolysability was calculated by the following Equation 3.

[Equation 3]

$$\text{Hydrolysability (\%)} = ((Mn_A - Mn_B)/Mn_A) \times 100$$

In Equation 3, $Mn_A$ and $Mn_B$ are the number average molecular weights of the biodegradable polyester sheet measured using gel permeation chromatography (GPC).

$Mn_A$ is the initial number average molecular weight of a biodegradable polyester sheet, and $Mn_B$ is the number average molecular weight of the biodegradable polyester sheet after being immersed in water and subjected to the water degradation acceleration test at 80°C.

**Evaluation Example 1-7: Biodegradability**

The amount of carbon dioxide generated under composting conditions was measured according to ISO-14855. Specifically, an inoculum container having compost only manufactured in a compost factory was prepared. A test container in which a specimen in 5% by weight of the dry weight of the compost had been added was prepared. Thereafter, they were cultivated for 180 days under the conditions of a temperature of 58 ± 2°C, a moisture content of 50%, and an oxygen concentration of 6% or more. Carbon dioxide generated in each container was collected and analyzed using NIR (near infrared sensor) through the system in the equipment to measure the amount of carbon dioxide generated in each container. The biodegradability was calculated from the measured amount of generated carbon dioxide according to the following Equation 4.

Biodegradability (%) = {(amount of $CO_2$ generated in a test container) - (amount of $CO_2$ generated in an inoculum container) × 100/(theoretical amount of $CO_2$ generated in a test container) [Equation 4]

Compost information

- Manufacturer: Taeheung F&G
- Product name: Jisengto (grade 1 compost, by-product fertilizer)
- Compost composition: 40% by weight of pig manure, 15% by weight of chicken manure, 37% by weight of sawdust, 5% by weight of zeolite, and 3% by weight of microbial preparation

**Evaluation Example 1-8: Blow processability**

The biodegradable polyester resin compositions (pellets) prepared in the Examples and Comparative Examples were each evaluated at a temperature of 180°C by blowing air from below using a blown machine (Eugene Engineering Co., Ltd.), and bubble formation was observed for 12 hours to evaluate blow processability:

◎: Almost no fume generation, no surface defects on the film, and good bubble shape without being biased to one side or bursting (less than 100 fume generation and surface defects/1,000)
Δ: Fume generation, film surface defects, and some film bubbles burst (100 to 500 fume and surface defects/1,000)
×: High fume generation, high film surface defects, and high film bubble bursting (more than 500 fume and surface defects/1,000)

**Evaluation Example 1-9: Injection molding processability**

The biodegradable polyester resin compositions prepared in the Examples and Comparative Examples were each melted at 200°C, injected into a mold, and then cooled to prepare a molded article using an injection molding machine (Taejin Engineering). The injection molding processability was evaluated by producing 1,000 sets of the molded article.

◎: Almost no fume generation, no surface defects on the film, and the molded article produced with the exact shape of the structure (less than 50 fume generation and surface defects/1,000)

Δ: Fume generation, film surface defects, and some film bubbles burst (50 to 100 fume and surface defects/1,000)

×: High fume generation, high film surface defects, and high film bubble bursting (more than 100 fume and surface defects/1,000)

The content of each component used in the preparation of the biodegradable polyester resin composition is summarized in Table 1 below.

[Table 1]

| | 1,4-BDO (% by mole) | TPA (% by mole) | AA (% by mole) | CNC (ppm) | Reaction accelerator (ppm) | Monomer composition for preparing an oligomer (part by weight) | Chain extender (% by weight) |
|---|---|---|---|---|---|---|---|
| Ex. 1 | 47 + 53 | 47 | 53 | - | 900 | 1 | 0.9 |
| Ex. 2 | 47 + 53 | 47 | 53 | 1,000 | 900 | 0.5 | 0.5 |
| Ex. 3 | 47 + 53 | 47 | 53 | - | - | 1.9 | 0.8 |
| C. Ex. 1 | 47 + 53 | 47 | 53 | - | 900 | - | 1.2 |
| C. Ex. 2 | 100 | 47 | 53 | - | - | 5.0 | 1.4 |
| C. Ex. 3 | 100 | 47 | 53 | - | - | 5.6 | 1.0 |
| C. Ex. 4 | 47 + 53 | 47 | 53 | - | 900 | - | - |
| 1,4-BDO: 1,4-butanediol<br>TPA: terephthalic acid<br>AA: adipic acid<br>CNC: nanocellulose | | | | | | | |

[Table 2]

| Process | | Ex. 1-1 | Ex. 1-2 | Ex. 1-3 | C. Ex. 1-1 | C. Ex. 1-2 | C. Ex. 1-3 | C. Ex. 1-4 |
|---|---|---|---|---|---|---|---|---|
| Step 1 | First esterification reaction | 210°C, 1.5 h | 220°C, 1.5 h | 210°C, 1.5 h | 210°C, 1.5 h | 210°C, 3.5 h | 210°C, 3.5 h | 210°C, 1.5 h |
| | Second esterification reaction | 210°C, 2.5 h | 220°C, 2.5 h | 210°C, 2.5 h | 210°C, 2.5 h | × | × | 210°C, 2.5 h |
| | Thrid esterification reaction | 220°C, 20 min. | 220°C, 20 min. | 220°C, 20 min. | × | 220°C, 20 min. | 220°C, 20 min. | × |
| | Addition of the reaction accelerator | During the second esterification reaction | During the second esterification reaction | × | During the second esterification reaction | × | × | During the second esterification reaction |
| | Addition of the monomer composition for preparing an oligomer | After the second esterification reaction | After the second esterification reaction | After the second esterification reaction | × | After the second esterification reaction | After the second esterification reaction | × |
| Step 2 | First polycondensation reaction | 230°C, 10 Torr, 0.5 h | 240°C, 10 Torr, 0.5 h | 240°C, 10 Torr, 0.5 h | 230°C, 50 Torr, 0.5 h | 260°C, 50 Torr, 0.5 h | 260°C, 50 Torr, 0.5 h | 230°C, 50 Torr, 0.5 h |
| | Second polycondensation reaction | 230°C, 0.5 Torr, 4 h | 240°C, 0.5 Torr, 5 h | 240°C, 0.5 Torr, 5 h | 230°C, 0.5 Torr, 4 h | 260°C, 0.9 Torr, 2 h | 260°C, 0.9 Torr, 2 h | 230°C, 0.5 Torr, 4 h |
| | Intrinsic viscosity of the polymer composition after polycondensation (I.V.) (dl/g) | 1.01 | 1.30 | 1.01 | 1.01 | 0.50 | 0.50 | 0.95 |
| | Amount of COOH terminal groups in the polymer composition after polycondensation (eq/ton) | 40 | 35 | 40 | 40 | 50 | 50 | 38 |
| Step 3 | Adjustment of moisture content | ○ | ○ | ○ | ○ | × | × | ○ |
| | Moisture content of the polymer composition (ppm) | 295 | 350 | 500 | 550 | 800 | 800 | 350 |
| Step 4 | Addition of the chain extender | ○ | ○ | ○ | ○ | ○ | ○ | × |
| Content of the entire oligomers (ppm) | | 7,300 | 7,100 | 12,000 | 4,250 | 28,000 | 36,000 | 1,200 |

[Table 3]

| Physical properties of the biodegradable polyester resin composition | | | | | | | | | |
|---|---|---|---|---|---|---|---|---|---|
| | | | Ex. 1-1 | Ex. 1-2 | Ex. 1-3 | C. Ex. 1-1 | C. Ex. 1-2 | C. Ex. 1-3 | C. Ex. 1-4 |
| Intrinsic viscosity (I.V.) (dl/g) | | | 1.55 | 1.60 | 1.48 | 1.02 | 0.93 | 0.89 | 0.90 |
| Amount of COOH terminal groups (eq/ton) | | | 30 | 28 | 36 | 52 | 56 | 62 | 53 |
| Content of oligomers | First oligomer | Content (ppm) | 3,100 | 3,200 | 4,100 | 2,100 | 1,800 | 1,650 | 480 |
| | | Mw (g/mole) | 421.18 | | | | | | |
| | Second oligomer | Content (ppm) | 2,200 | 2,100 | 3,700 | 1,900 | 1,900 | 1,950 | 380 |
| | | Mw (g/mole) | 623.3 | | | | | | |
| | Third oligomer | Content (ppm) | 600 | 600 | 1,900 | 150 | 4,300 | 2,400 | 200 |
| | | Mw (g/mole) | 643.3 | | | | | | |
| | Fourth oligomer | Content (ppm) | 1,400 | 1,200 | 2,300 | 100 | 20,000 | 30,000 | 140 |
| | | Mw (g/mole) | 843.4 | | | | | | |
| | Content of the entire oligomers (ppm) | | 7,300 | 7,100 | 12,000 | 4,250 | 28,000 | 36,000 | 1,200 |

[Table 4]

| Physical properties of the biodegradable polyester film | | | | | | | |
|---|---|---|---|---|---|---|---|
| | Ex. 1-1 | Ex. 1-2 | Ex. 1-3 | C. Ex. 1-1 | C. Ex. 1-2 | C. Ex. 1-3 | C. Ex. 1-4 |
| Hydrolysability (%) | 97 | 94 | 91 | 83 | 96 | 97 | 78 |
| Biodegradability (%) | 97.8 | 97.0 | 96.5 | 91.0 | 95.1 | 96.2 | 91.1 |
| Blow processability (Extrusion at 180°C) | ◎ | ◎ | ◎ | Δ | × | × | Δ |
| Injection molding (Extrusion at 200°C) | ◎ | ◎ | ◎ | Δ | × | × | Δ |

As can be seen from Tables 1 to 4 above, in the biodegradable polyester resin compositions prepared according to the preparation process of Examples 1-1 to 1-3, a high viscosity was achieved while the content of terminal groups was controlled to an appropriate range. The biodegradable polyester resin compositions each comprised an oligomer having a number average molecular weight (Mn) of 400 to 1,300 g/mole within a desired range. As a result, the biodegradable polyester films prepared using the biodegradable polyester resin compositions had an excellent level of hydrolysability and biodegradability. They were able to achieve excellent processability and productivity, such as almost no fume generation and no surface defects in the films in blow molding and injection molding.

In contrast, the biodegradable polyester resin compositions of Comparative Examples 1-1 to 1-3 having a moisture content exceeding 500 ppm in the polymer composition had a significantly increased content of terminal groups, a decreased viscosity, and lowered processability and productivity as compared with the biodegradable polyester films of Examples 1-1 to 1-3. In the biodegradable polyester film of Comparative Example 1-1, the content of oligomer in the biodegradable polyester resin composition was lower than 5,000 ppm, so that the hydrolysability of the biodegradable polyester film was also decreased steeply.

Meanwhile, in the polyester film of Comparative Example 1-4, in which the content of oligomer in the biodegradable polyester resin composition was excessively low, while the moisture content was controlled, the hydrolysability and biodegradability were significantly reduced as compared with the biodegradable polyester films of Examples 1-1 to 1-3.

**<Preparation Example>**

Preparation Example 2-1: Preparation of a monomer composition for preparing an oligomer
1,4-Butanediol (1,4-BDO), terephthalic acid (TPA), and adipic acid (AA) were homogeneously mixed at a molar ratio of about 13:4:4.5. In such an event, the average particle size of the terephthalic acid (TPA) was about 130 μm.

<u>Preparation of pretreated nanocrystalline cellulose</u>

Preparation Example 3-1

Nanocrystalline cellulose (NVC-100, Manufacturer: Celluforce) in the form of a dry powder having a particle size of about 1 μm to about 50 μm was dispersed in water (aqueous dispersion) at a concentration of 1% by weight (about 1 kg of nanocrystalline cellulose in about 99 kg of water), which was stirred using a stirrer for about 30 minutes at a speed of about 3,000 rpm to prepare pretreated nanocellulose.

Preparation Example 3-2

Nanocrystalline cellulose (NVC-100, Manufacturer: Celluforce) in the form of a dry powder having a particle size of about 1 μm to about 50 μm was dispersed in water at a concentration of 1% by weight, which was stirred using a stirrer for about 30 minutes at a speed of about 3,000 rpm to carry out first pretreatment. Hexamethylene diisocyanate (HMDI) as a chain extender in an amount of about 0.8% by weight was added to the first pretreated nanocellulose, which was stirred using a stirrer for about 30 minutes at a speed of about 3,000 rpm to carry out redispersion to prepare secondly pretreated nanocellulose.

Preparation Example 3-3

Nanocrystalline cellulose (NVC-100, Manufacturer: Celluforce) in the form of a dry powder having a particle size of about 1 μm to about 50 μm was dispersed in acetic acid at a concentration of 1% by weight (about 1 kg of nanocrystalline cellulose in about 99 kg of acetic acid), which was stirred using a stirrer for 30 minutes at a speed of 3,000 rpm to prepare pretreated nanocellulose.

Preparation Example 3-4

Nanocrystalline cellulose (NVC-100, Manufacturer: Celluforce) in the form of a dry powder having a particle size of about 1 μm to about 50 μm was dispersed in ethylene glycol at a concentration of 1% by weight (about 1 kg of nanocrystalline cellulose in about 99 kg of ethylene glycol), which was stirred using a stirrer for 30 minutes at a speed of 3,000 rpm to prepare pretreated nanocellulose.

**<Example>**

**Example 2-1**

<u>Preparation of a biodegradable polyester resin composition</u>

**<Step 1: Step of obtaining a prepolymer composition>**

**Step 1-1: Step of obtaining a slurry**

As shown in Table 1, 1,4-butanediol (1,4-BDO) and terephthalic acid (TPA) were mixed at 47% by mole, respectively, which was then charged to a slurry tank (provided with an anchor type at the bottom, a height to the agitator of 40 mm, and three rotor blades) in a state without a catalyst. In such an event, the terephthalic acid (TPA) had a D50 of 130 μm and a standard deviation (SD) of the D50 of 30.
Then, the mixture was pretreated by agitating it at 50°C and 200 rpm for 1 hour, thereby obtaining a slurry without phase separation.

**Step 1-2: Step of obtaining a second esterification reaction product**

The slurry obtained in step 1-1 was fed to a reactor through a supply line, and 250 ppm of tetrabutyl titanate (Tyzor TnBT, Dupont) as a titanium-based catalyst was added thereto. A first esterification reaction was then carried out at 210°C and normal pressure for about 1 hour and 30 minutes until 95% of the by-product, comprising water, was theoretically discharged.

53% by mole of 1,4-butanediol (1,4-BDO) based on the total number of moles of the diol, 53% by mole of adipic acid (AA) based on the total number of moles of the dicarboxylic acid, and about 300 ppm of tetrabutyl titanate (Tyzor TnBT, Dupont) as a titanium catalyst, about 900 ppm of a reaction accelerator (Glycerol, Aekyung Petrochemical), and about 100 ppm of a stabilizer (trimethyl phosphate (TMP), Daihachi), based on the total weight of the diol, the aromatic dicarboxylic acid, and the aliphatic dicarboxylic acid, were added to the first esterification reaction product. A second esterification reaction was then carried out at 210°C and normal pressure for about 2 hours and 30 minutes until 95% of the by-product, comprising water, was theoretically discharged to obtain a second esterification reaction product.

**Step 1-3: Step of obtaining a prepolymer composition**

Thereafter, the monomer composition for preparing an oligomer obtained in Preparation Example 2-1 was added to the second esterification reaction product in an amount of about 1 part by weight relative to 100 parts by weight of the second esterification reaction product. The mixture of the monomer composition for preparing an oligomer and the second esterification reaction product was subjected to a third esterification reaction at a temperature of about 220°C for about 20 minutes. Thereafter, a prepolymer composition having a number average molecular weight of about 1,200 g/mole was prepared by the third esterification reaction.

**<Step 2: Step of obtaining a polymer composition>**

500 ppm of tetrabutyl titanate (Tyzor TnBT, Dupont) as a titanium-based catalyst was added to the prepolymer composition obtained in step 1-3, which was stabilized for about 10 minutes. Thereafter, the reaction mixture was subjected to a first polycondensation reaction at about 230°C under a low vacuum of about 10 Torr for 30 minutes and then to a second polycondensation reaction at about 230°C under a high vacuum of about 0.5 Torr for 4 hours to prepare a polymer composition having a number average molecular weight of 55,000 g/mole.

**<Step 3: Step of adjusting the moisture content>**

The polymer composition obtained in step 2 was induced to be crystallized at 50°C in an underwater cutter (UWC) and then cut with a pellet cutter to obtain pellets. The pellets were dried at 60°C for 5 hours using a dehumidifying dryer (LUXOR HD/Motan) to obtain a polymer composition having a moisture content controlled to 295 ppm based on the total weight of the polymer composition.

**<Step 4: Step of adding pretreated nanocellulose>**

The polymer composition with adjusted moisture content obtained in step 3 was fed to a twin extruder (TEX), and the pretreated nanocrystalline cellulose (CNC) (particle size 190 nm) prepared in Preparation Example 3-1 in an amount of 0.5% by weight, calcium carbonate in an amount of 10% by weight, and a styrene acrylate copolymer containing an epoxy group (number of epoxy groups: 9, Joncryl, BASF) as a chain extender in an amount of 0.9% by weight, based on the total weight of the diol, the aromatic dicarboxylic acid, and the aliphatic dicarboxylic acid, were fed thereto. Thereafter, the polymer composition was extruded (reactively extruded) at about 180°C for about 10 minutes to carry out a chain extension reaction.

**<Step 5: Step of obtaining a biodegradable polyester resin composition>**

The chain-extended polymer composition was cooled to 5°C and cut with a pellet cutter to obtain a biodegradable polyester resin composition (pellets).

Preparation of a biodegradable polyester sheet

Two Teflon sheets were prepared. A stainless steel (SUS) frame (with an area of 12 cm × 12 cm) was placed on one Teflon sheet, and about 7 g of the biodegradable polyester resin composition (pellets) prepared above was put in the stainless steel (SUS) frame (with an area of 12 cm × 12 cm), which was covered with another Teflon sheet. It was placed in

the center of a hot press (manufacturer: WithLab, model name: WL 1600SA) having an area of about 25 cm × 25 cm. It was maintained at about 210°C under a pressure of about 10 MPa for about 3 minutes and then taken out. It was immediately cooled in water at about 20°C for about 30 seconds, thereby preparing a biodegradable polyester sheet having an area of about 10 cm × 10 cm and a thickness of about 300 μm.

Preparation of a biodegradable polyester film

The biodegradable polyester resin composition (pellets) was dried at about 80°C for about 5 hours and then melt-extruded at about 240°C using a blown film extruder (Blown Film Extrusion Line, manufacturer: Eugene Engineering) to prepare a biodegradable polyester film having a thickness of about 50 μm.

**Examples 2-2 to 2-6**

A biodegradable polyester resin composition, a biodegradable polyester sheet, and a biodegradable polyester film were prepared in the same manner as in Example 2-1, except that the type of the pretreated nanocellulose, and the content of each of the pretreated nanocellulose, chain extender, and calcium carbonate were changed; and each reaction process condition was changed to adjust the moisture content of the polymer composition, the oligomer content of the biodegradable polyester resin composition, and the physical properties thereof as shown in Tables 5 to 7 below.

**Comparative Example 2-1**

A biodegradable polyester resin composition, a biodegradable polyester sheet, and a biodegradable polyester film were prepared in the same manner as in Example 2-1, except that the composition for preparing an oligomer, calcium carbonate, and pretreated nanocellulose were not added; and the content of the chain extender, the moisture content of the polymer composition, and the physical properties thereof were adjusted as shown in Tables 5 to 7 below.

**Comparative Example 2-2**

A biodegradable polyester resin composition, a biodegradable polyester sheet, and a biodegradable polyester film were prepared in the same manner as in Example 2-1, except that the content of moisture in the polymer composition was not adjusted; the pretreated nanocellulose prepared in Preparation Example 3-4 was added; and each reaction process condition was changed to adjust the oligomer content and physical properties of the biodegradable polyester resin composition as shown in Tables 5 to 7 below.

**Comparative Example 2-3**

A biodegradable polyester resin composition, a biodegradable polyester sheet, and a biodegradable polyester film were prepared in the same manner as in Example 2-1, except that the content of moisture in the polymer composition was not adjusted; untreated nanocellulose was added; and each reaction process condition was changed to adjust the oligomer content and physical properties of the biodegradable polyester resin composition as shown in Tables 5 to 7 below.

**Comparative Example 2-4**

A biodegradable polyester resin composition, a biodegradable polyester sheet, and a biodegradable polyester film were prepared in the same manner as in Example 2-1, except that the composition for preparing an oligomer and calcium carbonate were not added; and the content of the chain extender, the moisture content of the polymer composition, and the physical properties thereof were adjusted as shown in Tables 5 to 7 below.

**<Evaluation Example>**

**Evaluation Example 2-1: Average particle diameter (D50) and standard deviation**

**<Average particle diameter (D50) and standard deviation of the aromatic dicarboxylic acid>**

The aromatic dicarboxylic acid (TPA or DMT) was measured for the average particle diameter (D50) in a particle size distribution (PSD) by a particle size analyzer Microtrac S3500 (Microtrac Inc.) and a standard deviation thereof under the following conditions:
Environment for use

- Temperature: 10°C to 35°C, humidity: 90% RH, non-condensing maximum
- D50 as an average particle size distribution for each section and SD were measured.

The standard deviation refers to the square root of variance and may be calculated using a software.

**Evaluation Example 2-1: Particle diameter and zeta potential of nanocellulose**

The nanocellulose was measured for the particle size and particle size deviation through dynamic light scattering (DLS) at a temperature of 25°C and a measurement angle of 175° using Zetasizer Nano ZS (manufacturer: Marven). Here, the value of the peak derived through the polydispersity index (PdI) in the confidence interval of 0.5 was taken as the particle size.

In addition, the zeta potential was measured using ZETASIZER Nano ZS (manufacturer: Marven). The zeta potential (the power to maintain colloids in a dispersed state) was measured by a built-in program using pretreated nanocellulose dispersed in a solvent (water, water/chain extender, or acetic acid). The measurement temperature was 25°C.

Specifically, referring to Fig. 3, when the zeta potential was measured, a negative electrode (NE) and a positive electrode (PE) were installed at both ends of the equipment to form a magnetic field. The electrophoretic velocity of colloidal particles (nanocellulose) (150) dispersed in a solvent (100) according to the intensity of the charge was measured, which was converted to measure the zeta potential (ZP) value represented by the following Equation 7:

[Equation 7]

$$ZP = \mu U_E / P$$

In Equation 7, $\mu$ is the viscosity of the solvent at 25°C ((N/m2)-s), $U_E$ is the electrical particle flux velocity (m/s per V/m), and P is the permittivity.

The $U_E$ that stands for the electrical particle flux velocity (m/s per V/m) may be expressed by the following Equation 7-1.

[Equation 7-1]

$$U_E = V / E_f$$

In Equation 7-1, V is the electric moving velocity of the particle (m/s), and $E_f$ is the electric field strength (V/m).

**Evaluation Example 2-3: Moisture content**

The difference in weight (loss) before and after drying, using the following heat source, of the polymer compositions (pellets) prepared in the Examples and Comparative Examples was calculated:

Moisture content measuring device: Qmersys, Model XM60
Heat source: halogen/dark, temperature 30°C to 230°C

**Evaluation Example 2-4: Oligomer content**

The biodegradable polyester resin compositions (pellets) prepared in the Examples and Comparative Examples were each pulverized to obtain biodegradable polyester powder having an average particle size (D50) of about 50 $\mu$m.

The biodegradable polyester powder was immersed in acetonitrile for about 24 hours. Thereafter, the supernatant was sampled, and the molecular weight and content of the components extracted were measured by LC mass using dibutyl phthalate as a standard.

HR-LC-MS equipment: Model name (Orbitrap HR LC-MS, Q-Exactive, Thermo Fisher)
Column: C18
LC detector: 254 nm
Eluent: 5% ACN (with 0.1% formic acid)/ 95% $H_2O$ --> 100% ACN (with 0.1% formic acid)
Ionization mode: ESI mode
Mass: Positive 50-750, 500-3000

**Evaluation Example 2-5: Intrinsic viscosity**

3 g of each of the polymer compositions and biodegradable polyester resin compositions (pellets) prepared in the Examples and Comparative Examples was dissolved in 25 ml of ortho-chlorophenol to prepare a sample solution.
The falling time of the sample solution was measured using a BS type NO 2 Ostwald viscosity tube (ASAHI Ostwald viscosity tube BS type NO 2), and the result of the relative viscosity expressed by the following Equation 1 was converted into intrinsic viscosity.

[Equation 1]

$$\eta r = \frac{B \times t_1 - \frac{C}{t_1}}{B \times t_0 - \frac{C}{t_0}}$$

In Equation 1, $\eta r$: relative viscosity, B: correction factor of the viscosity tube, $t_o$: measurement time (sec) of blank test of o-chlorophenol, $t_1$: falling time (sec) of the sample solution, and C: 2.4 (integer).

**Evaluation Example 2-6: Content of COOH terminal groups**

5 g of each of the polymer compositions and biodegradable polyester resin compositions (pellets) prepared in the Examples and Comparative Examples was stirred in a benzyl alcohol solvent (10 ml), and then chloroform (3 ml) was added thereto when the composition (pellet) was completely dissolved to prepare a sample solution.
The sample solution was titrated with N/10-NaOH-benzyl alcohol using phenol red as an indicator. The point where the color changed from yellow to light pink was taken as the endpoint. After the -COOH group in the biodegradable polyester resin composition was converted to -COONa, the amount of N/10-NaOH-benzyl alcohol solution was considered to be equivalent to the content of COOH terminal groups. The content of COOH terminal groups was calculated using the following Equation 2.

R-COOH + NaOH → COONa + $H_2O$

$$1 \text{ ml of N/10-NaOH-benzyl alcohol} = 1/10 \times 1/10^6 = 1/10^7 \text{ eq}$$

[Equation 2]

$$\text{Content of COOH terminal groups (eq/}10^6\text{ g)} = \frac{(B - C) \times (\frac{1}{1{,}000}) \times 0.1 \times f \times 10^6}{A}$$

In Equation 2,

B = After the indicator was added to the sample solution, the amount (ml) of N/10-NaOH-benzyl alcohol consumed
C = Amount (ml) of N/10-NaOH-benzyl alcohol without adding the sample solution (blank)
A = Amount (g) of the sample (polymer composition and biodegradable polyester resin composition)
f = titer of 0.1 N NaOH benzyl alcohol solution
1/1,000 = 1 ml of 1N NaOH is equivalent to 1/1,000($10^{-3}$) eq of -COOH.
$10^6$ = The content of COOH terminal groups in the biodegradable polyester resin composition is converted to 1 ton (1,000 kg = $10^6$ g)

**Evaluation Example 2-7: Hydrolysability**

The biodegradable polyester sheets prepared in the Examples and Comparative Examples were each immersed

in water (100% R.H) at 80°C, and a water degradation acceleration test was conducted.

Specifically, 5 g of the polyester sheets of the Examples and Comparative Examples were each put in 500 ml of deionized water (DI Water), which was covered with a stopper to prevent water from evaporating. Then, a water degradation acceleration test was conducted in a convection (hot air) oven at 80°C. The humidity environment of the biodegradable polyester sheet was the same as proceeding at 100% R.H. because it was immersed in water.

The initial number average molecular weight of the biodegradable polyester sheet and the number average molecular weight of the biodegradable polyester sheet after being immersed in water and subjected to the water degradation acceleration test at 80°C were measured using gel permeation chromatography (GPC). Then, the hydrolysability was calculated by the following Equation 3.

[Equation 3]

$$\text{Hydrolysability (\%)} = ((Mn_A - Mn_B)/Mn_A) \times 100$$

In Equation 3, $Mn_A$ and $Mn_B$ are the number average molecular weights of the biodegradable polyester sheet measured using gel permeation chromatography (GPC).

$Mn_A$ is the initial number average molecular weight of a biodegradable polyester sheet, and $Mn_B$ is the number average molecular weight of the biodegradable polyester sheet after being immersed in water and subjected to the water degradation acceleration test at 80°C.

**Evaluation Example 2-8: Biodegradability**

The amount of carbon dioxide generated under composting conditions was measured according to ISO-14855. Specifically, an inoculum container having compost only manufactured in a compost factory was prepared. A test container in which a specimen in 5% by weight of the dry weight of the compost had been added was prepared. Thereafter, they were cultivated for 180 days under the conditions of a temperature of 58 ± 2°C, a moisture content of 50%, and an oxygen concentration of 6% or more. Carbon dioxide generated in each container was collected and analyzed using NIR (near infrared sensor) through the system in the equipment to measure the amount of carbon dioxide generated in each container. The biodegradability was calculated from the measured amount of generated carbon dioxide according to the following Equation 4.

Biodegradability (%) = {(amount of $CO_2$ generated in a test container) - (amount of $CO_2$ generated in an inoculum container) × 100/(theoretical amount of $CO_2$ generated in a test container) [Equation 4]

<u>Compost information</u>

- Manufacturer: Taeheung F&G
- Product name: Jisengto (grade 1 compost, by-product fertilizer)
- Compost composition: 40% by weight of pig manure, 15% by weight of chicken manure, 37% by weight of sawdust, 5% by weight of zeolite, and 3% by weight of microbial preparation

**Evaluation Example 2-9: Strength**

The biodegradable polyester sheets prepared in the Examples and Comparative Examples were each cut to a specimen of 100 mm in length and 15 mm in width and mounted to a universal testing machine (UTM; Model name 4206-001) of INSTRON at a chuck spacing of 50 mm in accordance with the ASTM D638 V-type standard. Testing was performed at a tensile speed of 100 mm/minute at a room temperature of 25°C, and the strength was measured with a program installed in the device.

**Evaluation Example 2-10: Impact absorption energy**

The impact absorption energy was evaluated using a film impact test of Toyoseki.

The biodegradable polyester resin compositions prepared in the Examples and Comparative Examples were each made into a biodegradable polyester sheet specimen having an area of 10 cm × 10 cm. The impact absorption energy (KJ/m) thereof was obtained by dividing the amount of impact absorption energy by the thickness thereof when the specimen was struck with a head of a triangular pyramid having a diameter of 16 mm and a height of 14 mm. The equation

for calculating the impact absorption energy (KJ/m) is represented by the following Equation 5:

[Equation 5]

$$\text{Impact absorption energy}\left(\frac{\text{KJ}}{\text{m}}\right)=\frac{\text{amount of impact absorption energy (KJ)}}{\text{thickness of the specimen}}$$

**Evaluation Example 2-11: Post-notch tear strength**

The biodegradable polyester sheets prepared in the Examples or Comparative Examples were each cut to prepare a specimen in accordance with KSM 6518-B, and a 2-mm notch was made in its center. The tear strength was then measured using INSTRON's universal testing machine (UTM, model name 4206-001) and calculated according to the following Equation 6.

[Equation 6]

$$\text{Tear strength}\left(\frac{\text{N}}{\text{cm}}\right)=\frac{\text{force applied at the time of tearing (N)}}{\text{thickness of the specimen}}$$

[Table 5]

| | 1,4-BDO (% by mole) | TPA (% by mole) | AA (% by mole) | CNC (ppm) | Calcicum carbonate (% by weight) | Reaction accelerator (ppm) | Monomer composition for preparing an oligomer (part by weight) | Chain extender (% by weight) |
|---|---|---|---|---|---|---|---|---|
| Ex. 2-1 | 47 + 53 | 47 | 53 | 0.05 | 10 | 900 | 1 | 0.9 |
| Ex. 2-2 | 47 + 53 | 47 | 53 | 0.05 | 49 | 900 | 0.5 | 0.5 |
| Ex. 2-3 | 47 + 53 | 47 | 53 | 0.1 | 0 | - | 1.9 | 0.8 |
| Ex. 2-4 | 47 + 53 | 47 | 53 | 0.1 | 0 | 900 | 1 | - |
| Ex. 2-5 | 47 + 53 | 47 | 53 | 0.5 | 0 | 900 | 1 | 0.9 |
| Ex. 2-6 | 47 + 53 | 47 | 53 | 0.5 | 0 | 900 | 1 | 0.9 |
| C. Ex. 2-1 | 47 + 53 | 47 | 53 | - | 0 | 900 | - | 1.2 |
| C. Ex. 2-2 | 100 | 47 | 53 | 0.5 | 0 | - | 5.0 | 1.4 |
| C. Ex. 2-3 | 100 | 47 | 53 | 0.5 | 0 | - | 5.6 | 1.0 |
| C. Ex. 2-4 | 47 + 53 | 47 | 53 | 5 | 0 | 900 | - | - |

1,4-BDO: 1,4-butanediol
TPA: terephthalic acid
AA: adipic acid
CNC: nanocellulose (Prep. Examples 3-1 to 3-4)

[Table 6]

| Process | | Ex. 2-1 | Ex. 2-2 | Ex. 2-3 | Ex. 2-4 | Ex. 2-5 | Ex. 2-6 | C. Ex. 2-1 | C. Ex. 2-2 | C. Ex. 2-3 | C. Ex. 2-4 |
|---|---|---|---|---|---|---|---|---|---|---|---|
| Addition of the monomer composition for preparing an oligomer | | After the second esterification reaction | After the second esterification reaction | After the second esterification reaction | After the second esterification reaction | × | After the second esterification reaction | × | After the second esterification reaction | After the second esterification reaction | × |
| Adjustment of moisture content | | ○ | ○ | ○ | ○ | ○ | ○ | ○ | × | × | ○ |
| Moisture content (ppm) | | 295 | 350 | 500 | 295 | 295 | 295 | 500 | 800 | 800 | 550 |
| Nanocellulose | Pretreatment | ○ | ○ | ○ | ○ | ○ | ○ | - | ○ | × | ○ |
| | Pretreatment method | Prep. Ex. 3-1 | Prep. Ex. 3-2 | Prep. Ex. 3-1 | Prep. Ex. 3-3 | Prep. Ex. 3-1 | Prep. Ex. 3-1 | - | Prep. Ex. 3-4 | - | Prep. Ex. 3-1 |
| | Particle size (nm) | 190 | 250 | 200 | 280 | 190 | 550 | - | 1,080 | 4,530 | 550 |
| | Zeta potential (mV) | -70 | -60 | -70 | -55 | -70 | -30 | - | -28 | -15 | -30 |
| | pH | 7.5 | 6.5 | 7.0 | 4.5 | 7.5 | 7.0 | - | 6.0 | 6.5 | 6.3 |
| | Amount added (% by weight) | 0.05 | 0.05 | 0.1 | 0.1 | 0.5 | 0.5 | 0 | 0.5 | 0.5 | 5 |
| Chain extender | | ○ | ○ | ○ | × | ○ | ○ | ○ | ○ | ○ | × |
| Content of the entire oligomers (ppm) | | 7,300 | 7,100 | 12,000 | 5,000 | 2,000 | 12,000 | 4,250 | 28,000 | 36,000 | 1,200 |

[Table 7]

| Physical properties of the biodegradable polyester resin composition | | | | | | | | | | | | |
|---|---|---|---|---|---|---|---|---|---|---|---|---|
| | | | Ex. 2-1 | Ex. 2-2 | Ex. 2-3 | Ex. 2-4 | Ex. 2-5 | Ex. 2-6 | C. Ex. 2-1 | C. Ex. 2-2 | C. Ex. 2-3 | C. Ex. 2-4 |
| Intrinsic viscosity (I.V.) (dl/g) | | | 1.55 | 1.60 | 1.48 | 1.45 | 1.40 | 1.50 | 1.02 | 0.93 | 0.89 | 0.90 |
| Amount of COOH terminal groups (eq/ton) | | | 30 | 28 | 36 | 38 | 41 | 35 | 52 | 56 | 62 | 53 |
| Content of oligomers | First oligomer | Content (ppm) | 3,100 | 3,200 | 4,100 | 1,000 | 1,000 | 2,600 | 2,100 | 1,800 | 1,650 | 480 |
| | | Mw (g/mole) | 421.18 | | | | | | | | | |
| | Second oligomer | Content (ppm) | 2,200 | 2,100 | 3,700 | 1,500 | 1,000 | 1,500 | 1,900 | 1,900 | 1,950 | 380 |
| | | Mw (g/mole) | 623.3 | | | | | | | | | |
| | Third oligomer | Content (ppm) | 600 | 600 | 1,900 | 1,500 | 650 | 3,900 | 150 | 4,300 | 2,400 | 200 |
| | | Mw (g/mole) | 643.3 | | | | | | | | | |
| | Fourth oligomer | Content (ppm) | 1,400 | 1,200 | 2,300 | 1,000 | 350 | 4,000 | 100 | 20,000 | 30,000 | 140 |
| | | Mw (g/mole) | 843.4 | | | | | | | | | |
| | Content of the entire oligomers (ppm) | | 7,300 | 7,100 | 12,000 | 5,000 | 2,000 | 12,000 | 4,250 | 28,000 | 36,000 | 1,200 |

[Table 8]

| Physical properties of the biodegradable polyester sheet or film | | | | | | | | | | |
|---|---|---|---|---|---|---|---|---|---|---|
| | Ex. 2-1 | Ex. 2-2 | Ex. 2-3 | Ex. 2-4 | Ex. 2-5 | Ex. 2-6 | C. Ex. 2-1 | C. Ex. 2-2 | C. Ex. 2-3 | C. Ex. 2-4 |
| Hydrolysability (%) | 94.8 | 98.9 | 96.6 | 94.0 | 93.1 | 94.5 | 89.8 | 93.6 | 93.8 | 90.0 |
| Biodegradability (%) | 93.7 | 97.2 | 96.1 | 92.2 | 91.2 | 93.2 | 89.2 | 90.2 | 90.5 | 90.1 |
| Strength (MPa) | 40.0 | 35 | 39 | 32 | 33 | 30 | 29 | 24 | 20 | 20 |
| Impact absorption energy (KJ/m) | 6.0 | 5.4 | 5.9 | 5.1 | 5.2 | 5.0 | 4.8 | 4.2 | 4.0 | 4.1 |
| Post-notch tear strength (N/cm) | 720 | 630 | 710 | 610 | 615 | 603 | 502 | 493 | 438 | 480 |

As can be seen from Tables 5 to 8 above, when a biodegradable polyester sheet or film was prepared using each of the biodegradable polyester resin compositions prepared according to the preparation process of Examples 2-1 to 2-6, an excellent level of hydrolysability and biodegradability was achieved, and strength, impact absorption energy, and post-notch tear strength were overall enhanced.

In contrast, in the biodegradable polyester resin composition prepared in Comparative Example 2-1, in which pretreated nanocellulose was not added, the hydrolysability and biodegradability, as well as the strength, impact absorption energy, and post-notch tear strength of the biodegradable polyester sheet or film, were all reduced as compared with the biodegradable polyester resin compositions prepared according to the preparation process of Examples 2-1 to 2-6.

In addition, in the biodegradable polyester resin compositions prepared in Comparative Examples 2-2 and 2-4, in which the moisture content of the polymer composition exceeded 500 ppm even though pretreated nanocellulose was added, the content of terminal groups was significantly increased, the viscosity was decreased, and the hydrolysability and biodegradability, as well as the strength, impact absorption energy, and post-notch tear strength, of the biodegradable polyester sheets or films were all reduced.

In addition, in the biodegradable polyester resin composition prepared in Comparative Example 2-3, in which the moisture content of the polymer composition exceeded 500 ppm, while untreated nanocellulose was added, the content of terminal groups was significantly increased, the viscosity was significantly decreased, and the strength, impact absorption energy, and post-notch tear strength, of the biodegradable polyester sheet or film were all reduced even as compared with the biodegradable polyester resin compositions of Comparative Examples 2-2 and 2-4.

## Claims

**1.** A process for preparing a biodegradable polyester resin composition, which comprises:

reacting a diol, an aromatic dicarboxylic acid, and an aliphatic dicarboxylic acid to obtain a polymer composition; and adjusting the content of moisture in the polymer composition,
wherein the content of moisture in the polymer composition whose moisture content has been adjusted is 100 ppm to 500 ppm based on the total weight of the polymer composition whose moisture content has been adjusted, and
the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

**2.** The process for preparing a biodegradable polyester resin composition according to claim **1,** wherein the adjustment of moisture content is carried out at 40°C to 80°C for 2 hours to 8 hours.

**3.** The process for preparing a biodegradable polyester resin composition according to claim **1,** wherein the step of obtaining the polymer composition comprises:

a first step of subjecting a first diol, a first aromatic dicarboxylic acid, and a first aliphatic dicarboxylic acid to an esterification reaction at least once to obtain a prepolymer composition; and
a second step of subjecting the prepolymer composition to a polycondensation reaction to obtain the polymer composition,
wherein the polymer composition obtained in step 2 has an intrinsic viscosity (IV) of 1.0 dl/g or more, and the content of carboxyl terminal groups in the polymer composition is less than 50 eq/ton.

**4.** The process for preparing a biodegradable polyester resin composition according to claim 3, wherein the oligomer is formed:

(a) by a reaction of at least two of the first diol, the first aromatic dicarboxylic acid, and the first aliphatic dicarboxylic acid; or
(b) by adding a monomer composition for preparing an oligomer comprising at least two of a second diol, a second aromatic dicarboxylic acid, and a second aliphatic dicarboxylic acid during the esterification reaction, the polycondensation reaction, or both; or by adding the same to the prepolymer composition, the polymer composition, or both to carry out a reaction; or
by both (a) and (b).

**5.** The process for preparing a biodegradable polyester resin composition according to claim 4, wherein the first step comprises:

step 1-1 of obtaining a slurry comprising the first diol and the first aromatic dicarboxylic acid;
step 1-2 of subjecting a mixture comprising a first esterification reaction product obtained by performing a first esterification reaction using the slurry, a third diol, and the first aliphatic dicarboxylic acid to a second esterification reaction to obtain a second esterification reaction product; and
step 1-3 of adding the monomer composition for preparing an oligomer to the second esterification reaction product and performing a third esterification reaction to obtain the prepolymer composition.

**6.** The process for preparing a biodegradable polyester resin composition according to claim 5, wherein the third esterification reaction is carried out by adding the monomer composition for preparing an oligomer to the second esterification reaction product in an amount of 0.1 part by weight to 10 parts by weight relative to 100 parts by weight of the second esterification reaction product at 180°C to 250°C for 5 minutes to 60 minutes.

**7.** The process for preparing a biodegradable polyester resin composition according to claim 3, wherein the polycondensation reaction in the second step comprises a first polycondensation reaction and a second polycondensation reaction,

the first polycondensation reaction is carried out at 200°C to 260°C and 5 Torr or higher for 0.1 hour to 4.0 hours, and
the second polycondensation reaction is carried out at 200°C to 270°C and 0.1 Torr to lower than 1 Torr for 0.5 hour to 8.0 hours.

**8.** The process for preparing a biodegradable polyester resin composition according to claim **1,** which further comprises adding a chain extender to the polymer composition whose moisture content has been adjusted, and
the chain extender comprising at least one selected from the group consisting of epoxy-based compounds, acryl-based compounds, carbodiimide-based compounds, and isocyanate-based compounds is added in an amount of 1.0% by weight or less based on the total weight of the polymer composition.

**9.** The process for preparing a biodegradable polyester resin composition according to claim **1,** wherein the oligomer comprises at least one selected from the group consisting of:

a first oligomer having a number average molecular weight (Mn) of 415 to 425 g/mole;
a second oligomer having a number average molecular weight (Mn) of 620 to 630 g/mole;
a third oligomer having a number average molecular weight (Mn) of 640 to 650 g/mole; and
a fourth oligomer having a number average molecular weight (Mn) of 840 to 850 g/mole.

**10.** The process for preparing a biodegradable polyester resin composition according to claim 9, wherein the content of the first oligomer is 3,000 ppm to 5,000 ppm based on the total weight of the biodegradable polyester resin

composition,

the content of the second oligomer is 2,000 ppm to 4,000 ppm based on the total weight of the biodegradable polyester resin composition,
the content of the third oligomer is 500 ppm to 2,000 ppm based on the total weight of the biodegradable polyester resin composition, and
the content of the fourth oligomer is 700 ppm to 2,500 ppm based on the total weight of the biodegradable polyester resin composition.

**11.** The process for preparing a biodegradable polyester resin composition according to claim 9, wherein the oligomer comprises a first unit represented by the following Formula 7 and a second unit represented by the following Formula 8,

the first oligomer comprises one of the first unit and one of the second unit,
the second oligomer comprises one of the first unit and two of the second unit,
the third oligomer comprises two of the first unit and one of the second unit, and
the fourth oligomer comprises two of the first unit and of the two second unit:

[Formula 7]

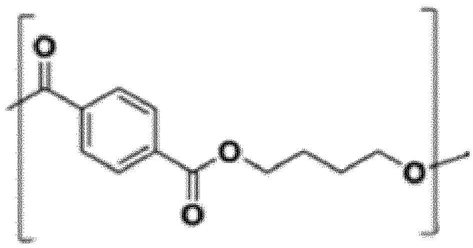

[Formula 8]

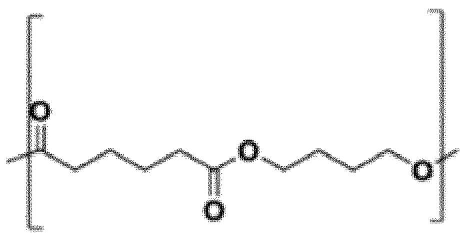

.

**12.** The process for preparing a biodegradable polyester resin composition according to claim 1, which further comprises adding pretreated nanocellulose to the polymer composition whose moisture content has been adjusted.

**13.** The process for preparing a biodegradable polyester resin composition according to claim 12, wherein when the pretreated nanocellulose is measured using a ZETASIZER Nano ZS, the zeta potential of the pretreated nanocellulose is -30 mV or less; and the particle size of the pretreated nanocellulose measured using the principle of dynamic light scattering at a temperature of 25°C and a measurement angle of 175° is 50 to 600 nm.

**14.** The process for preparing a biodegradable polyester resin composition according to claim 12, wherein the pretreated nanocellulose is one that has been pretreated by one or more of a bead mill, ultrasound, a stirrer, and high-speed dispersion, and
the amount of the pretreated nanocellulose added is 0.01 to 7% by weight based on the total weight of the diol, the aromatic dicarboxylic acid, and the aliphatic dicarboxylic acid.

**15.** A biodegradable polyester resin composition, which is prepared by the process for preparing a biodegradable polyester resin composition according to claim 1 and has an intrinsic viscosity (IV) of 1.10 dl/g or more, wherein the content of carboxyl terminal groups in the biodegradable polyester resin composition is 50 eq/ton or less.

**16.** A process for preparing a biodegradable polyester film, which comprises:

preparing a biodegradable polyester resin composition; and melt-extruding the biodegradable polyester resin composition,

wherein the step of preparing a biodegradable polyester resin composition comprises:

reacting a diol, an aromatic dicarboxylic acid, and an aliphatic dicarboxylic acid to obtain a polymer composition; and adjusting the content of moisture in the polymer composition to obtain the biodegradable polyester resin composition,

the content of moisture in the polymer composition whose moisture content has been adjusted is 100 ppm to 500 ppm based on the total weight of the polymer composition whose moisture content has been adjusted, and

the biodegradable polyester resin composition comprises an oligomer having a number average molecular weight (Mn) of 400 to 1,300 g/mole in an amount of 5,000 ppm to 20,000 ppm based on the total weight of the biodegradable polyester resin composition.

**17.** The process for preparing a biodegradable polyester film according to claim 16, which further comprises adding pretreated nanocellulose to the polymer composition whose moisture content has been adjusted.

[Fig. 1]

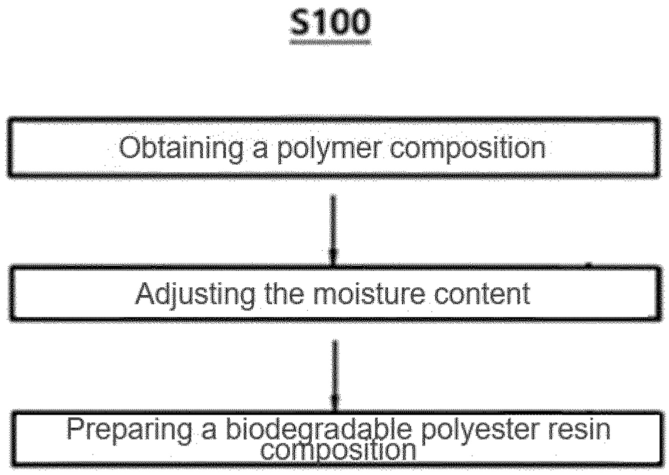
S100
Obtaining a polymer composition
Adjusting the moisture content
Preparing a biodegradable polyester resin composition

[Fig. 2]

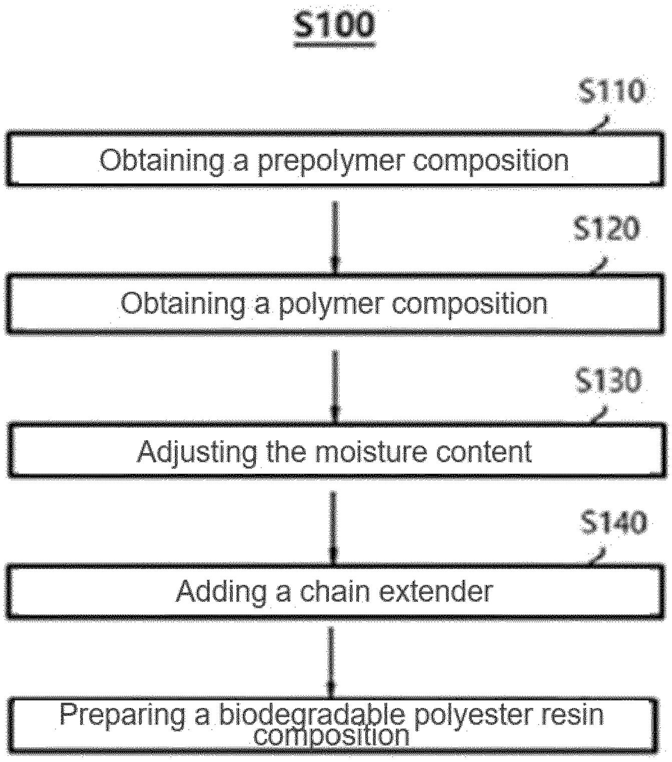
S100
S110
Obtaining a prepolymer composition
S120
Obtaining a polymer composition
S130
Adjusting the moisture content
S140
Adding a chain extender
Preparing a biodegradable polyester resin composition

[Fig. 3]

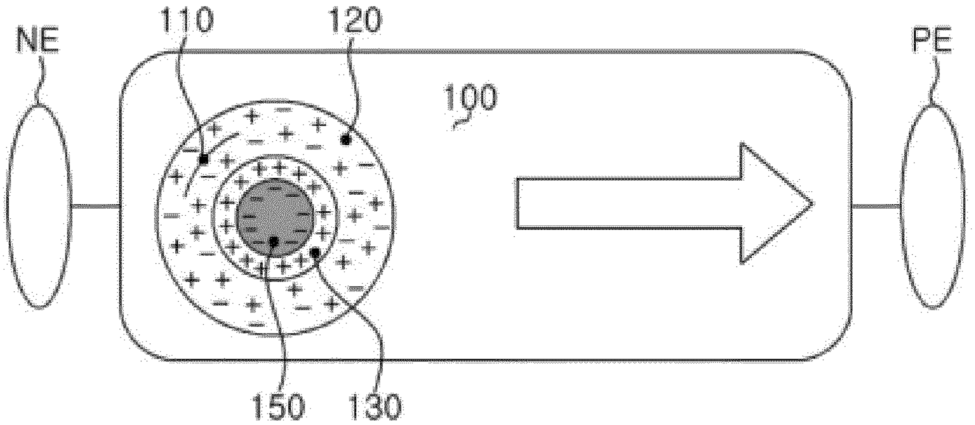

## INTERNATIONAL SEARCH REPORT

International application No.
**PCT/KR2023/019104**

**A. CLASSIFICATION OF SUBJECT MATTER**

**C08L 67/02**(2006.01)i; **C08L 1/02**(2006.01)i; **C08G 63/16**(2006.01)i; **C08K 7/02**(2006.01)i; **C08J 5/18**(2006.01)i; **B29B 7/88**(2006.01)i; **C08G 63/183**(2006.01)i; **C08G 63/78**(2006.01)i

According to International Patent Classification (IPC) or to both national classification and IPC

**B. FIELDS SEARCHED**

Minimum documentation searched (classification system followed by classification symbols)

C08L 67/02(2006.01); B29B 13/06(2006.01); C08G 63/12(2006.01); C08G 63/16(2006.01); C08G 63/181(2006.01); C08G 63/78(2006.01); C08L 1/02(2006.01); C08L 67/00(2006.01); D01F 6/62(2006.01); D01F 6/92(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성 폴리에스테르 수지(biodegradable polyester resin), 1,4-부탄디올(1,4-butanediol), 테레프탈산(terephthalic acid, TPA), 아디프산(adipic acid, AA), 올리고머(oligomer), 수분 함량(water content, moisture content), 점도(viscosity), 1차 에스테르화 반응(1st esterification reaction), 2차 에스테르화 반응(2nd esterification reaction), 3차 에스테르화 반응(3rd esterification reaction)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | KR 10-2014-0076355 A (SAMSUNG FINE CHEMICALS CO., LTD. et al.) 20 June 2014 (2014-06-20)<br>See paragraphs [0051], [0080], [0105], [0106] and [0139]-[0173]. | 1-10,15,16<br>12-14,17<br>11 |
| Y | KR 10-2018-0098576 A (ASAHI KASEI KABUSHIKI KAISHA) 04 September 2018 (2018-09-04)<br>See claims 1, 3, 19 and 22; and paragraphs [0002], [0004], [0007] and [0329]. | 12-14,17 |
| X | KR 10-2014-0031010 A (SAMSUNG FINE CHEMICALS CO., LTD. et al.) 12 March 2014 (2014-03-12)<br>See claim 1; and paragraphs [0043], [0097] and [0122]-[0154]. | 1-10,15,16 |
| A | KR 10-2014-0026677 A (SAMSUNG FINE CHEMICALS CO., LTD.) 06 March 2014 (2014-03-06)<br>See paragraphs [0068]-[0071]. | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 March 2024** | **05 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/019104**

**C. DOCUMENTS CONSIDERED TO BE RELEVANT**

| Category* | Citation of document, with indication, where appropriate, of the relevant passages | Relevant to claim No. |
|---|---|---|
| A | KR 10-2011-0134165 A (WOONGJIN CHEMICAL CO., LTD.) 14 December 2011 (2011-12-14) See paragraph [0077]. | 1-17 |
| A | WO 2004-048471 A1 (DAICEL CHEMICAL INDUSTRIES, LTD.) 10 June 2004 (2004-06-10) See abstract; and claim 1. | 1-17 |
| A | KR 10-2426474 B1 (TECHNIP ZIMMER GMBH) 27 July 2022 (2022-07-27) See entire document. | 1-17 |

Form PCT/ISA/210 (second sheet) (July 2022)

**INTERNATIONAL SEARCH REPORT**
**Information on patent family members**

International application No.
**PCT/KR2023/019104**

| Patent document cited in search report | Publication date (day/month/year) | Patent family member(s) | Publication date (day/month/year) |
|---|---|---|---|
| KR 10-2014-0076355 A | 20 June 2014 | CN 104854163 A | 19 August 2015 |
| | | DE 112013005929 T5 | 10 September 2015 |
| | | JP 2016-500392 A | 12 January 2016 |
| | | TW 201422663 A | 16 June 2014 |
| | | US 2015-0307657 A1 | 29 October 2015 |
| | | US 9416224 B2 | 16 August 2016 |
| | | WO 2014-092276 A1 | 19 June 2014 |
| KR 10-2018-0098576 A | 04 September 2018 | CN 108884272 A | 23 November 2018 |
| | | CN 108884272 B | 26 January 2021 |
| | | EP 3447085 A1 | 27 February 2019 |
| | | EP 3447085 A4 | 21 August 2019 |
| | | EP 3447085 B1 | 01 September 2021 |
| | | JP 2018-109138 A | 12 July 2018 |
| | | JP 2019-014864 A | 31 January 2019 |
| | | JP 2019-014865 A | 31 January 2019 |
| | | JP 2019-059937 A | 18 April 2019 |
| | | JP 6419276 B1 | 07 November 2018 |
| | | JP 6479904 B2 | 06 March 2019 |
| | | JP 6484311 B2 | 13 March 2019 |
| | | KR 10-1973272 B1 | 26 April 2019 |
| | | KR 10-2018-0077000 A | 06 July 2018 |
| | | KR 10-2019-0133296 A | 02 December 2019 |
| | | KR 10-2070374 B1 | 29 January 2020 |
| | | KR 10-2158129 B1 | 23 September 2020 |
| | | US 11390728 B2 | 19 July 2022 |
| | | US 2021-0198455 A1 | 01 July 2021 |
| | | US 2022-0325077 A1 | 13 October 2022 |
| | | WO 2018-123150 A1 | 05 July 2018 |
| KR 10-2014-0031010 A | 12 March 2014 | CN 104583271 A | 29 April 2015 |
| | | EP 2894182 A1 | 15 July 2015 |
| | | EP 2894182 A4 | 11 May 2016 |
| | | EP 2894182 B1 | 06 September 2023 |
| | | EP 2894182 C0 | 06 September 2023 |
| | | JP 2015-530435 A | 15 October 2015 |
| | | JP 6199392 B2 | 20 September 2017 |
| | | KR 10-1992391 B1 | 30 September 2019 |
| | | TW 201410735 A | 16 March 2014 |
| | | TW I603994 B | 01 November 2017 |
| | | US 2015-0183927 A1 | 02 July 2015 |
| | | US 9637589 B2 | 02 May 2017 |
| | | WO 2014-038774 A1 | 13 March 2014 |
| KR 10-2014-0026677 A | 06 March 2014 | TW 201408724 A | 01 March 2014 |
| | | TW I606091 B | 21 November 2017 |
| | | WO 2014-030827 A1 | 27 February 2014 |
| KR 10-2011-0134165 A | 14 December 2011 | KR 10-1216690 B1 | 27 December 2012 |
| WO 2004-048471 A1 | 10 June 2004 | AU 2003-302415 A1 | 18 June 2004 |
| | | KR 10-2005-0083981 A | 26 August 2005 |
| KR 10-2426474 B1 | 27 July 2022 | BR 112020000113 A2 | 07 July 2020 |
| | | BR 112020000113 B1 | 20 September 2022 |

Form PCT/ISA/210 (patent family annex) (July 2022)

**INTERNATIONAL SEARCH REPORT**
**Information on patent family members**

International application No.
**PCT/KR2023/019104**

| Patent document cited in search report | Publication date (day/month/year) | Patent family member(s) | Publication date (day/month/year) |
|---|---|---|---|
| | | CN 110869413 A | 06 March 2020 |
| | | EA 202090192 A1 | 27 May 2020 |
| | | EP 3649176 A1 | 13 May 2020 |
| | | EP 3649176 B1 | 25 August 2021 |
| | | ES 2897982 T3 | 03 March 2022 |
| | | JP 2020-528466 A | 24 September 2020 |
| | | KR 10-2020-0027926 A | 13 March 2020 |
| | | MY 194453 A | 30 November 2022 |
| | | PH 12019550297 A1 | 11 January 2021 |
| | | US 11427677 B2 | 30 August 2022 |
| | | US 2020-0223980 A1 | 16 July 2020 |
| | | WO 2019-007523 A1 | 10 January 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20120103158